# EUROPÄISCHE PATENTSCHRIFT

(11) **EP 2 967 090 B1**
(45) Veröffentlichungstag und Bekanntmachung des Hinweises auf die Patenterteilung: **23.09.2020**
(21) Anmeldenummer: 14711952.3
(22) Anmeldetag: 17.03.2014
(51) Int. Cl.: A22C 21/00

(54) **TRÄGEREINRICHTUNG FÜR GEFLÜGELBEARBEITUNGSVORRICHTUNG**
SUPPORT DEVICE FOR POULTRY PROCESSING DEVICE
INSTALLATION DE SUPPORT POUR DISPOSITIF DE TRAITEMENT DESTINÉ À TRAITER DES CORPS DE VOLAILLE

(30) Priorität: 15.03.2013 US 201361790714 P
(43) Veröffentlichungstag der Anmeldung: 20.01.2016
(73) Patentinhaber: Linco Food Systems A/S, 8380 Trige (DK)
(72) Erfinder: WINKELMOLEN, Antoine Jean Herman, Shawnee, Kansas 66216 (US)
(74) Vertreter: Stork Bamberger Patentanwälte PartmbB
(86) Internationale Anmeldenummer: PCT/EP2014/055335
(87) Internationale Veröffentlichungsnummer: WO 2014/140375

(56) Entgegenhaltungen:
- EP-A2- 1 056 347
- NL-A- 8 900 871
- US-A- 2 658 236
- US-A- 2 685 706
- US-A- 4 178 659
- US-A- 4 660 256
- US-A- 5 505 657

## Beschreibung

Die Erfindung betrifft eine Trägereinrichtung für eine Bearbeitungsvorrichtung zum Bearbeiten von geschlachteten und gerupften Geflügelkörpern, umfassend eine Hauptfördereinrichtung mit in Reihe entlang einer Hauptförderlinie geförderten, jeweils zum lateralen Transport des Geflügelkörpers eingerichteten Trägereinrichtungen, wobei jede Trägereinrichtung ein Paar von Trägern zum Aufhängen des Geflügelkörpers an paarigen Gliedmaßen aufweist, sowie eine Mehrzahl von Bearbeitungseinrichtungen.

Die Erfindung bezieht sich auf einen Trägereinrichtung zum hängenden lateralen Transport eines Geflügelkörpers, insbesondere eingerichtet zum Bilden der Hauptfördereinrichtung einer Bearbeitungsvorrichtung mit einer Mehrzahl der Trägereinrichtungen, umfassend einen oberen Abschnitt mit einem Anschlussteil zum Verbinden mit einem Förderstrang einer Fördereinrichtung sowie einen unteren Abschnitt, der ein Paar von Trägern mit Gliedmaße-Aufnahmen zum Aufhängen des Geflügelkörpers an paarigen Gliedmaßen aufweist.

Zum Durchführen der Bearbeitung/Verarbeitung (im Folgenden Bearbeitung genannt) von geschlachteten Geflügeln, die zum Verzehr bestimmt sind, werden speziell eingerichtete Vorrichtungen, die Anlagen oder Maschinen bilden, eingesetzt. Die Geflügelbearbeitung umfasst insbesondere das Abtrennen/Auslösen von Tierteilen, um erwünschte Gewebeteile von unerwünschten Gewebeteilen zu trennen. Zudem werden abgetrennte verwertbare Fleischteile bzw. Gewebeteile für den Vertrieb an Konsumenten konfektioniert und verpackt.

Bekannte Geflügel-Bearbeitungsvorrichtungen sind mit einer Förderanlage ausgestattet, die Trägereinrichtungen zum Transportieren der geschlachteten Tiere durch unterschiedliche Verarbeitungsstationen oder -einrichtungen aufweisen. Bekannte Trägereinrichtungen weisen jeweils ein Paar von Trägern, insbesondere in Form von Trägerbügeln, auf, die paarweise insbesondere Läufe oder Fußgelenke des Geflügels aufnehmen, wobei der derart mit paarigen Gliedmaßen aufgehängte Geflügelkörper mit seinem hinteren Ende nach oben und mit dem vorderen Ende nach unten gerichtet ist. Die Verarbeitungsstationen sind durch Bearbeitungseinrichtungen gebildet, mittels derer Tierteile bzw. Gewebeteile abgetrennt werden, wenn das Geflügel die Bearbeitungseinrichtungen durchläuft. In üblichen Geflügel-Bearbeitungsvorrichtungen (Verarbeitungsanlagen) wird das Geflügel einmalig in die Trägereinrichtung eingehängt und, stets in Verbindung mit dieser Trägereinrichtung, zu sämtlichen Bearbeitungseinrichtungen transportiert und dort, in der Trägereinrichtung hängend, bearbeitet. Andere Bearbeitungseinrichtungen sind bekannt, die zwei oder mehr jeweils mit Trägereinrichtungen ausgestattete Überkopf-/Hängeförderer aufweisen, wobei die Geflügel mit Transfereinrichtungen von einem Überkopf-/Hängeförderer zu einem anderen übergeben werden. In solchen bekannten Vorrichtungen ist die Geschwindigkeit des Verarbeitungsvorgangs und die mechanische Verarbeitung des Geflügels eingeschränkt. Die Förderstrecken und -einrichtungen müssen besonders an die Bearbeitungseinrichtungen angepasst werden. Umgekehrt müssen auch die Bearbeitungseinrichtungen besonders zur Verwendung an der Förderstrecke angepasst und ausgelegt werden. Der Transport des ganzen Geflügelkörpers während Bearbeitung/Manipulation an dem Geflügelkörper mittels der Trägereinrichtung des Überkopf-/Hängeförderers beeinträchtigt auch die Qualitätskontrolle oder das Wiegen des Geflügels in einem Gesamtprozess.

Ziele der Erfindung bestehen darin, eine Trägereinrichtung für eine Bearbeitungsvorrichtung für geschlachtete und gerupfte Geflügelkörper zu schaffen mit einer Ausstattung, die Manipulation und Transport der Geflügelkörper entlang einer Hauptförderlinie vereinfacht und verbessert. Insbesondere sollen große Fördergeschwindigkeiten einer Hauptfördereinrichtung erreicht werden; Trägereinrichtungen der Hauptfördereinrichtung sollen frei von Bearbeitungskräften bleiben; die Aufhängung von Trägereinrichtungen der Hauptfördereinrichtung soll vereinfacht sein; das Beladen und Entladen der Förder-Trägereinrichtungen mit den Geflügelkörpern sollen zuverlässig und sicher sein; die Förder-Trägereinrichtungen sollen universell zur Übergabe von Geflügelkörpern an Bearbeitungseinrichtungen sowie zur Entnahme der Geflügelkörper von Bearbeitungseinrichtungen eingerichtet sein; die Bearbeitungsvorrichtung soll optimal zum Transportieren, Positionieren und Bearbeiten der Geflügelkörper für eine Vielzahl von Bearbeitungsvorgängen, insbesondere zum Entweiden, Ausschlachten, Reinigen, Zerlegen und Wiegen eingerichtet sein; jegliche Anpassung der Hauptförder-Trägereinrichtungen an die einzelnen unterschiedlichen Bearbeitungen soll entfallen; Hygiene-Anforderungen soll in besonderem Maß Genüge geleistet werden. Diese Ziele sollen in gegenseitig angepasster Ergänzung erreicht werden.

In Verbindung mit den Merkmalen der eingangs benannten Trägereinrichtungen für die Bearbeitungsvorrichtung werden, nach Anspruch 1, die erfindungsgemäßen Ziele dadurch erreicht, dass die Bearbeitungseinrichtungen zum von der Hauptfördereinrichtung getrennten Bearbeitungs-Transport der Geflügelkörper jeweils mit einem auf einem Umlaufweg bewegbaren Bearbeitungs-Haltemittel ausgebildet sind, dass die Vorrichtung wenigstens zwei entlang der Hauptförderlinie in Reihe angeordnete Übergabestationen aufweist, der jeweils wenigstens eine Bearbeitungseinrichtung zugeordnet ist, wobei jede Übergabestation durch ein Übergabepaar gebildet ist, das zwei Rotations-Übergabeeinrichtungen aufweist, nämlich eine erste Rotations-Übergabeeinrichtung, die, jeweils auf tangentialem Weg, zur Entnahme der Geflügelkörper aus den Trägereinrichtungen der Hauptförderlinie sowie zur Übergabe der entnommenen Geflügelkörper an das Bearbeitungs-Haltemittel einer zugeordneten genannten Bearbeitungseinrichtung angeordnet und eingerichtet ist, sowie eine zweite Rotations-Übergabeeinrichtung, die, jeweils auf tangentialem Weg, zur Entnahme der bearbeiteten Geflügelkörper von dem Bearbeitungs-Haltemittel einer zugeordneten genannten Bearbeitungseinrichtung sowie zur Übergabe an zum Aufhängen freie genannte Trägereinrichtungen zum lateralen Weitertransport entlang der HauptFörderlinie angeordnet und eingerichtet ist.

Die Bearbeitungsvorrichtung, die wenigstens einen Teil einer Verarbeitungsanlage für die Geflügelverarbeitung bildet, umfasst die Reihe von Trägereinrichtungen, die jeweils einen Geflügelkörper entlang der Hauptförderlinie der Hauptfördereinrichtung (Förderanlage) zu den Bearbeitungseinrichtungen, insbesondere auch Zerlegestationen, Wiegeeinrichtungen und/ oder Reinigungseinrichtungen gefördert. Die Trägereinrichtung hält den Geflügelkörper z. B. an den Beinen fest, mit der Kloake nach oben und dem Hals nach unten. Die Übergabestationen sind eingerichtet, die die Geflügelkörper an die Bearbeitungseinrichtungen übergeben und von den Bearbeitungseinrichtungen entnehmen und wieder an die Trägereinrichtungen der Hauptfördereinrichtung übergeben. Jede Übergabestation umfasst im Paar die beiden Rotations-Übergabeeinrichtungen, die die Geflügelkörper von den Trägereinrichtungen auf tangentialem Weg abnehmen bzw. wieder in freie Trägereinrichtungen einhängen. Gleichermaßen übergibt die eine Rotations-Übergabeeinrichtung die Geflügelkörper an wenigstens eine Bearbeitungseinrichtung, und die im Paar andere Rotations-Übergabeeinrichtung übernimmt sämtliche Geflügelkörper von der wenigstens einen Bearbeitungseinrichtung. Die Geflügelkörper werden unabhängig von und ohne jede Verbindung mit der Hauptfördereinrichtung bzw. der Förderanlage der Maschine bearbeitet. Die Trägereinrichtungen sind entlang der Hauptförderlinie unabhängig von Bearbeitungserfordernissen in besonders dichter Reihenfolge angeordnet, so dass die Anzahl der Geflügelkörper, die durch die Verarbeitungsanlage gefördert werden können, maximiert wird. Die erste Rotations-Übergabeeinrichtung ist eine Rotationseinrichtung nach Art eines Karussells, die unmittelbar neben der Hauptförderlinie der Hauptfördereinrichtung drehbar, nämlich mit entlang eines Umlaufweges bewegbaren Greifeinrichtungen, angeordnet ist. Die zweite Rotations-Übergabeeinrichtung ist vorzugsweise baugleich mit der ersten Rotations-Übergabeeinrichtung ausgebildet.

In Verbindung mit den eingangs genannten Merkmalen ist die erfindungsgemäße Trägereinrichtung, insbesondere als Mehrfach-Bestandteil der genannten Haupt-Fördereinrichtung, dadurch gestaltet, dass die Trägereinrichtung eine einen Bestandteil der Trägereinrichtung bildende Träger-Steuereinrichtung mit wenigstens einem Steuerelement aufweist und dass jeder der beiden Träger mit einer steuerbaren Halteeinrichtung eingerichtet ist, die über das wenigstens eine Steuerelement mit der Träger-Steuereinrichtung verbunden ist und die wenigstens ein mittels eines genannten Steuerelements steuerbares Halteteil als Bestandteil der Gliedmaße-Aufnahme aufweist, wobei die Gliedmaße-Aufnahme in einer Öffnungsposition des steuerbaren Halteteils zum klemmfreien Einsetzen und Entnehmen der Gliedmaße offen und nur in einer Schließposition des Halteteils in Kontakt, d. h. in form- und/oder kraftschlüssige Verbindung mit den Gliedmaßen setzbar ist.

Eine Bearbeitungseinrichtung, die zur Verwendung in der Bearbeitungsvorrichtung angepasst und eingerichtet ist, ist zum von Elementen der Hauptfördereinrichtung vollständig getrennten Bearbeitungs-Transport der Geflügelkörper mit einem auf einem Umlaufweg bewegbaren Bearbeitungs-Haltemittel ausgebildet, und die Bearbeitungseinrichtung weist eine Steuereinrichtung auf, mit der das Bearbeitungs-Haltemittel verbunden und in Abhängigkeit von seiner Wegposition entlang des Umlaufweges in der Position steuerbar ist, wobei wenigstens drei Positionen eingerichtet sind, nämlich eine Anfangsposition zur Übernahme eines Geflügelkörpers, wenigstens eine Bearbeitungsposition zum Halten des Geflügelkörpers während des Bearbeitens sowie eine Endposition zur Entnahme des Geflügelkörpers von der Bearbeitungseinrichtung. Mit dem Bearbeitungs-Haltemittel werden die Geflügelkörper in besonderer Weise positioniert. Die Einrichtung und Anordnung sind insbesondere auch derart, dass die Geflügelkörper mittels der steuerbaren Verstellung in Höhenpositionen (Vertikalpositionen), in Horizontalpositionen und/oder in Lagen zwischen diesen Positionen setzbar sind. Das heißt, dass jeder Geflügelkörper vollkommen unabhängig von Fördermitteln der Hauptförderlinie, insbesondere unabhängig von an einem Strang in Reihe transportierten Trägereinrichtungen, Haltbügeln oder dergleichen an oder vor jedem Werkzeug oder allgemein einem Bearbeitungsmittel, zu dem z. B. auch Positioniermittel, Saugmittel oder Fluid abgebende Mittel gehören, optimal und individuell positioniert wird. Insbesondere werden die Bearbeitung vereinfacht, der Ertrag gesteigert, die Bearbeitungsqualität verbessert und die Betriebsgeschwindigkeit erhöht. Man erreicht auch eine verbesserte, insbesondere schnellere und lokalisierte Reinigung sowie Vereinfachung von Wartung sowie besondere Betriebssicherheit.

Den vorgesehenen Übergabestationen kommt in Verbindung mit den autarken, mit eigenem Förder-/Haltemittel ausgestatteten Bearbeitungseinrichtungen besondere Bedeutung hinsichtlich der genannten Vorteile zu. Wesentlich ist, dass jede Übergabestation durch ein Übergabepaar gebildet ist, das die beiden Rotations-Übergabeeinrichtungen aufweist. Das Übergabepaar entkoppelt eine Bearbeitungseinrichtung oder eine Gruppe von Bearbeitungseinrichtungen von der Hauptfördereinrichtung. Wesentlich ist auch, dass die Entnahme bzw. die Übergabe der Geflügelkörper stets auf tangentialem Weg erfolgt, wobei Geflügelkörper von den Hauptförder-Trägereinrichtungen vollständig befreit sind, die Hauptförder-Trägereinrichtungen jedoch derart im Zusammenspiel mit dem Übergabepaar eingerichtet sind, dass sie die Hauptförderung nach Beenden der Bearbeitung bzw. ausschließlich während des bearbeitungsfreien Transports fortsetzen. Die Übergabe auf tangentialem Weg ist dadurch charakterisiert, dass jeder Geflügelkörper unter Beibehaltung des lateralen Transports in einer Übergabezone mit gleichsinniger Förderrichtung und stetig, d. h. ohne Wegeknick, den Förderweg wechselt. Vorteilhaft ist die Einrichtung derart, dass in jeder Übergabezone korrespondierende Greifmittel und Halte-/Trägermittel einander mit Greif-/Halteöffnungen überlappen. Die Trägereinrichtungen der Hauptfördereinrichtung weisen jeweils den beiden Gliedmaßen zugeordnete Halteöffnungen oder Aufnahmen auf, die bei der Übergabe bzw. Entnahme durch Steuerung in einen mit jedem der Gliedmaßen klemmfreien, kontaktlosen Zustand setzbar sind. Die Einrichtung kann zur Übergabe/ Entnahme auf tangentialem Weg auch mit überlappungsfreier Übergabezone zwischen den Trägereinrichtungen und der Rotations-Übergabeeinrichtung bzw. zwischen letzterer und zugeordneter Bearbeitungseinrichtung eingerichtet sein. Die Einrichtung ist dann derart, dass die Greif-/ Halteöffnungen bzw. Aufnahmen in der Übergabezone nebeneinander, insbesondere auch vertikal versatzfrei, bewegbar sind und jeder Übergabezone eine Führungseinrichtung, z. B. umfassend eine Stange oder ein Gestänge oder auch einen Schieber, zugeordnet ist, die die Gliedmaßen aus der einen Greif-/ Halteöffnung heraus in die andere Greif-/Halteöffnung hinein schiebt, und zwar in Richtung quer zu dem tangentialen Übergabeweg. Nach Anspruch 1 sind die Trägereinrichtungen mit wenigstens einer Aufnahme ausgestattet, die durch Steuerung in einen klemmfreien Zustand setzbar ist.

Die Bearbeitung der Geflügelkörper zwischen dem Übergabepaar der Übergabestation lässt sich universell gestalten und damit auf individuelle Erfordernisse anpassen. Die gesamte Bearbeitungsvorrichtung lässt sich entsprechend universell gestalten, mit der Hauptfördereinrichtung besonders betriebssicher und mit großer Fördergeschwindigkeit betreiben und sich auf Betriebsänderungen anpassen. Zum Beispiel kann eine Übergabestation mit wenigstens einer zugehörigen Bearbeitungseinrichtung einfach aus dem Gesamtprozess der Bearbeitung herausgenommen und durch eine entsprechende Übergabestation mit wenigstens einer zugehörigen Bearbeitungseinrichtungen ersetzt werden, z. B. um Wartungsarbeiten und/oder eine Umrüstung durchzuführen.

Vorteilhaft ist wenigstens eine Übergabestation in Übertragungsverbindung mit einer Bearbeitungs-Gruppe eingerichtet, die wenigstens zwei Bearbeitungseinrichtungen umfasst. Eine besondere Gruppengestaltung besteht darin, dass drei Übergabestationen in Übertragungsverbindung mit drei Bearbeitungseinrichtungen eingerichtet sind, wobei jeder Übergabestation eine Bearbeitungseinrichtung zugeordnet ist. Die drei Bearbeitungseinrichtungen bilden vorteilhaft eine Gruppe, die Innereien aus den Geflügelkörpern entfernt. So umfasst die Gruppe eine erste Bearbeitungseinrichtung, nämlich eine Kloakenschneideeinrichtung zum Öffnen des hinteren Endes des Geflügelkörpers vor dem Ausweiden, eine zweite Bearbeitungseinrichtung, nämlich eine Öffnungseinrichtung zum Anbringen eines Schnittes im Geflügelkörper von der Kloake zum Brustbein und eine dritte Bearbeitungseinrichtung, nämlich eine Ausweideeinrichtung zum Entfernen der Innereien des Geflügelkörpers. Die Anzahl der Übergabestationen der Gruppe kann dadurch reduziert werden, dass mehrere der genannten Bearbeitungseinrichtungen zu einer Einheit zusammengefasst werden.

Eine nicht beanspruchte aber durch die Erfindung ermöglichte Gestaltung besteht darin, dass die Ausweideeinrichtung mit einer Innereien-Fördereinrichtung verbunden ist, die zum Fördern entnommener Innereien eingerichtet und durch einen Innereien-Umlaufförderer sowie eine Innereien-Übergabeeinrichtung gebildet ist, wobei die Innereien-Übergabeeinrichtung zur Entnahme der Innereien jedes Geflügelkörpers von der Ausweideeinrichtung sowie zur Übergabe der Innereien an den Innereien-Umlaufförderer angeordnet ist. Wesentlich und besonders ist, dass die Innereien-Übergabeeinrichtung im Bereich der wenigstens einen Bearbeitungseinrichtung zum Ausweiden, die allgemein mittels des Übergabepaares der Rotations-Übergabeeinrichtungen von der Hauptfördereinrichtung entkoppelt ist, zwischen den beiden Rotations-Übergabeeinrichtungen angeordnet ist.

Eine weitere, nicht beanspruchte aber durch die Erfindung ermöglichte, Gestaltung besteht weiterhin darin, dass die Innereien-Fördereinrichtung zum Synchronisieren des durch den Innereien-Umlaufförderer eingerichteten Transports der Innereien mit dem durch die Hauptfördereinrichtung eingerichteten Transport der ausgeweideten Geflügelkörper derart eingerichtet ist, dass den Innereien der davon jeweils ausgeweidete, separat transportierte Geflügelkörper zugeordnet wird. Zweckmäßig wird eine Inspektionseinrichtung zum Beurteilen der Innereien in Zuordnung zu dem zugehörigen ausgeweideten Geflügelkörper dadurch gebildet, dass ein Inspektionsförderabschnitt des Innereien-Umlaufförderers und ein Inspektionsförderabschnitt der Hauptfördereinrichtung zum synchronen Nebeneinanderlaufen ausgebildet und angeordnet sind.

Eine weitere, nicht beanspruchte aber durch die Erfindung ermöglichte, Gestaltung besteht auch darin, dass eine der Übergabestationen in Übertragungsverbindung mit einer Bearbeitungs-Gruppe eingerichtet ist, die drei Gewebe entfernende Bearbeitungseinrichtungen umfasst, wobei die Gruppe zum Bearbeiten aufeinanderfolgend eine Entkröpfeinrichtung zum Entfernen von Halsgewebe, insbesondere von Kropf und Luftröhre, eine Halsentfernungseinrichtung zum Lösen und Entfernen des Halses und eine Lungenentfernungseinrichtung zum Entfernen der Lunge aufweist. Die Gewebe entfernende Bearbeitungs-Gruppe lässt sich in einer Anlage besonders vorteilhaft stromabwärts der genannten Gruppe anordnen und betreiben, mit der Innereien entfernt werden.

Eine vorteilhafte Gestaltung besteht darin, dass wenigstens eine der genannten Übergabestationen an einer anderen Lauf- und Bearbeitungsseite der Hauptfördereinrichtung als wenigstens eine weitere genannte Übergabestation angeordnet ist. Insbesondere in Verbindung mit dieser Gestaltung sieht die Erfindung vor, dass die beiden Träger des Trägerpaares der Trägereinrichtung an wenigstens einer seitlichen Längsseite der Trägereinrichtung derart offen ausgebildet sind, dass die Geflügelkörper frei von Vertikalversatz einhängbar und entnehmbar sind. In Verbindung damit werden die Trägereinrichtungen vorteilhaft jeweils frei von Drehung um eine der Hängerichtung des Geflügelkörpers entsprechende Vertikalachse an einem Förderstrang aufgehängt.

Eine erfindungsgemäße Gestaltung besteht darin, dass jeder der beiden Träger einer genannten Trägereinrichtung mit einer Halteeinrichtung eingerichtet ist, die zum Aufhängen und zur Entnahme der linken und der rechten paarigen Gliedmaßen in einen Öffnungszustand, einen Schließzustand und, damit verbunden, in einen Haltezustand in Abhängigkeit von der Förderposition der Trägereinrichtung entlang der Hauptförderlinie steuerbar ist.

Wesentlich ist, dass jeder Träger in der Phase der Übergabe im Öffnungszustand auf tangentialem Weg den Geflügelkörper klemmfrei abgibt bzw. klemmfrei übernimmt. Dies gelingt mittels der genannten Steuerung, die sich insbesondere und bevorzugt dadurch auszeichnet, dass die Halteeinrichtungen der beiden Träger unabhängig und getrennt voneinander betätigbar und steuerbar sind. Dadurch wird der Übergabevorgang in besonderem Maße schnell, sicher und steuerbar. Bei Bedarf kann die Steuerung so eingerichtet sein, dass bestimmte, z. B. durch eine elektronische Überwachungs- und Nachverfolgungseinrichtung erfasste Geflügelkörper die Übergabestation ohne Entnahme aus der Trägereinrichtung passieren.

Eine bevorzugte Gestaltung nach Anspruch 24 besteht darin, dass wenigstens eine der Bearbeitungseinrichtungen eine Steuereinrichtung aufweist, mit der das Bearbeitungs-Haltemittel verbunden und in Abhängigkeit von seiner Wegposition entlang seines Umlaufweges in der Höhenposition steuerbar ist, wobei wenigstens drei Höhenpositionen eingerichtet sind, nämlich eine Anfangsposition, die der Übergabe der Geflügelkörper von der ersten Rotations-Übergabeeinrichtung zugeordnet ist, wenigstens eine Bearbeitungsposition während des Bearbeitens sowie eine Endposition, die der Entnahme der Geflügelkörper von der Bearbeitungseinrichtung zugeordnet ist.

Vorteilhaft ist das Bearbeitungs-Haltemittel durch eine Reihe von gleichen Bearbeitungs-Halteeinrichtungen oder -einheiten gebildet, die entlang des Umlaufweges angeordnet sind und jeweils mit einer Greifeinrichtung zum Übernehmen, festen Halten und Abgeben des Gliedmaße-Paares der Geflügelkörper ausgebildet sind. Eine nicht beanspruchte aber durch die Erfindung ermöglichte Gestaltung umfasst wenigstens eine der Bearbeitungseinrichtungen eine Rahmeneinrichtung oder einen Körper, an dem eine Reihe von gleichen Bearbeitungseinheiten oder -stationen sowie das auf dem Umlaufweg bewegbare Bearbeitungs-Haltemittel angeordnet sind. Vorteilhaft umfasst hierbei jede Bearbeitungseinheit/-station wenigstens ein Bearbeitungsmittel aus einer Gruppe von Bearbeitungsmitteln, zu denen Bearbeitungswerkzeuge und Positioniereinrichtungen gehören. Gemäß einer solchen Gestaltung umfasst wenigstens eine der Bearbeitungseinrichtungen eine Steuereinrichtung, mit der wenigstens ein genanntes Bearbeitungsmittel der Bearbeitungseinheiten zum Einwirken auf den Geflügelkörper in Abhängigkeit von dem Bearbeitungs-Transport des Geflügelkörpers steuerbar ist.

Die erfindungsgemäße Trägereinrichtung, die zum gesteuerten Herstellen eines klemmfreien Öffnungszustandes eingerichtet ist, zeichnet sich u. a. dadurch aus, dass die Gliedmaßen des Geflügelkörpers nur in einer Schließposition des Halteteils in form- und/oder kraftschlüssige Verbindung mit der Gliedmaße-Aufnahme setzbar ist. In jeder Öffnungsposition des steuerbaren Halteteils sind die Gliedmaßen frei in die Aufnahme einführbar und aus dieser herausführbar. Vorteilhaft kann die Träger-Steuereinrichtung derart eingerichtet sein, dass die steuerbaren Halteteile über eine aufgesteuerte Öffnungsposition hinaus zum weiteren Öffnen der Gliedmaße-Aufnahme frei bewegbar sind.

Die Trägereinrichtung der Erfindung ist weiter definiert dadurch, dass jeder der beiden Träger ein Paar von Träger-Schenkelteilen aufweist, wobei freie Schenkelenden der Träger-Schenkelteile das einzige Mittel zum Bilden der Gliedmaße-Aufnahme zum hängenden Halten der linken bzw. rechten Gliedmaßen sind und wobei jeweils wenigstens ein das genannte steuerbare Halteteil bildendes Träger-Schenkelteil des Schenkelteile-Paars mittels des wenigstens einen Steuerelements aus einer die zugehörige Gliedmaße-Aufnahme in geschlossenem Zustand haltenden Schließposition durch Verstellbewegung in eine von dem anderen Schenkelteil distanzierte, die Gliedmaße-Aufnahme öffnende Öffnungsposition bewegbar und durch gesteuertes Beseitigen des Versatzes wieder in die Schließposition setzbar ist.

Hinsichtlich insbesondere zuverlässiger Entnahme des Geflügelkörpers aus der Aufnahme ist die Träger-Steuereinrichtung vorteilhaft derart eingerichtet, dass die bewegbaren Schenkelenden in der Schließposition mit festem maximalem Abstand jeweils zu dem im Paar gegenüberliegenden Schenkelteil frei von Klemm- und Rückstellkraft gehalten sind.

Die besonders kompakte Gestaltung der Trägereinrichtung erreicht man nach Anspruch damit, dass in der Trägereinrichtung innenliegende Träger-Schenkelteile der beiden Schenkelteil-Paare zum Öffnen und Schließen der Gliedmaße-Aufnahmen gesteuert bewegbar sind, während die beiden anderen äußeren Träger-Schenkelteile der beiden Schenkelteile-Paare an der Trägereinrichtung fest angeordnet sind. Zweckmäßig werden die bewegbaren Träger-Schenkelteile jeweils um eine Schwenkachse zum Bewegen zwischen Schließposition und Öffnungsposition schwenkbar gelagert.

Die erfindungsgemäße Gestaltung der Trägereinrichtung nach Anspruch 1 ist weiter definiert dadurch, dass zwischen einander zugewandten Tragrändern der Trägeraufnahmen ein an den beiden Längsseiten der Trägereinrichtung jeweils offener Durchgang ausgebildet ist, wobei der Durchgang wenigstens im Zustand der geöffneten Gliedmaße-Aufnahme eingerichtet ist.

Die erfindungsgemäße Träger-Steuereinrichtung, die zum unabhängigen, voneinander getrennten Steuern der beiden steuerbaren Halteeinrichtungen eingerichtet ist, weist Steuerelemente auf, die jeweils einer Halteeinrichtung zugeordnet sind. Die Gestaltung der Trägereinrichtung besteht dann vorteilhaft darin, dass die beiden Steuerelemente jeweils einen an der Trägereinrichtung hervorstehenden Steuerkörper, z. B. einen Steuervorsprung mit einer Anordnung derart aufweisen, dass die Steuerkörper unabhängig voneinander jeweils zum Eingriff in ein individuelles Steuerglied einer Steuer-Führungseinrichtung eingerichtet sind. Zweckmäßig stehen die beiden Steuerkörper an einander gegenüberliegenden Längsseiten der Trägereinrichtung an dieser hervor. Vorteilhaft umfasst die Trägereinrichtung ein einen Hohlkörper bildendes Trägergehäuse, in dem die Träger-Steuereinrichtung angeordnet ist. Man erreicht eine besonders kompakte und robuste Ausführung der Trägereinrichtung.

Das Anschlussteil der Trägereinrichtung, das zum Verbinden mit einem Förderstrang der Hauptfördereinrichtung eingerichtet ist, weist vorteilhaft ein Schwenklager zur Schwenkanlenkung um eine horizontale Schwenkachse auf, die derart gerichtet ist, dass die Trägereinrichtung im hängenden Zustand zum lateralen Transport eines Geflügelkörpers parallel zur geradlinigen Strecke des Förderstrangs zu liegen kommt. Das heißt, dass die Trägereinrichtung entweder um eine Schwenkachse senkrecht zur geradlinigen Hauptförderlinie oder um eine mit der Hauptförderlinie parallele Schwenkachse angelenkt wird. Mit dieser Schwenkaufhängung können die Vorgänge in den Übergabezonen begünstigt werden. Auch kann die Schwenkaufhängung vorgesehen werden, um die Trägereinrichtungen besonders einfach zu beschicken und zu entleeren.

Gemäß nicht beanspruchter aber durch die Erfindung ermöglichter Gestaltung der Geflügel-Bearbeitungseinrichtung ist jede die paarigen Gliedmaßen des Geflügelkörpers aufnehmende Bearbeitungs-Halteeinrichtung mit einer Spanneinrichtung zum Positionieren des Geflügelkörpers eingerichtet ist, die durch ein stationäres, an der Bearbeitungseinrichtung fest angeordnetes Positionierelement und die zugehörige Bearbeitungs-Halteeinrichtung gebildet ist, wobei das Positionierelement zum Hintergreifen eines Teils des Geflügelkörpers angeordnet und eingerichtet ist, zwischen dem Positionierelement und der Bearbeitungs-Halteeinrichtung ein Einspannraum für einen einspannbaren Teil des Geflügelkörpers ausgebildet ist und die Einspannposition des Geflügelkörpers durch eine mittels der Bearbeitungs-Steuereinrichtung steuerbare, der Bearbeitungsposition zugeordnete Bewegung der Bearbeitungs-Halteeinrichtung relativ zu dem stationären Positionierelement herstellbar ist. Vorteilhaft umfasst die Spanneinrichtung eine zwischen die Bearbeitungs-Halteeinrichtung und eine Halteführungseinrichtung der Bearbeitungs-Steuereinrichtung geschaltete Puffereinrichtung, die beim Erreichen eines den Einspannzustand des Geflügelkörpers zwischen dem Positionierelement und der Bearbeitungs-Halteeinrichtung bestimmenden Einspannabstandes dessen Begrenzung bewirkt und damit der mittels der Steuereinrichtung gesteuerten Bewegung der Bearbeitungs-Halteeinrichtung entgegenwirkt.

Die Trägereinrichtung der Erfindung wird durch den unabhängigen Anspruch 1 definiert. Auf einige der genannten und noch andere zweckmäßige und vorteilhafte Ausgestaltungen der Erfindung sind Unteransprüche gerichtet. Lediglich besonders zweckmäßige und vorteilhafte Ausbildungsformen und -möglichkeiten werden anhand der folgenden Beschreibung der in der schematischen Zeichnung dargestellten Ausführungsbeispiele näher beschrieben.

Die in der Beschreibung verwendete Terminologie dient lediglich zur einfacheren Bezugnahme; sie ist nicht einschränkend zu verstehen. Zum Beispiel beziehen sich Angaben wie nach oben, unten, vorn, hinten, rückwärtig, rechts und links auf den offenbarten Gegenstand, wie er in der jeweils in Bezug genommenen Ansicht ausgerichtet ist. Die Angaben "nach innen" und "nach außen" beziehen sich auf Richtungen jeweils zu der und von der geometrischen Mitte des beschriebenen Gegenstands und bestimmter Teile davon. Die Angaben vorwärts und rückwärts beziehen sich grundsätzlich auf die Bewegungsrichtung. Die Terminologie erfasst die genannten Angaben und Ausdrücke, Ableitungen davon und Ausdrücke mit ähnlicher Bedeutung.

Es zeigen
- Fig. 1: ein Ablaufdiagramm, das allgemein Verfahrensschritte der Geflügelbe- und -verarbeitung veranschaulicht;
- Fig. 2: eine Draufsicht einer beispielhaften Ausführung einer Bearbeitungseinrichtung, die Prinzipien des offenbarten Gegenstands verdeutlicht;
- Fig. 3: eine perspektivische Teilansicht der beispielhaften Ausführung der Bearbeitungseinrichtung, die Geflügelkörper zeigt, die von einer Kloakenschneideeinrichtung bearbeitet werden;
- Fig. 4: eine Draufsicht auf eine erste Übergabestation und eine Kloakenschneideeinrichtung, die Geflügelkörper bearbeitet;
- Fig. 5: eine perspektivische Teilansicht einer Hauptfördereinrichtung, die Geflügelkörper an eine erste Rotations-Übergabeeinrichtung übergibt;
- Fig. 6: eine perspektivische Ansicht einer erfindungsgemäßen Trägereinrichtung, die eine erste Seite mit zwei steuerbaren Trägern in geschlossenen Positionen zeigt;
- Fig. 7: eine Schnittansicht der Trägereinrichtung gemäß Linie 7-7 in Fig. 6 mit den steuerbaren Trägern in geschlossener Position;
- Fig. 8: eine perspektivische Ansicht einer ersten Seite der Trägereinrichtung mit dem einen (ersten) steuerbaren Träger in geöffneter Position eines zugehörigen ersten steuerbaren Halteteils;
- Fig. 9: eine perspektivische Ansicht der anderen (zweiten) Seite der Trägereinrichtung mit dem ersten steuerbaren Träger in geöffneter Position des zugehörigen ersten steuerbaren Halteteils;
- Fig. 10: eine perspektivische Ansicht der zweiten Seite der Trägereinrichtung mit dem anderen (zweiten) steuerbaren Träger in geöffneter Position eines zugehörigen zweiten steuerbaren Halteteils;
- Fig. 11: eine perspektivische Ansicht der ersten Seite der Trägereinrichtung mit dem ersten steuerbaren Halteteil und dem zweiten steuerbaren Halteteil in geöffneter Position;
- Fig. 12: eine Schnittansicht der Trägereinrichtung gemäß Linie 12-12 in Fig. 11 mit dem ersten steuerbaren Halteteil und dem zweiten steuerbaren Halteteil in geöffneter Position;
- Fig. 13: eine perspektivische Ansicht einer abgeänderten Ausführungsform der Trägereinrichtung;
- Fig. 14: eine perspektivische Ansicht einer abgeänderten Ausführungsform der Trägereinrichtung;
- Fig. 15: eine perspektivische Teil-Draufsicht einer ersten Rotations-Übergabeeinrichtung einer Übergabestation, die Geflügelkörper an eine erste Bearbeitungseinrichtung, nämlich beispielhaft an eine Kloakenschneideeinrichtung übergibt;
- Fig. 16: eine Teil-Unteransicht der ersten Rotations-Übergabeeinrichtung und der Kloakenschneideeinrichtung;
- Fig. 17A und 17B: in perspektivischer Ansicht Bearbeitungseinheiten der Kloakenschneideeinrichtung, die durch Schneideinrichtungen gebildet sind;
- Fig. 18 und 19: in perspektivischer Ansicht eine Schneideinrichtung der Kloakenschneideeinrichtung;
- Fig. 20: in Seitenansicht eine Halteeinrichtung der Schneideeinrichtung der Kloakenschneideeinrichtung;
- Fig. 21: in Rückansicht die Halteeinrichtung;
- Fig. 22-24: Seitenansichten der Kloakenschneideeinrichtung mit unterschiedlichen Positionen der Haltereinrichtung;
- Fig. 25-26: Seitenansichten der Kloakenschneideeinrichtung mit unterschiedlichen Höhenpositionen eines Schneidwerkzeugs der Schneideinrichtung;
- Fig. 27-28: Vorderansichten einer Ausführungsform einer Wiegeeinrichtung, die Prinzipien des offenbarten Gegenstands verdeutlicht;
- Fig. 29: in Draufsicht eine Ausführungsform einer Wiegeeinheit mit Prinzipien des offenbarten Gegenstands;
- Fig. 30-34: Draufsichten der Wiegeeinrichtung mit einem Geflügelkörper, der gewogen und an eine Trägereinrichtung übergeben wird.

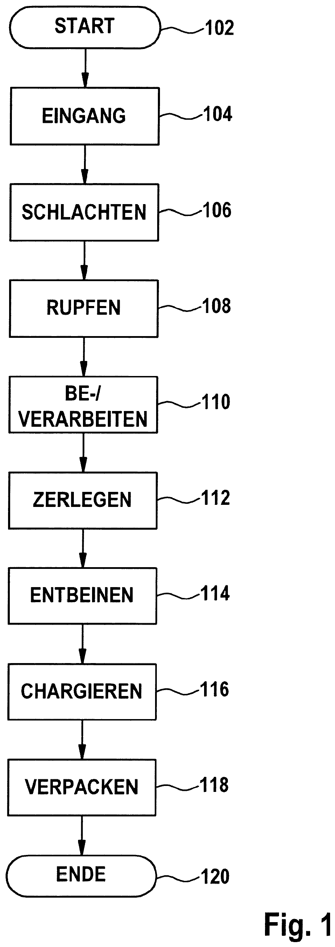

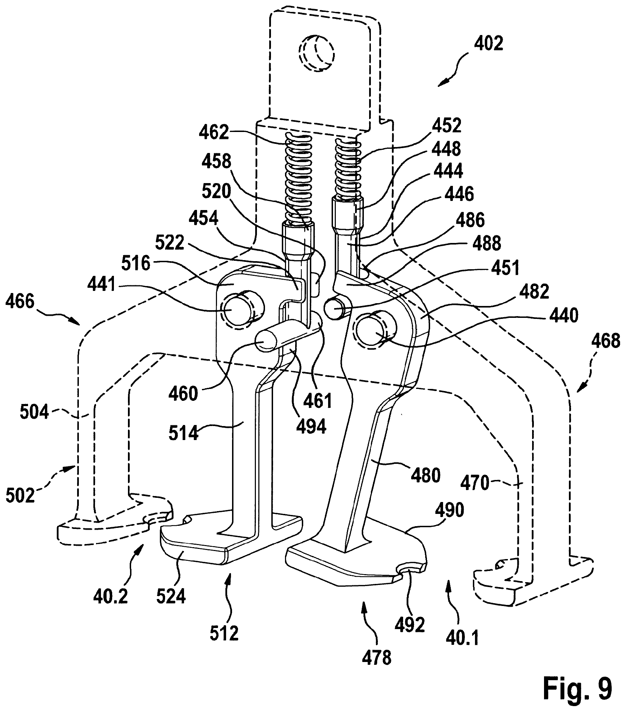

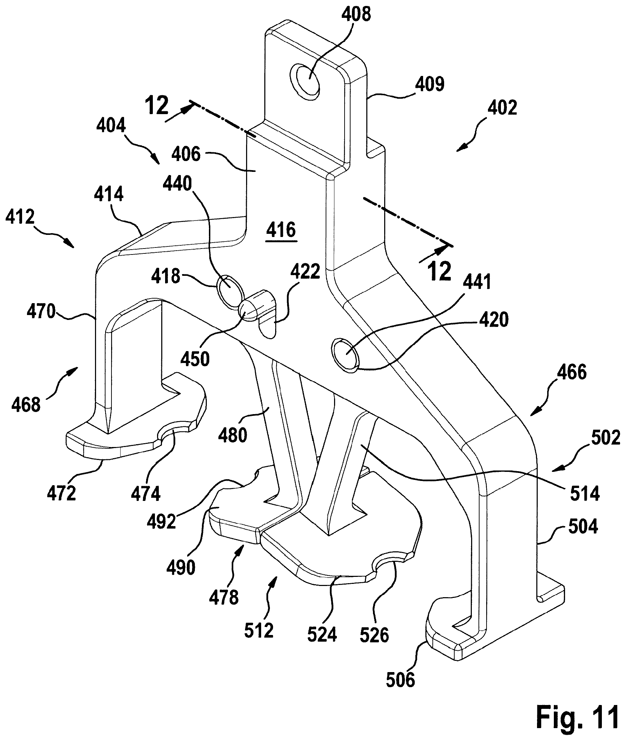

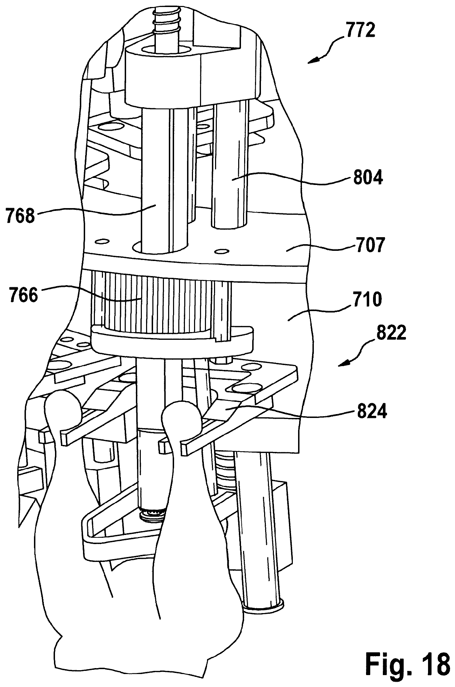

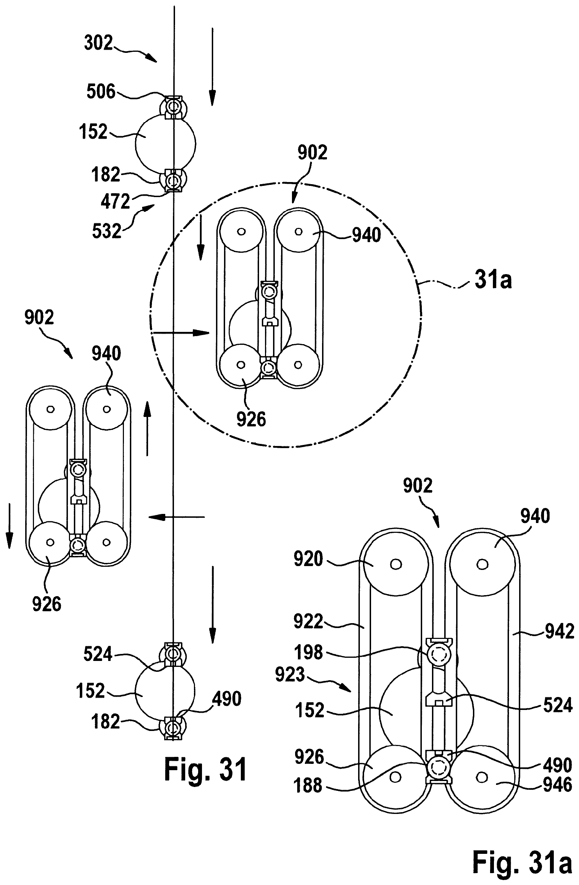

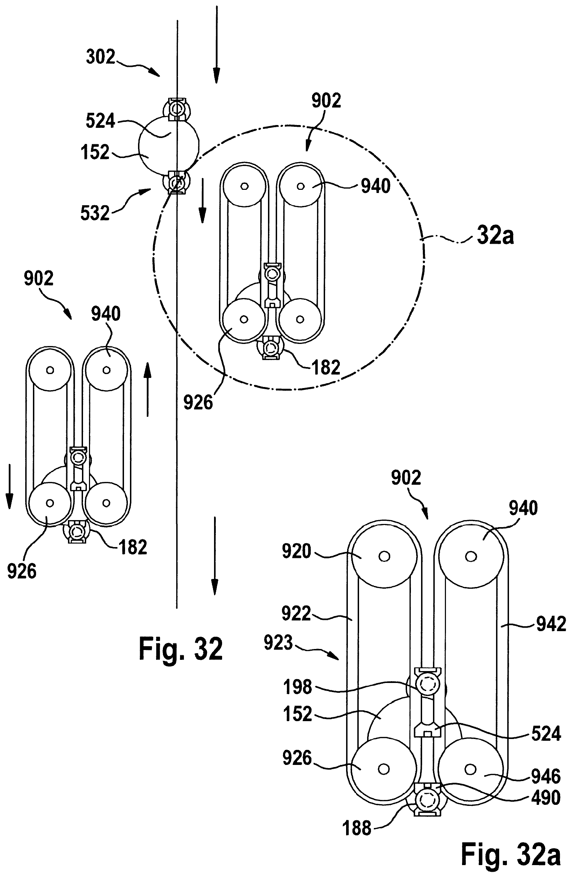

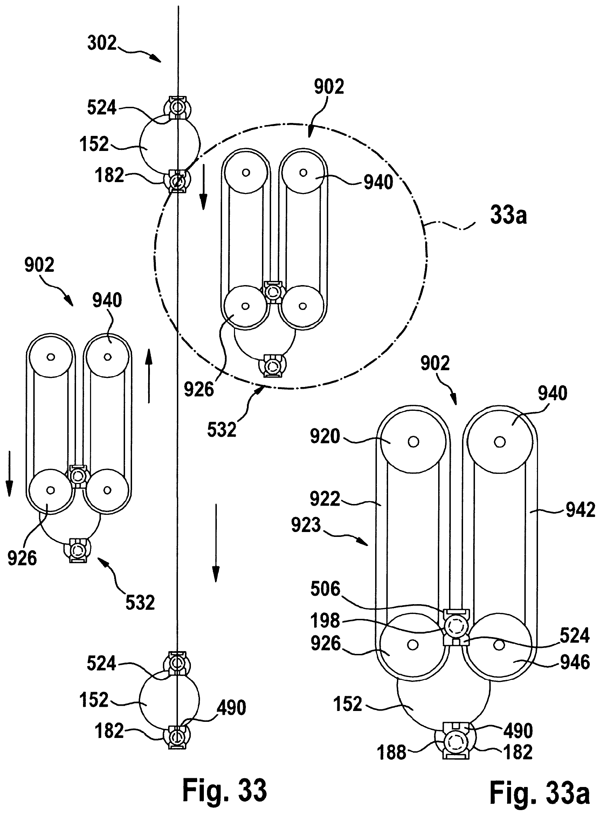

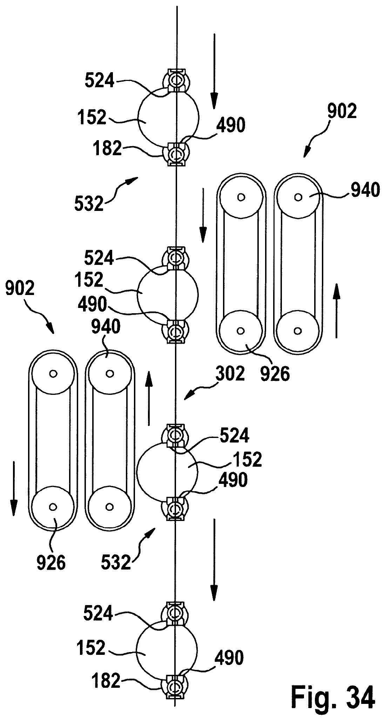

Eine Ausführungsform einer Bearbeitungsvorrichtung 210, die eine Verarbeitungsanlage bildet, wird im Ganzen und mit Details anhand der Fig. 1-34 dargestellt.

Fig. 1 ist ein Flussdiagramm, das allgemeine Verfahrensschritte der Bearbeitung, einschließlich Verarbeitung, von Geflügelkörpern veranschaulicht. Ausgehend von Start 102 gelangt lebendes Geflügel zunächst zum Eingangsschritt 104. Dort wird das Geflügel zur Schlachtung 106 vorbereitet. Nach Schlachtung im Schritt 106 werden die Geflügelkörper im Schritt 108 gerupft, um sie zur Be- bzw. Verarbeitung im Schritt 110 vorzubereiten. Nach der Be-/Verarbeitung 110 werden die Geflügelkörper weiter verarbeitet, um erwünschtes und unerwünschtes Gewebe durch Zerlegen 112 und Entbeinen 114 zu entfernen. Erwünschtes Gewebe, nämlich nutzbare oder verzehrbare Teile wie insbesondere Filetfleisch und/oder andere Geflügelteile werden anschließend zum Bereitstellen und Beliefern von Abnehmern mit Schritt 116 portioniert und gemäß Schritt 118 verpackt. Das allgemein mit der Übersicht angegebene Verfahren endet im Schritt 120.

Vorgänge der Bearbeitung des Schrittes bzw. Prozessabschnittes 110 werden mittels einer erfindungsgemäßen Bearbeitungsvorrichtung 210 durchgeführt. In einer Ausführungsform umfasst die Bearbeitungsvorrichtung 210 ein nicht dargestelltes integriertes Computerüberwachungs- und -steuerungssystem, um Bewegung und Betrieb einer Förderanlage, zu der die Bearbeitungseinrichtung mit einer Hauptfördereinrichtung 302, und mehrere Übergabestationen 60 und zugehörige Bearbeitungseinrichtungen 21 gehören, während des gesamten Prozesses zu steuern und um Informationen bzw. Daten zu jedem Geflügelkörper 152 in der Bearbeitungsvorrichtung 210 zu erfassen, zu verarbeiten und zu nutzen.

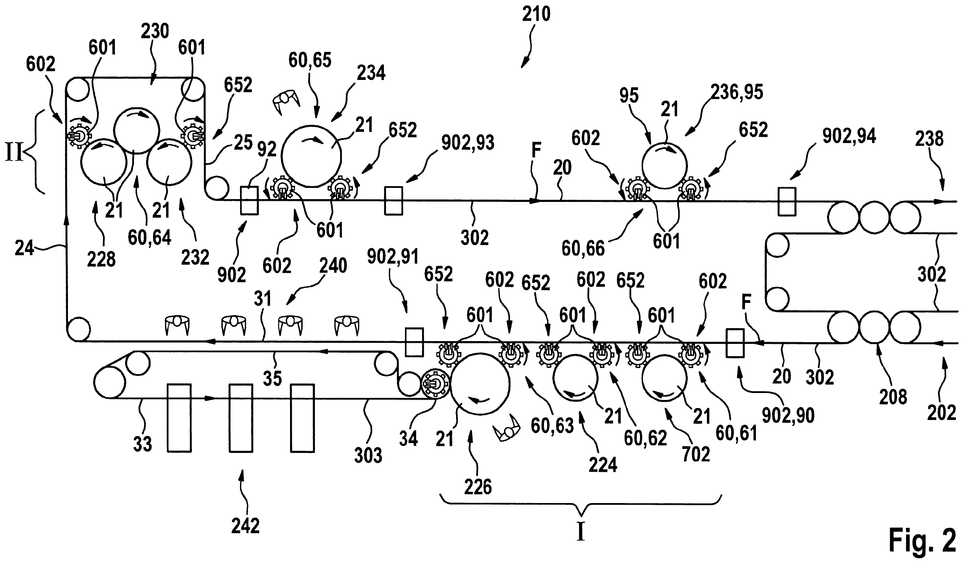

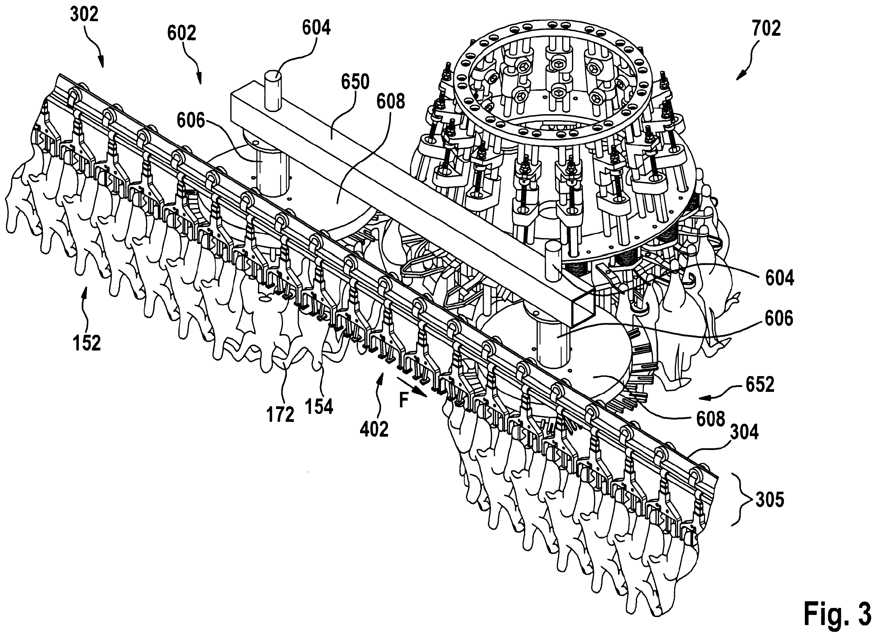

Fig. 2 zeigt in Draufsicht einer beispielhaften Ausführungsform der Bearbeitungsvorrichtung 210, die sechs Übergabestationen 60, 61-66 und die zugehörigen Bearbeitungseinrichtungen 21 umfasst. Geflügelkörper 152 (s. Fig. 3) gelangen von einer Vorverarbeitungsanlage oder -einrichtung 202 in die Bearbeitungsvorrichtung 210 und verlassen diese hin zu einer Nachverarbeitungsanlage oder -einrichtung 238. Die Vorverarbeitungseinrichtung 202 umfasst die genannten Schritte der Annahme/Eingang 104, der Schlachtung 106 und des Rupfens 108. In einer Ausführungsform werden die Geflügelkörper 152 von der Vorverarbeitungseinrichtung 202 an eine Rotations-Wiegeeinheit 208 übergeben, um dort das Gewicht jedes Geflügelkörpers 152 zu erfassen und Strang/Ketten-Förderstrecken der Einrichtung 202 und der Vorrichtung 210 voneinander zu trennen.

In einer Ausführungsform wird das Gewicht der Geflügelkörper 152 an einer oder mehreren Stellen innerhalb der Bearbeitungsvorrichtung 210 mittels Wiegemitteln oder -einrichtungen 902, 236 ermittelt, die zusätzlich oder anstelle der Rotations-Wiegeeinheit 208 vorgesehen werden. Mit dem Wiegen jedes Geflügelkörpers 152 vor der Bearbeitung 110 wird ein Ausgangsgewicht jedes Geflügelkörpers 152 gewonnen, auf dessen Basis man eine genaue Bestimmung des Produktertrags von dem die Verarbeitungsanlage bzw. Bearbeitungsvorrichtung 210 durchlaufenden Geflügelkörper 152 gewinnen kann. Nach dem Ende der Bearbeitungsvorgänge im Schritt 110 werden die Geflügelkörper 152 von der Bearbeitungsvorrichtung 210 an die Nachverarbeitungseinrichtung 238 übergeben. Auch zu dieser Übergabe werden die Geflügelkörper 152 auf eine andere Strang/Ketten-Hauptförderstrecke umgehängt.

Gemäß einer Ausführungsform werden die Geflügelkörper 152 in der Bearbeitungsvorrichtung 210 an eine mit einer Übergabestation 60, 66 betriebenen Rotations-Wiegeeinheit 236 übergeben, bevor sie zu der Nachverarbeitungseinrichtung 238 gelangen. In einer alternativen Ausführungsform wird das Gewicht der Geflügelkörper 152 anstelle der Rotations-Wiegeeinheit 236 mittels einer Wiegeeinrichtung 94, 902 bestimmt. Jede Wiegeeinrichtung 902 kann durch eine Rotations-Wiegeeinheit 236 ersetzt werden.

Die Bearbeitungsvorrichtung 210 umfasst Trägereinrichtungen 402 der Hauptfördereinrichtung 302 zum Fördern der Geflügelkörper 152 zu sowie nach jeder Übergabestation 60 und gegebenenfalls zwischen den Übergabestationen 60. Nach einer Ausführungsform weist jede Trägereinrichtung 402 eine Markierung wie zum Beispiel eine optische Markierung, eine computererfassbare Markierung und/oder ein Funkwellenidentifikations(RFID)-Element auf. Man erreicht, dass zum Beispiel ein Bediener den Geflügelkörper 152 optisch und/oder mithilfe eines integrierten Computerüberwachungs- und -steuerungssystems durch den gesamten Bearbeitungs-/ Verarbeitungsvorgang verfolgen kann. Das Verfolgen der Trägereinrichtungen 402 und der damit geförderten Geflügelkörper 152 ermöglicht es, optische Merkmale und Charakteristika des Geflügelkörpers 152 zu erfassen und zu bewerten. Insbesondere handelt es sich bei den Merkmalen und Charakteristika um gebrochene Flügel, gebrochene Schenkel, Blutflecken, Federreste und dergleichen, die aktuelle Position des Geflügelkörpers 152 in der Bearbeitungsvorrichtung 210 und Feststellungen, welche Bearbeitungseinrichtungen 21 von einem Geflügelkörper 152 bereits durchlaufen worden sind.

Die Trägereinrichtungen 402 bewegen sich mittels der Hauptfördereinrichtung 302 entlang einer Hauptförderlinie 20 durch die Bearbeitungsvorrichtung 210. Im Ausführungsbeispiel gemäß Fig. 2 passiert jeder Geflügelkörper 152 zunächst eine Übergabestation 60, 61. Die Übergabestation 61 ist, wie übereinstimmend auch die anderen Übergabestationen 60 der Bearbeitungsvorrichtung 210, durch ein Übergabepaar 601 gebildet, das eine erste Rotations-Übergabeeinrichtung 602 und eine zweite Übergabeeinrichtung 652 aufweist. Mittels der Rotations-Übergabeeinrichtung 602 wird der Geflügelkörper 152 von der Trägereinrichtung 402 jeweils an eine Bearbeitungseinrichtung 21 übergeben. Die zweite Rotations-Übergabeeinrichtung 652 entnimmt den Geflügelkörper 152 von einer oder der Bearbeitungseinrichtung 21 und übergibt ihn an eine freie Trägereinrichtung 402.

Eine Innereien entfernende Gruppe I von Bearbeitungseinrichtungen 21 umfasst drei separate Bearbeitungseinrichtungen 21. Das heißt, dass jede dieser Bearbeitungseinrichtungen 21 in Übertragungsverbindung mit einer zugehörigen Rotations-Übergabestation 60 angeordnet ist. Mehrere dieser Bearbeitungseinrichtungen können auch unmittelbar miteinander in einer Gruppe verbunden sein. Die erste Bearbeitungseinrichtung 21 umfasst eine Kloakenschneideeinrichtung 702 zum Öffnen des hinteren Endes des Geflügelkörpers 152 vor dem Ausnehmen. Die zweite Bearbeitungseinrichtung 21 ist durch eine Öffnungseinrichtung 224 zum Anbringen eines Schnittes im Geflügelkörper 152 von der Kloake 156 zum Brustbein gebildet. Die dritte Bearbeitungseinrichtung 21 der Gruppe I ist eine Ausweideeinrichtung 226 zum Entfernen der inneren Organe des Geflügels.

Stromabwärts der ersten Gruppe I von Bearbeitungsvorrichtungen 21 ist an der Hauptförderlinie 20 eine zweite Gruppe II von Bearbeitungseinrichtungen 21 angeordnet, die Gewebe entfernen. Eine erste Bearbeitungseinrichtung 21 der Gruppe II ist durch eine Entkröpfeinrichtung 228 gebildet zum Entfernen von unerwünschten, am Hals festen Gewebeteilen, wie insbesondere Kropf und Luftröhre. Die zweite Bearbeitungseinrichtung 21 der Gruppe II ist eine Halsentfernungseinrichtung 230 zum Lösen und Entfernen des Halses. Die dritte Bearbeitungseinrichtung 21 ist durch eine Lungenentfernungseinrichtung 232 gebildet.

Im Fall der Bearbeitungs-Gruppe II stehen die drei Bearbeitungseinrichtungen 21 in Übertragungsverbindung mit einer einzigen zugehörigen Übergabestation 64. Die drei Bearbeitungseinrichtungen 21 der Bearbeitungsgruppe II bilden eine Bearbeitungsanordnung, die die Geflügelkörper 152 von der ersten Rotations-Übergabeeinrichtung 602 der Übertragungsstation 64 erhält und die bearbeiteten Geflügelkörper 152 mittels der zweiten Rotations-Übergabeeinrichtung 652 an freie Trägereinrichtungen 402 übergibt. Die drei Bearbeitungseinrichtungen 21 der Bearbeitungsgruppe II sind durch Einrichtungen des Karusselltyps gebildet, wobei zwischen den Bearbeitungseinrichtungen 21 eine direkte Übergabe der Geflügelkörper 152 eingerichtet ist. Die Übergabestation 64 zeichnet sich weiter dadurch aus, dass sie zwischen zwei durch Umlenkung der Hauptförderlinie 20 gebildeten Förderabschnitten 24, 25 der Hauptförderlinie 20 angeordnet ist. Die Förderrichtungen der beiden Förderabschnitte 24 und 25 sind relativ zueinander gegensinnig, wobei die erste Rotations-Übergabeeinrichtung 602 des Übergabepaares 601 der Übergabestation 64 an dem stromaufwärts gelegenen Förderabschnitt 24 und die zweite Rotations-Übergabeeinrichtung 652 an dem stromabwärts gelegenen Förderabschnitt 25 angeordnet ist.

Stromabwärts der Gewebe entfernenden Bearbeitungs-Gruppe II ist an der Hauptförderlinie 20 eine weitere Übergabestation 65 angeordnet, die in Verbindung mit einer Bearbeitungseinrichtung 21 des Karusselltyps in Form einer Reinigungseinrichtung 234 eingerichtet ist. Diese ist zum Reinigen der Innen- und Außenseite des Geflügelkörpers 152 eingerichtet, um sämtliche Reste oder Flecken zu entfernen, die nach den vorhergehenden Bearbeitungsschritten zurückgeblieben sind.

Am Ende der Bearbeitungsstrecke der Bearbeitungsvorrichtung 210 ist eine Übergabestation 66 in Übertragungsverbindung mit einer Bearbeitungseinrichtung 21 des Karusselltyps gebildet, die durch die Wiegeeinrichtung oder -einheit 236 gebildet ist.

Sämtliche Übergabestationen 60 sind mit den Übergabepaaren 601 der Rotations-Übergabeeinrichtungen 602, 652 baugleich ausgebildet. Baugleiche Rotations-Übergabeeinrichtungen 602, 652 lassen sich in Form von Modulpaaren austauschbar verwenden. Sie lassen sich nach Wahl an der einen oder anderen Längsseite der Hauptförderlinie 20 anordnen. Im Ausführungsbeispiel sind die Übergabestationen 61-63 sowie 65, 66 an der einen, linken Laufseite und die Übergabestationen 64 an der anderen, rechten Laufseite der Hauptfördereinrichtung 302 angeordnet.

Wie im Ausführungsbeispiel gemäß Fig. 2 dargestellt, besteht eine bevorzugte besondere optionale Gestaltung darin, dass die erste Bearbeitungs-Gruppe I eine Innereien-Fördereinrichtung 303 umfasst, die Bestandteil einer Inspektionseinrichtung 240 ist. An der Ausweideeinrichtung 226 ist, in Rotations-Förderrichtung derselben betrachtet, vor der zweiten Rotations-Übergabeeinrichtung 652 in deren Nähe am Ende der Bearbeitungsstrecke der Ausweideeinrichtung 226 eine Innereien-Übergabeeinrichtung 34 angeordnet, die Innereien in Form von Innereien-Paketen jedem Geflügelkörper 152 entnimmt und an einen Innereien-Umlaufförderer 33 der Innereien-Fördereinrichtung 303 übergibt. Ein Innereien-Paket ist üblicherweise durch Herz, Leber und Magen gebildet, die mittels Membran zusammenhängen. Ein solches Innereien-Paket lässt sich, dafür sind die Innereien-Übergabeeinrichtung 34 und der Innereien-Umlaufförderer 33 eingerichtet, an der hervorstehenden Speiseröhre zur Übergabe und zum Transport erfassen.

Die Innereien-Fördereinrichtung 303 umfasst einen Inspektionsförderabschnitt 35, den die Innereien-Pakete zunächst passieren, bevor sie zu einer Innereien-Abnahmestation 242 der Innereien-Fördereinrichtung 303 gelangen. Der Inspektionsförderabschnitt 35 ist Bestandteil der Inspektionseinrichtung 240. Der Inspektionsförderabschnitt 35 und ein diesem in der Inspektionseinrichtung 240 zugeordneter Inspektionsförderabschnitt 31 der Hauptfördereinrichtung 302 sind mit Parallellauf nebeneinander angeordnet. Der Betrieb des Innereien-Umlaufförderers 33 wird, in Verbindung mit dem Betrieb der Übergabestation 63 und dem zugehörigen Paar der Rotations-Übergabeeinrichtungen 602 und 652, mit dem Betrieb der Hauptfördereinrichtung 302 synchronisiert, derart, dass die Geflügelkörper 152 mit ihrem jeweiligen Innereien-Paket synchronisiert und die beiden Teile durch den dadurch eingerichteten Parallellauf zusammengehörig einer optischen Inspektion unterzogen werden. Die optische Inspektion ermöglicht die Feststellung von Anomalien, die einen Geflügelkörper 152 oder ein Innereien-Paket für den menschlichen Konsum ungeeignet machen, oder auch die Feststellung von Geflügelkörpern 152 bzw. Innereien-Paketen, die Qualitätsstandards nicht erfüllen. Die optische Inspektion kann, wie in Fig. 2 dargestellt, durch Bedienungspersonal oder auch ganz oder teilweise automatisiert z. B. von einem Kamerasystem durchgeführt werden. Zum Beispiel wird ein eine Qualitätseinstufung durchführendes ClassifEYE®-Bildverarbeitungssystem der Firma Baader Linco eingesetzt. Mit Hilfe eines automatisierten optischen Inspektionssystems können die optischen Inspektionsdaten, die zu jedem Geflügelkörper 152 erfasst werden, insbesondere mit dem RFID-Element, das an jedem Produktträger 402 angebracht ist, zugehörigen Geflügelkörpern 152 zugeordnet werden. Die Innereien-Pakete werden nach Verlassen der Inspektionseinrichtung 240 auf zugeordnete Abnahmestellen der Abnahmestation 242, z. B. Behälter zum Ernten/ Sammeln gegeben. Aus dem Prozess zu entfernende Geflügelkörper 152 können im Abschnitt 31 der Inspektionseinrichtung 240 der Hauptfördereinrichtung 302 entnommen werden. Vorteilhaft kann die Entnahme an einer dem Inspektionsförderabschnitt 35 abgewandten Laufseite der Hauptförderlinie 20 mittels dafür eingerichteter Trägereinrichtungen 402 erfolgen. Betroffene Geflügelkörper 152 können mittels zugehörig markierter Trägereinrichtungen 402 in Verbindung mit dem genannten Nachverfolgungs-System zu einem späteren Zeitpunkt bzw. an anderer Stelle sondiert werden. Anstelle der Ausweideeinrichtung 226 kann ganz allgemein eine Abtrenn-Bearbeitungseinrichtung, auch in Einzel-Anordnung auf dem Bearbeitungsweg zwischen den beiden Rotations-Übergabeeinrichtungen 602, 652, vorgesehen sein. Zum Beispiel wird eine Bearbeitungseinrichtung zum Zerlegen der Geflügelkörper 152 eingerichtet, mit der zum Beispiel Flügel abgetrennt werden. Anstelle der Innereien-Übergabeeinrichtung 34 wird ganz allgemein eine Abtrenn-Übergabeeinrichtung vorgesehen, die der Abtrenn-Bearbeitungseinrichtung abgetrennte Geflügelteile entnimmt und an einen Abtrenn-Umlaufförderer mit einer Abtrenn-Fördereinrichtung übergibt. Diese sind im Prinzip wie der Innereien-Umlaufförderer 33 und die Innereien-Fördereinrichtung 303 eingerichtet. Anstelle der Inspektionseinrichtung 240 kann ganz allgemein eine Überwachungs- und Prüfeinrichtung vorgesehen sein, die die mittels des Abtrenn-Umlaufförderers 33 geförderten abgetrennten Geflügelteile den Geflügelkörpern 152 zuordnet, denen die angetrennten Geflügelteile jeweils entnommen worden sind und die sich zum Weiterfördern längs der Hauptförderstrecke 20 mittels der Trägereinrichtungen 402 stromabwärts der zweiten Rotations-Übergabeeinrichtung 652 des zugehörigen Übergabepaares 601 befinden. Die Überwachungs- und Prüfeinrichtung wird mit an sich bekannten Mitteln zum Erfassen der Weg- und Zeitpositionen der Geflügelkörper bzw. von deren Teilen zum Zwecke des Nachverfolgens eingerichtet. Insbesondere umfasst die Abtrenn-Fördereinrichtung wenigstens eine Station, an die abgetrennte Geflügelteile vorzugsweise automatisch weitergegeben werden.

Nach abschließendem Wiegen mittels der Rotations-Wiegeeinrichtung 236 und/oder der Wiegeeinrichtung 902 verlassen die Geflügelkörper 152 die Bearbeitungsvorrichtung 210 und werden in der Nachverarbeitungseinrichtung 238 weiterverarbeitet. In der Nachverarbeitungseinrichtung 238 werden die Schritte des Zerlegens 112, des Ausbeinens 114, des Zuteilens oder Aufteilens in Chargen bzw. Portionierens 116 und des Verpackens 118 durchgeführt.

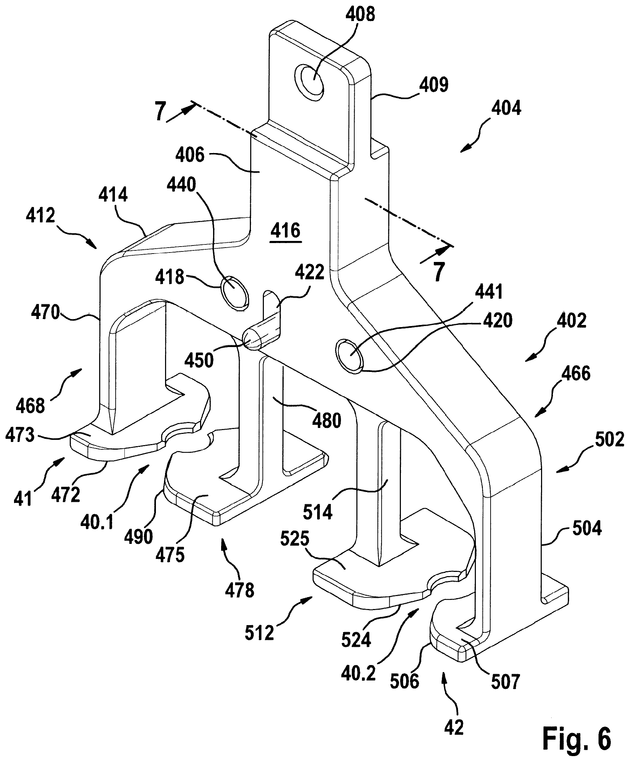

In Fig. 3-4 und 15-26 sind Teile der Bearbeitungsvorrichtung 210 dargestellt, nämlich das Paar 601 der beiden ersten und zweiten Übergabeeinrichtungen 602, 652 der Übergabestation 60 und Ausführungsformen der Bearbeitungseinrichtung 702. Fig. 6 bis 13 zeigen Ausführungsformen der Trägereinrichtung 402.

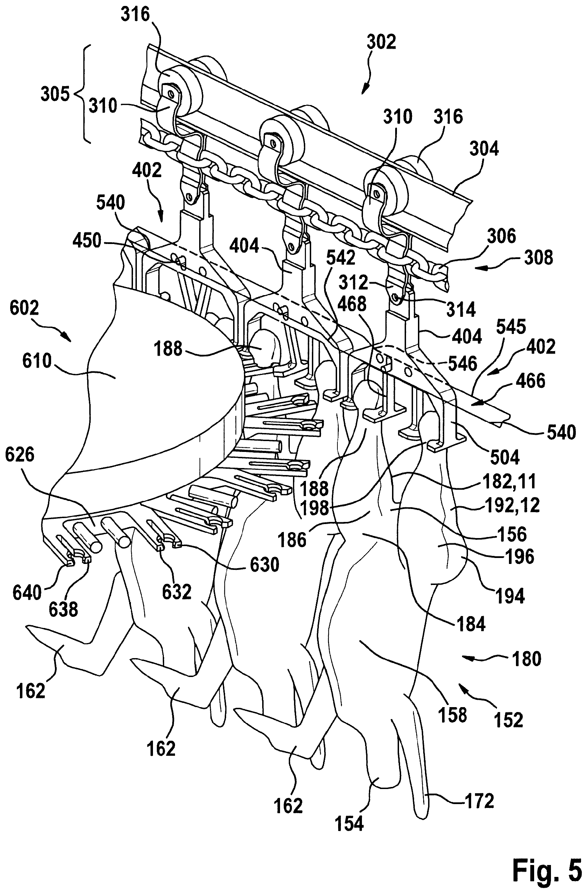

Wie insbesondere aus Fig. 3 und 5 ersichtlich, umfasst die Hauptfördereinrichtung 302 gemäß einer Ausführungsform im Wesentlichen eine Mehrzahl von Laufwagen 308, die an einer Schiene 304 aufgehängt und längs dieser bewegbar sind. Jeder Laufwagen 308 weist einen Rahmen 310 auf, der Rollen oder Räder 316 lagert, die rollend in die Schiene 304 eingreifen. Jeder Laufwagen 308 ist mittels eines Befestigungselements 312 mit einer zugehörigen Trägereinrichtung 402 verbunden. Die Laufwagen 308 sind entlang der Schiene 304 zu einer Reihe mit einem Verbindungsmittel 306 verbunden, das eine Kette umfasst. Die Laufwagen 308 sind entlang der Schiene 304 durch das Verbindungsmittel 306 so beabstandet, dass die Distanz zwischen den Mittelpunkten geförderter Geflügelkörper 152 ungefähr sechs Zoll beträgt. Die Laufwagen 308 werden entlang der Schiene 304 von einem nicht dargestellten Antriebselement vorwärts bewegt, das in das Verbindungsmittel 306 eingreift. Die Schiene 304 bildet zusammen mit dem Verbindungsmittel einen Förderstrang 305, der die Hauptförderlinie 20 bestimmt.

Eine Ausführungsform der Trägereinrichtung 402 wird anhand der Fig. 3-14 beschrieben. Die Trägereinrichtung 402 ist allgemein so eingerichtet, dass sie einen Geflügelkörper 152 mit dem linken und rechten Geflügelbein 182, 192 aufnimmt, und zwar jeweils am Fußgelenk. Statt an diesen paarigen Gliedmaßen kann der Geflügelkörper 152 auch an anderen paarigen Gliedmaßen 11, 12, zum Beispiel an den Flügeln, aufgehängt werden.

Wie aus Fig. 5 ersichtlich, umfasst der Geflügelkörper 152 einen Rumpf und Gliedmaßen. Der Rumpf erstreckt sich zwischen dem Hals 154 und der Kloake 156, und zwar mit der Brust 158 an der Bauchseite 180 und dem Rückenfleisch an der gegenüberliegenden Rückenseite. Die Gliedmaßen umfassen Flügel 162, 172 und Geflügelbeine 182, 192. Der linke Flügel 162 setzt am Geflügelkörper 152 an einer Seite und der rechte Flügel 172 an der anderen Seite neben dem Hals 154 an. Das linke Geflügelbein 182 erstreckt sich zwischen dem linken Fußgelenk 188 und der linken Hüfte 184 mit dazwischen liegendem linken Knie 186. Das linke Geflügelbein 182 ist mit dem Geflügelkörper 152 über die linke Hüfte 184 verbunden. Das rechte Geflügelbein 192 erstreckt sich zwischen dem rechten Fußgelenk 198 und der rechten Hüfte 194 mit dazwischen liegendem rechten Knie 196. Das rechte Geflügelbein 192 ist mit dem Geflügelkörper 152 über die rechte Hüfte 194 verbunden. Man erkennt, dass die Geflügelkörper 152 in der beschriebenen Anordnung lateral, nämlich mit der Außenseite des vorauslaufenden linken Beins und der Innenseite des nacheilenden rechten Beins voraus gefördert werden. Selbstverständlich kann der Geflügelkörper 152 auch umgekehrt mit vorauslaufendem rechten Bein und nachlaufendem linken Bein aufgehängt werden.

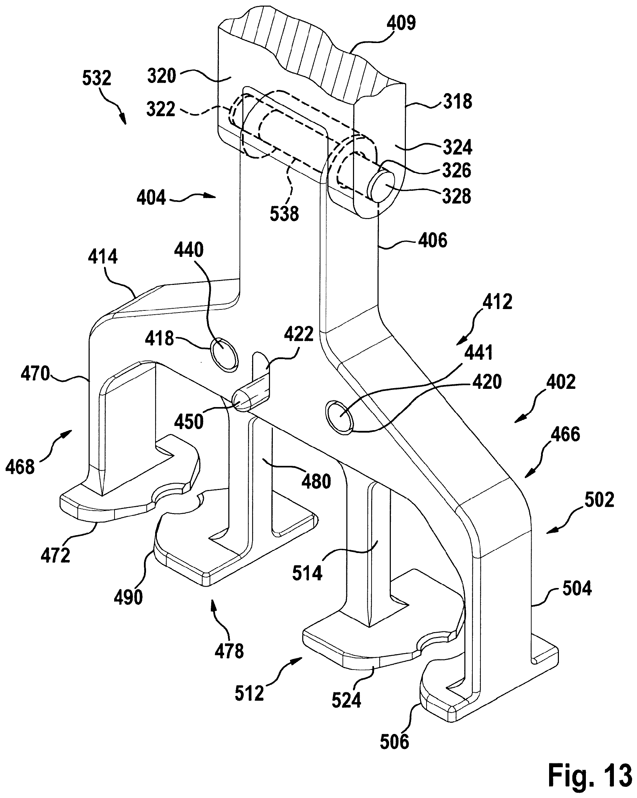

Die Trägereinrichtung 402 umfasst einen oberen Abschnitt 404 und einen unteren Abschnitt 412. Der obere Abschnitt 404 weist einen Trägerhals 406 auf, der sich zwischen einem ersten Ende am unteren Abschnitt 412 und einem zweiten, ein Anschlussteil 409 ausbildenden Ende erstreckt. Das Anschlussteil weist ein Durchgangsloch 408 zum Verbinden der Trägereinrichtung 402 mit der Hauptfördereinrichtung 302 auf. In einer Ausführungsform gemäß Fig. 3-12 erstreckt sich das Durchgangsloch 408 in der Breite des Trägerhalses 406 zwischen einer ersten Seite 416 und einer zweiten Seite 426 der Trägereinrichtung 402. In einer anderen Ausführungsform (Fig. 13) erstreckt sich das Durchgangsloch 408 in Länge des Trägerhalses 406, nämlich senkrecht zu der genannten Breitendimension und parallel zum Förderstrang 305.

Der untere Abschnitt 412 umfasst eine Greifeinrichtung 466, die sich unterhalb eines Gehäusekörpers 414 von diesem nach unten erstreckt. Der Gehäusekörper 414 umfasst auch einen Teil des Trägerhalses 406. Die Greifeinrichtung 466 umfasst einen linken Träger 41 zum Aufhängen des linken Geflügelbeins182 sowie einen rechten Träger 42 zum Aufhängen des rechten Geflügelbeins 192, so dass die Greifeinrichtung 466 den Geflügelkörper 152 an seinen Beinen 182, 192 hält. In einer Ausführungsform weist der Gehäusekörper 414 eine allgemein ebenflächige Dreiecksform auf, wobei sich der Trägerhals 406 von einem Mittelpunkt des Dreiecks nach oben erstreckt. Der Gehäusekörper 414 weist einen im Wesentlichen rechteckförmigen unteren Hohlraum 434 mit einer nach unten gerichteten Öffnung 435 sowie ein Paar nebeneinander liegender erster und zweiter rohrförmiger Hohlräume 436, 438 auf, die sich von einem oberen Ende des Hohlraums 434 in den Gehäusehals 406 hinein erstrecken und nach unten offene Zylinderräume bilden.

Die Greifeinrichtung 466 umfasst ein Paar von sich nebeneinander erstreckenden, an dem Gehäusekörper 414 fest (unbewegbar) angeordneten ersten und zweiten äußeren Träger-Schenkeln 468, 502 sowie ein Paar von korrespondierenden sich nebeneinander erstreckenden ersten und zweiten inneren Träger-Armen 478, 512, die relativ zu den festen Träger-Schenkeln 468, 502 bewegbar sind. Der erste Träger-Schenkel 468 umfasst ein längliches Träger-Schenkelteil 470, das sich von einem ersten Ende neben der Öffnung 435 am Gehäusekörper 414 nach unten erstreckt und an einem zweiten freien Schenkelende mit einem Fuß oder plattenartigen Tragelement 473 endet, das einen nach innen vorspringenden Tragrand 472 aufweist. Der nach innen weisende Rand des Tragrandes 472 weist eine halbmondförmige Randausnehmung 474 auf. Der zweite Träger-Schenkel 502 ist dem ersten Träger-Schenkel 468 gegenüber mit Abstand angeordnet. Der zweite Träger-Schenkel 502 umfasst ein längliches Träger-Schenkelteil 504, das sich von einem ersten Ende neben der Öffnung 435, dem ersten Schenkel 468 gegenüber liegend, am Gehäusekörper 414 nach unten erstreckt und an einem zweiten freien Schenkelende mit einem Fuß oder plattenartigen Tragelement 507 endet, das einen nach innen vorspringenden Tragrand 506 aufweist. Der nach innen weisende Rand des Tragrandes 506 bildet eine halbmondförmige Randausnehmung 508.

Der erste Träger-Arm 478 ist zwischen dem ersten Träger-Schenkel 468 und dem zweiten Träger-Schenkel 502 angeordnet und wirkt mit dem ersten Träger-Schenkel 468 zusammen, um in das linke Bein 182 des Geflügelkörpers 152 einzugreifen bzw. es loszulassen. Der erste Träger-Arm 478 weist ein längliches Träger-Schenkelteil 480 auf, das an einem ersten Ende einen Kopf 482 und an einem gegenüberliegenden freien zweiten Ende ein plattenartiges Tragelement 475 oder einen Fuß mit einem nach außen vorspringenden Tragrand 490 umfasst. Der nach außen weisende Rand des Tragrandes 490 bildet eine halbmondförmige Randausnehmung 492. Der Kopf 482 wird in dem unteren Hohlraum 434 schwenkbar um eine durch einen Bolzen gebildete Schwenkachse 440 aufgenommen. Der Bolzen durchsetzt ein Loch 484 in dem Kopf 482 und ein erstes Loch 418 in der ersten Gehäuseseite 416 und ein erstes Loch 428 in der zweiten Gehäuseseite 426. Das obere Ende des Kopfes 482 umfasst gegenüberliegende erste und zweite Vorsprünge oder Laschen 486, 488, die von dem Kopf 482 weg zu dem zweiten Träger-Schenkel 502 hin gerichtet sind, um ein erstes Steuerelement 444 in Form eines Betätigungsbolzens aufzunehmen.

Der zweite Träger-Arm 512 ist zwischen dem ersten Träger-Arm 478 und dem zweiten Träger-Schenkel 502 angeordnet und wirkt mit dem zweiten Träger-Schenkel 502 zusammen, um in das rechte Bein 192 des Geflügelkörpers 152 einzugreifen und es loszulassen. Der zweite Träger-Arm 512 weist ein längliches Träger-Schenkelteil 514 auf, das an einem ersten Ende einen Kopf 516 und an einem gegenüberliegenden freien zweiten Ende ein plattenartiges Tragelement 525 oder einen Fuß mit einem nach außen vorspringenden Tragrand 524 umfasst. Der nach außen weisende Rand des Tragrandes 524 bildet eine halbmondförmige Randausnehmung 526. Der Kopf 516 wird in dem unteren Hohlraum 434, vom ersten Trag-Arm 478 abgewandt, schwenkbewegbar um eine durch einen Bolzen gebildete Schwenkachse 441 gelagert. Der Bolzen durchsetzt ein Loch 518 in dem Kopf 516 sowie ein zweites Loch 420 in der ersten Gehäuseseite 416 und ein zweites Loch 430 in der zweiten Gehäuseseite 426. Das obere Ende des Kopfes 516 umfasst gegenüberliegende erste und zweite Vorsprünge oder Laschen 520, 522, die von dem Kopf 516 weg zu dem ersten Träger-Schenkel 468 hin gerichtet sind und ein zweites Steuerelement 454 in Form eines Betätigungsbolzens aufnehmen.

Man erkennt, dass der Träger 41 durch das Paar von Träger-Schenkelteilen 470, 480 und der Träger 42 durch das Paar von Träger-Schenkelteilen 504, 514 gebildet ist. Wie nachstehend beschrieben, bildet das Träger-Schenkelteil 480 ein steuerbares Halteteil des Trägers 41 bzw. der Aufnahme 40.1. Das Schenkelteil 514 bildet ein steuerbares Halteteil des Trägers 42 bzw. der Aufnahme 40.2.

Zweckmäßig sind der obere Gehäuseabschnitt 404, der untere Gehäuseabschnitt 412, die ersten und zweiten Träger-Schenkel 468, 502 sowie die ersten und zweiten Träger-Arme 478, 512 aus Metall, z. B. rostfreiem Stahl, oder auch aus einem elastisch beanspruchbaren Material gefertigt. Als elastisch beanspruchbare Materialien kommen verstärkter Kunststoff, Nylon, Polyoxymethylen und Polyethylen insbesondere hoher Dichte in Betracht. Die genannten Komponenten können durch Spritzguss, Extrusion oder mechanische Bearbeitung hergestellt werden.

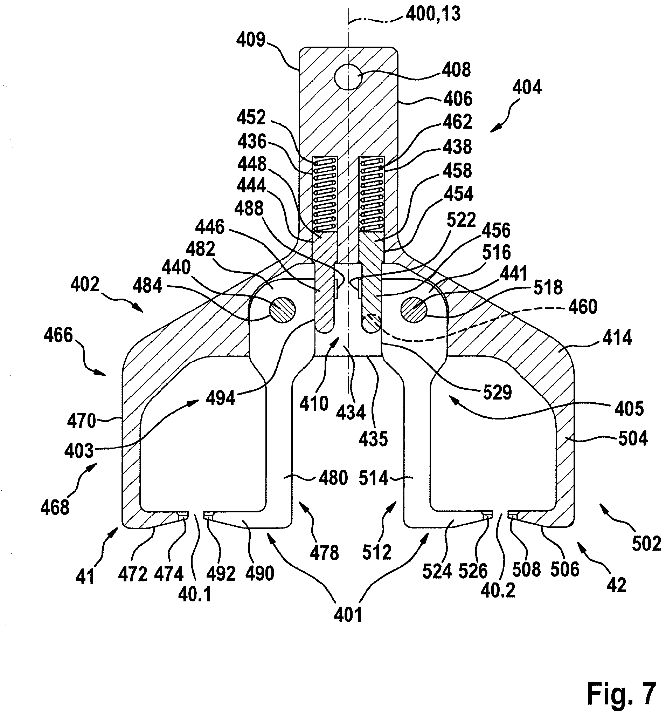

Das erste Steuerelement 444, nämlich der erste Betätigungsbolzen umfasst ein durch einen stabförmigen Körper gebildetes Stabteil 446, mit an einem ersten Ende einem Lagerkopf 448 und mit an einem zweiten Ende einem Steuerfuß, gebildet durch einen Steuerkörper 450 in Form eines Steuervorsprungs 450 sowie einem Absatz 451. Das Stabteil 446 durchgreift den U-förmigen Raum zwischen den ersten und zweiten Laschen 486, 488, wobei der Steuerkörper 450 und der Absatz 451 unter die Laschen 486, 488 greifen. Der Steuerkörper 450 greift von dem unteren Hohlraum 434 durch ein Langloch 422 in der ersten Gehäuseseite 416 nach außen. Eine längliche Ausnehmung 423, die an der Innenwand des unteren Hohlraums 434 dem Langloch 422 gegenüberliegend ausgebildet ist, nimmt den Absatz 451 auf. Eine erste Vorspanneinrichtung 452, die eine Schraubenfeder umfasst und zwischen der Oberseite des Kopfes 448 und dem einen Lochboden bildenden oberen Ende des ersten rohrförmigen Hohlraums 436 angeordnet ist, sorgt für eine nach unten wirksame Vorspannkraft gegen das ersten Steuerelement 444, um dieses in einer unteren Position vorzuspannen, wobei sich der erste Träger-Arm 478 in Bezug auf den ersten Träger-Schenkel 468 in einer geschlossenen Position befindet (Fig. 6 und 7). Das Träger-Schenkelteil 480 mit dem Tragrand 490 befindet sich in geschlossener Position, so dass sich die Aufnahme 40.1 des Trägers 41 entsprechend in geschlossenem Zustand befindet. Das Träger-Schenkelteil 480 nimmt zu dem Träger-Schenkelteil 470 einen festen Abstand ein, so dass zwischen den Tragrändern 472, 490 bzw. den Randausnehmungen 474, 492 keine aktive Klemmkraft, d. h. keine zum Halten wirksame Rückstellkraft zwischen den genannten Teilen erzeugt wird. Beim Aufschwenken des Träger-Schenkelteils 480 wird das Geflügelbein 182 schlagartig klemmfrei, d. h. frei von jeglicher Klemmanlage bzw. Klemmung.

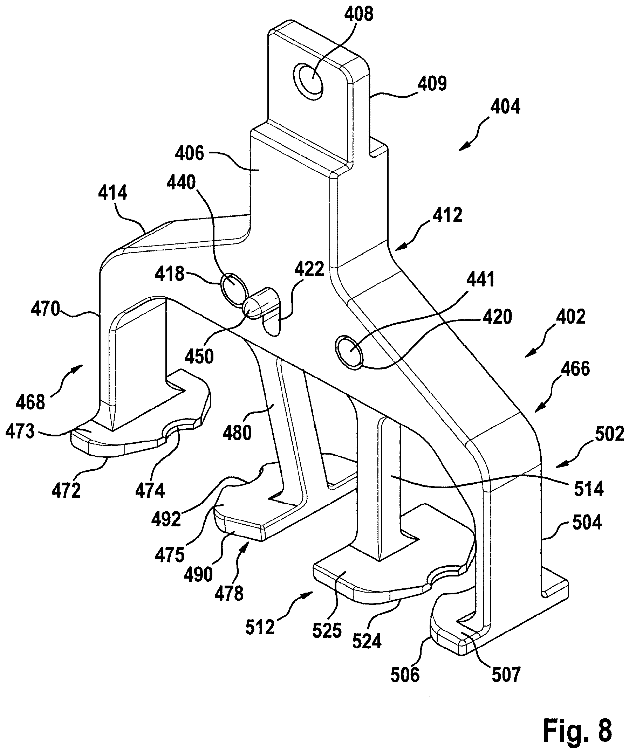

Wenn sich der Steuervorsprung 450 in einer tieferen Position als der Bolzen (Schwenkachse 440) befindet, wird das Schwenken des ersten Träger-Arms 478 nach innen durch das erste Steuerelement 444 verhindert, das den Raum in dem unteren Hohlraum 434 neben dem unteren Abschnitt des Kopfes 482 besetzt. Um den ersten Arm 478 von der geschlossenen Position (Fig. 6 und 7) in eine offene Position (Fig. 8-9 und 11-12) zu schwenken, wird der untere Abschnitt des Kopfes 482 in den Hohlraum 434 bewegt. Gegen Kompression der ersten Vorspanneinrichtung 452 ist der Steuervorsprung 450 in eine höhere Position als der Bolzen (Schwenkachse 440) versetzbar. Dadurch bewegt sich der Kopf 448 nach oben in den ersten rohrförmigen Hohlraum 436. Bei dieser Aufwärtsbewegung des ersten Steuerelements 444 untergreift der Absatz 451 die zweite Lasche 488 und der Steuerkörper 450 untergreift die erste Lasche 486, wobei der erste Träger-Arm 478 um die Schwenkachse 440 schwenkt, wodurch sich der Abstand zwischen den vorspringenden Tragrändern 472, 490 vergrößert. Zweckmäßig wird der Kopf 482 mit einer nach innen weisenden Vorspannfläche 494 z. B. aus rostfreiem Stahl versehen, um Verschleiß zwischen dem ersten Steuerelement 444 und dem ersten Träger-Arm 478 entgegenzuwirken.

Ein zweites Steuerelement 454, nämlich ein zweiter Betätigungsbolzen umfasst ein durch einen stabförmigen Körper gebildetes Stabteil mit an einem ersten Ende 456 einem Lagerkopf 458 und mit an einem zweiten Ende einem Steuerfuß, gebildet durch einen Steuerkörper 460 in Form eines Steuervorsprungs sowie einen Absatz 461. Das Stabteil 456 durchgreift den Raum zwischen den ersten und zweiten Laschen 520, 522, wobei der Steuerkörper 460 und der Absatz 461 unter die Laschen 520, 522 greifen. Der Steuerkörper 460 ragt von dem unteren Hohlraum 435 durch ein Langloch 434 in der zweiten Gehäuseseite 426 nach außen. Eine längliche Ausnehmung (nicht dargestellt), die an der Innenwand des unteren Hohlraums 435 dem Langloch 434 gegenüberliegend ausgebildet ist, nimmt den Absatz 461 auf. Die Ausbildung entspricht der Ausnehmung 423, die dem Langloch 422 gegenüberliegt. Eine zweite Vorspanneinrichtung 462, die eine Schraubenfeder umfasst und zwischen der Oberseite des Lagerkopfes 458 und dem oberen Ende des zweiten rohrförmigen Hohlraums 438 angeordnet ist, sorgt für eine nach unten wirksame Vorspannkraft gegen das zweite Steuerelement 454, um dieses in einer unteren Position vorzuspannen, wobei sich der zweite Träger-Arm 512 in Bezug auf den zweiten Träger-Schenkel 502 in geschlossener Position befindet (Fig. 6-9).

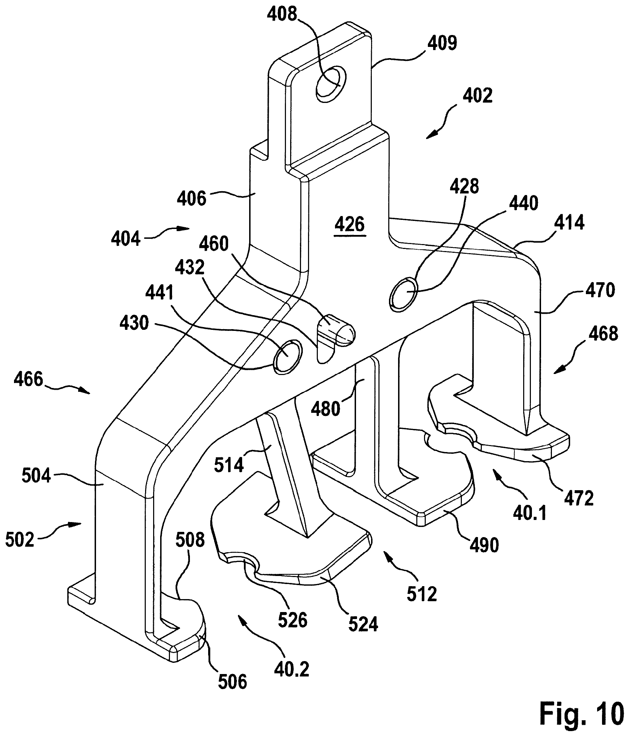

Wenn sich der Steuerkörper 460 in einer tieferen Position als der Bolzen (Schwenkachse 441) befindet, wird das Schwenken des zweiten Träger-Arms 512 nach innen durch das zweite Steuerelement 454 verhindert, das dann in dem unteren Hohlraum 434 den Raum neben dem unteren Abschnitt des Kopfes 516 besetzt. Um den zweiten Träger-Arm 512 von der geschlossenen Position (Fig. 6-9) in eine offene Position (Fig. 10-12) zu schwenken, wird der untere Abschnitt des Kopfes 516 in den Hohlraum 434 bewegt. Gegen Kompression der zweiten Vorspanneinrichtung 462 ist der Steuerkörper 460 in eine höhere Position als der Bolzen (Schwenkachse 441) versetzbar. Dadurch bewegt sich der Lagerkopf 458 nach oben in dem zweiten rohrförmigen Hohlraum 438. Bei dieser Aufwärtsbewegung des zweiten Steuerelements 454 greift der Absatz 461 unter die erste Lasche 520 und der Steuerkörper 460 unter die zweite Lasche 522, wobei der zweite Träger-Arm 512 um die Schwenkachse 441 schwenkt und sich der Abstand zwischen den vorspringenden Tragrändern 506, 524 vergrößert. Zweckmäßig wird der Kopf 516 mit einer nach innen weisenden Vorspannfläche 528 z. B. aus rostfreiem Stahl versehen, um Verschleiß zwischen dem zweiten Steuerelement 454 und dem zweiten Arm 512 entgegenzuwirken. Beim Ausschwenken des Träger-Schenkelteils 514 wird das Geflügelbein 192 schlagartig klemmfrei, d. h. frei von jeglicher Klemmanlage oder Klemmung.

Man erkennt, dass die Steuerelemente 444, 454 zusammen mit den Vorspanneinrichtungen 452, 462 eine in die Trägereinrichtung 404 bzw. in den Gehäusekörper 414 integrierte Träger-Steuereinrichtung 410 bilden. Jeder Träger 41, 42 ist mit eigener steuerbarer Halteeinrichtung 403 bzw. 405 ausgebildet, die einerseits mit dem ersten Halteteil, nämlich dem bewegbaren Träger-Schenkelelement 480, und andererseits mit dem zweiten Halteteil, nämlich dem bewegbaren Träger-Schenkelelement 514 eingerichtet ist. Mit der beispielhaft beschriebenen Einrichtung erreicht man, dass die beiden Halteeinrichtungen 403, 405 unabhängig voneinander steuerbar sind, so dass sich die Träger 41, 42 nacheinander öffnen und schließen lassen.

Eine zweckmäßige Gestaltung besteht darin, dass die einander zugewandten Tragränder 472, 490, 506 und 524 der Tragelemente 473, 475; 507, 525 schmaler sind als gegenüberliegende rückwärtige höhere Ränder der Tragelemente. Insbesondere wird die Fläche an der Unterseite der plattenförmigen Tragelemente 473, 475; 507, 525 derart zurückgenommen, dass sich die Dicke der Tragelemente von einem rückwärtigen Abschnitt zu einem vorderen Abschnitt verringert. Mit dieser Maßnahme wird in besonderem Maß erreicht, dass Greifelemente der Rotations-Übergabeeinrichtungen 60 zum Überlappen in zugehöriger Übergabezone optimal mit den Aufnahmen 40.1 und 40.2 zum Öffnen und Schließen zusammenwirken.

Die ersten und zweiten Steuerelemente 444, 454, die ersten und zweiten Vorspanneinrichtungen 452, 462 bzw. deren Elemente und die Schwenkachsen 440, 441 bildenden Bolzen werden zweckmäßig aus Metall gefertigt, z. B. aus rostfreiem Stahl oder einem anderen gehärteten, korrosionsbeständigen Material.

Im geschlossenen Zustand der Trägereinrichtung 402 (Fig. 6-7 und 13) liegen die Randausnehmungen 474 und 492 des ersten Träger-Schenkels 468 und des ersten Träger-Arms 478 einander gegenüber, wobei sie eine eine Einfassung bildende Öffnung zur Aufnahme eines Teils des linken Geflügelbeins 182 zwischen dem linken Lauf oder Fußgelenk 188 und dem linken Knie 186 des Geflügelkörpers 152 bilden. Die Einfassung ist kleiner als das linke Fußgelenk 188 in der entsprechenden Dimension, so dass die Trägereinrichtung 402 das linke Geflügelbein 182 halten kann. Auch die Randausnehmungen 508 und 526 des zweiten Träger-Schenkels 502 und des zweiten Träger-Arms 512 liegen einander gegenüber, so dass sie eine eine Einfassung bildende Öffnung zur Aufnahme eines Teils des rechten Geflügelbeins 192 zwischen dem rechten Lauf oder Fußgelenk 198 und dem rechten Knie 196 bilden. Die Einfassung ist kleiner als das rechte Geflügelgelenk 198 in der entsprechenden Dimension, so dass die Trägereinrichtung 402 das rechte Geflügelbein 192 halten kann. Dennoch wird im Ausführungsbeispiel im Zustand der geschlossenen Aufnahmen 40.1 und 40.2 infolge der genannten festen Distanz zwischen den einander gegenüberliegenden Randausnehmungen keine aktive Klemmkraft (elastische Klemmung mit Rückstellkraft) ausgeübt. Die genannten Einfassungen, gebildet durch die genannten Träger-Schenkelteile und Tragränder, sind die einzigen Teile, zwischen denen die Geflügelbeine gehalten werden. Man erreicht dadurch in den gesteuert geöffneten Aufnahmen 40.1 und 40.2 ein klemmfreies Einsetzen und eine klemmfreie Entnahme der Geflügelbeine.

In der Zeichnung werden die Trägereinrichtungen 402 beim Transportieren der Geflügelkörper 152 mit vor dem rechten Geflügelbein 192 vorauslaufendem linken Geflügelbein 182 dargestellt. Je nach gewünschter Ausrichtung der Geflügelkörper 152 kann jedoch das Paar des ersten Träger-Schenkels 468 und des ersten Träger-Arms 478 auch das rechte Geflügelbein 192 erfassen, und das Paar des zweiten Träger-Schenkels 502 und des zweiten Träger-Arms 512 kann das linke Geflügelbein182 erfassen. In jedem Fall werden die Geflügelkörper 152 lateral transportiert, d. h. mit in Förderrichtung vorauslaufendem linken oder rechten Geflügelbein.

Fig. 13 zeigt eine abgeänderte Ausführungsform der Trägereinrichtung 402, nämlich eine Trägereinrichtung 532 mit einem oberen Abschnitt 404, der mit einem Hals 406 ausgebildet ist, der sich zwischen einem ersten Ende am unteren Abschnitt 412 zu einem zweiten Ende mit geändertem Anschlussteil 409 erstreckt. Das zweite Ende umfasst ein Durchgangsloch 538 für die Verbindung der Trägereinrichtung 532 mit der Hauptfördereinrichtung 302. Das Durchgangsloch 538 durchgreift den Hals 406 im Längsabstand zwischen lateralen Randseiten. Ein Anschlusskörper 318 verbindet die Trägereinrichtung 532 mit der Hauptfördereinrichtung 302. Der Anschlusskörper 318 ist mit nach unten gerichteten ersten und zweiten Schenkel 320, 324 U-förmig. Erste und zweite Lagerlöcher 322, 326 nehmen einen Lagerbolzen 328 auf, so dass die Trägereinrichtung 532 um eine parallel zur Förderlinie 20 gerichtete horizontale Achse schwenken kann.

Gemäß einer Ausführungsform der Paare von Tragelementen 473, 475; 507, 525 gelangen die Füße der Träger-Arme 478, 512 und Träger-Schenkel 468, 502 in eine Fügeanordnung, sobald sich die Träger-Arme und Träger-Schenkel in geschlossener Position befinden. Im Zustand der geschlossenen Gliedmaße-Aufnahmen 40.1 und 40.2 ist jeweils eine allseitig geschlossene Halteeinfassung ausgebildet. Dadurch wird Scherkräften, die auf den Geflügelkörper 152 beim Entfernen der linken und rechten Geflügelbeine 182, 192 aus der Greifeinrichtung 466 einwirken, entgegengewirkt.

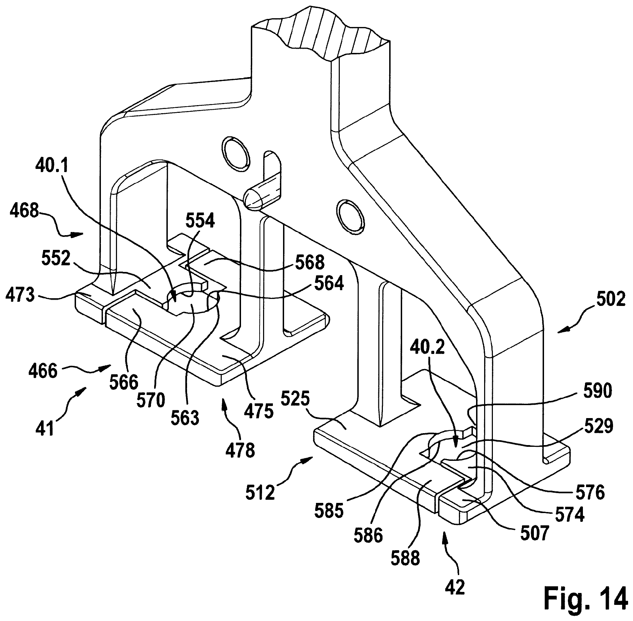

Wie aus Fig. 14 ersichtlich, umfasst ein am zweiten Ende des ersten Träger-Schenkels 468 ausgebildetes Tragelement 473 ein nach innen vorspringendes Randteil 552, dessen nach innen gewandter Rand eine halbmondförmige Ausnehmung 554 ausbildet. Ein am zweiten Ende des ersten Träger-Arms 478 ausgebildetes Tragelement 475 umfasst ein Paar beabstandeter, nach außen vorspringender erster und zweiter Vorsprünge 566, 568, die zwischen sich eine Ausnehmung 570 zum Aufnehmen des vorspringenden Randteils 552 bilden. Ein hinterer Stegrand 563 zwischen den Vorsprüngen 566, 568 weist eine halbmondförmige Ausnehmung 564 auf. Die Ausnehmungen 554, 564 liegen mit Distanz einander gegenüber und bilden zusammen mit den ersten und zweiten Vorsprüngen 566, 568 eine vollständig geschlossene Einfassung zum Aufnehmen des linken Geflügelbeins 182 an einem Teil zwischen dem linken Fußgelenk 188 und dem linken Knie 186.

Ein am zweiten Ende des zweiten Träger-Schenkels 502 ausgebildetes Tragelement 507 umfasst ein nach innen vorspringendes Randteil 574, dessen nach innen gewandter Rand eine halbmondförmige Ausnehmung 576 bildet. Ein am zweiten Ende des zweiten Träger-Arms 512 ausgebildetes Tragelement 525 umfasst ein Paar beabstandeter, nach außen vorspringender erster und zweiter Vorsprünge 588, 590, die zwischen sich eine Ausnehmung 529 zum Aufnehmen des vorspringenden Randteils 574 bilden. Ein hinterer Stegrand 585 zwischen den Vorsprüngen 588, 590 weist eine halbmondförmige Ausnehmung 586 auf. Wie an dem ersten Träger 41 liegen die Ausnehmungen 576, 586 auch bei dem zweiten Träger 42 mit Distanz einander gegenüber und bilden zusammen mit den ersten und zweiten Vorsprüngen 588, 590 eine vollständig geschlossene Einfassung zum Halten eines Teils des rechten Geflügelbeins 192 zwischen dem rechten Fußgelenk 198 und dem rechten Knie 196.

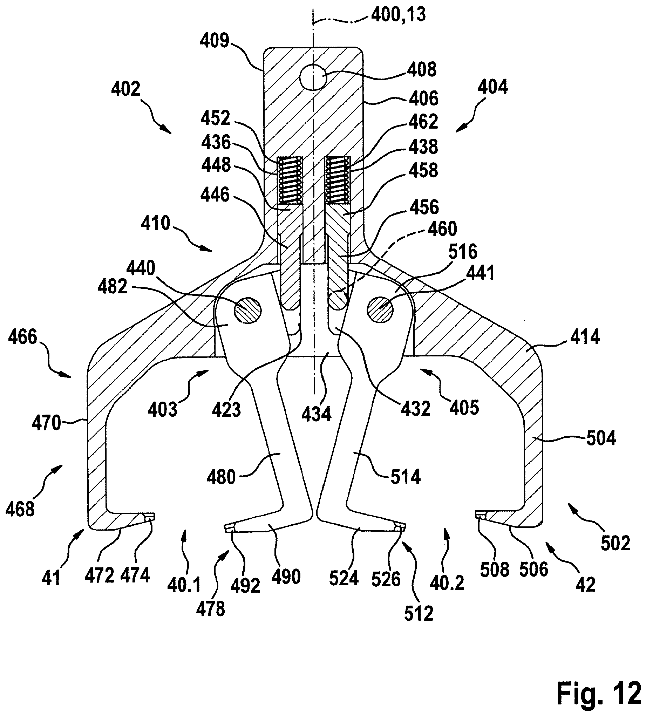

Man erkennt, dass die Trägereinrichtung 402 bzw. 532 bezüglich einer vertikalen Mittenebene 400 im Wesentlichen spiegelbildlich ausgebildet ist (Fig. 7, 12). Die im Paar angeordneten steuerbaren Halteeinrichtungen 403, 405 sind Bestandteil der Trägereinrichtung 402, 532. Jede Träger-Steuereinrichtung 410 umfasst das Steuerelement 444, 454 in Verbindung mit der zugehörigen Vorspanneinrichtung 436, 438. Jedes Steuerelement 444, 454 ist durch das Stabteil 446, 456 mit dem Steuerfuß 450, 451; 460, 461 gebildet. Die Steuerfüße weisen die Steuerkörper 450, 460 auf, die an den gegenüberliegenden Längsseiten 416, 426 der Trägereinrichtung 402, 532 hervorstehen und Steuereinrichtungen 540, 545 mit Steuergliedern, zum Beispiel Führungs-/Schrägbahnen 542, 546, der Hauptfördereinrichtung 302 zugeordnet sind. Insoweit sind die Steuerfüße und die ihre Absätze 451, 461 führenden Längsausnehmungen im Wesentlichen punktsymmetrisch zur Mittenachse 13 der Trägereinrichtung 402, 532 ausgebildet und angeordnet.

Die Träger-Schenkelteile 480, 514 bzw. die Träger-Schwenkarme 478, 512 können derart eingerichtet und angeordnet werden, dass sie im geöffneten Zustand der Aufnahme 40.1, 40.2 weiter aufschwenken können. Dies erreicht man zum Beispiel mit ausreichender Distanzierung der Schwenkachsen 440, 441 und ausreichender Größe des Hohlraums 434 in der entsprechenden Abstandsdimension.

Im Folgenden wird die Rotations-Übergabeeinrichtung 602 des Übergabepaares 601 der Übergabestation 60 anhand der ersten Rotations-Übergabeeinrichtung 602 der ersten Übergabestation 61 beschrieben.

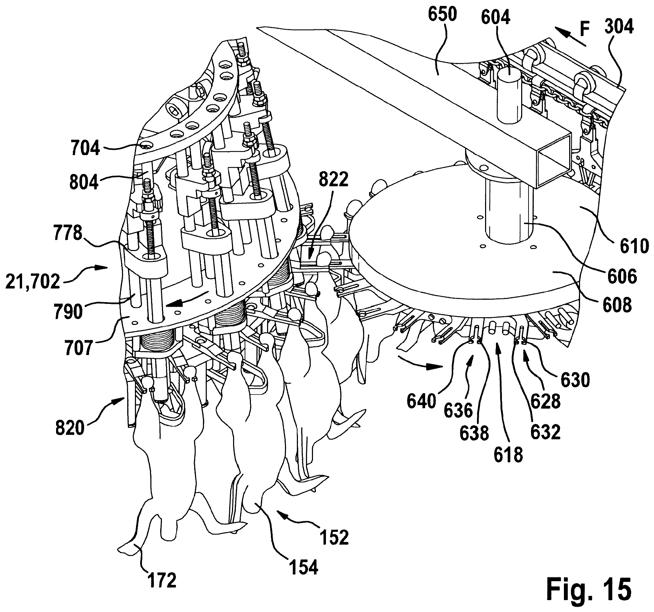

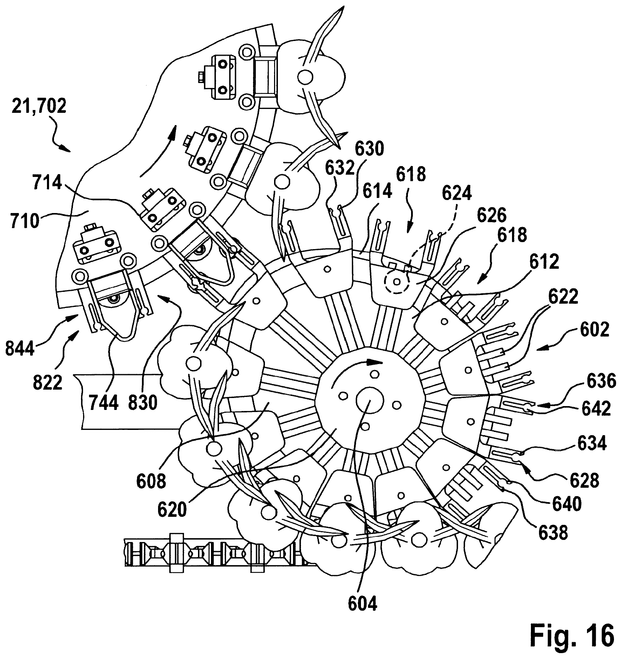

Die erste Rotations-Übergabeeinrichtung 602 weist eine Mehrzahl Greifeinrichtungen 618 auf, die die Geflügelkörper 152 aufnehmen, sobald diese von der Trägereinrichtung 402 freigegeben werden. Wie insbesondere aus Fig. 15 und 16 ersichtlich, umfasst die Greifeinrichtung 618 eine gestellfeste obere Nockenscheibe 608, unter der die Greifeinrichtungen 618 mittels Drehung einer vertikal ausgerichteten Antriebswelle 604 entlang einer Bahn umlaufend bewegbar angeordnet sind. Die Nockenscheibe 608 weist einen außermittig gelagerten, von der Kreisform abweichenden Scheibenkörper auf, der mittels eines Nockenhalters 606 an einem über diesem liegenden Tragrahmen 650 oder auch in anderer Weise an einem anderen Tragrahmen oder Gestell befestigt und festgesetzt ist. Der Nockenhalter 608 ist mit der Oberseite 610 der Nockenschreibe 608 außermittig mit dieser verbunden. Die Antriebswelle 604 durchsetzt den Tragrahmen 650 und den Nockenhalter 608 und ragt an der Unterseite 612 der Nockenscheibe 608 hervor.

Eine Ausführungsform besteht auch darin, dass die Antriebswelle unterhalb der Nockenscheibe 608 an einem Rahmen oder Gestell gelagert ist und sich in Vertikalausrichtung bis zur Unterseite der Nockenscheibe 608 erstreckt. Eine Ausführungsform besteht darin, dass ein mit der Hauptfördereinrichtung 302 verbundenes Getriebe vorgesehen ist, an das die Antriebswelle 604 zum Antrieb angekoppelt ist. Im Ausführungsbeispiel ist die Anordnung derart, dass die Greifeinrichtungen 618 der Rotations-Übergabeeinrichtung 602 von oben gesehen links herum gegen den Uhrzeigersinn bewegt werden bzw. drehen. Die Anordnung kann auch derart sein, dass der Drehantrieb der Antriebswelle 604 als von der Hauptfördereinrichtung 302 unabhängiges Antriebsmittel mittels eines Motors, zum Beispiel eines Servomotors eingerichtet wird.

Jede Greifeinrichtung 618 weist ein Paar Greifarme auf mit beabstandeten ersten und zweiten Greifarmen 628, 636. Jeder Greifarm 628, 636 weist eine Halteöffnung 634, 642 auf, die jeweils zum Aufnehmen eines Geflügelbeins 182, 192 des Geflügelkörpers 152 ausgebildet sind. Gemäß dargestelltem Ausführungsbeispiel ist das Paar der Greifarme 628, 636 an einem Schiebekörper 626 befestigt, von dem sich die beiden Greifarme 628, 636 nach außen erstrecken. Jeder Schieberkörper 626 ist an der Unterseite 612 der Nockenscheibe 608 angeordnet. Ein Lagerelement 624, das an der Oberseite des Schiebekörpers 626 angeordnet ist, fasst gleitbewegbar in ein Führungsmittel, nämlich in eine Führungsbahn 614 ein, die an der Unterseite 612 der Nockenscheibe 608 ausgebildet ist.

Unterhalb der Nockenplatte 608 ist ein Kranz von Paaren radialer Gleitspeichen 622 angeordnet, die paarweise jeweils einen Schiebekörper 626 der Greifeinrichtung 618 gleitbewegbar aufnehmen bzw. führen. Die Gleitspeichen 622 sind fest an einer Grundplatte 620 befestigt, mittels der sie drehfest mit der Antriebswelle 604 verbunden sind. Die Gleitspeichen 622 erstrecken sich von der Grundplatte 620 radial nach außen, sie durchfassen jeweils den Schiebekörper 626 und enden im Bereich des äußeren Randes der Nockenscheibe 608.

Der erste Greifarm 628 weist nebeneinander liegende erste und zweite Greiffinger 630, 632 auf, die zwischen sich die Halteöffnung 634 bilden. Zudem weist der zweite Greifarm 636 nebeneinander liegende erste und zweite Greiffinger 638, 640 auf, die die andere Halteöffnung 642 bilden. Die Greiffinger 630, 632; 638, 640 werden vorteilhaft aus flexiblem oder nachgiebigem Material, z. B. aus verstärktem Kunststoff, Nylon, Polyoxymethylen und Polyethylen insbesondere hoher Dichte hergestellt. Sie nehmen jeweils ein Geflügelbein 192 gleitend zwischen sich auf.

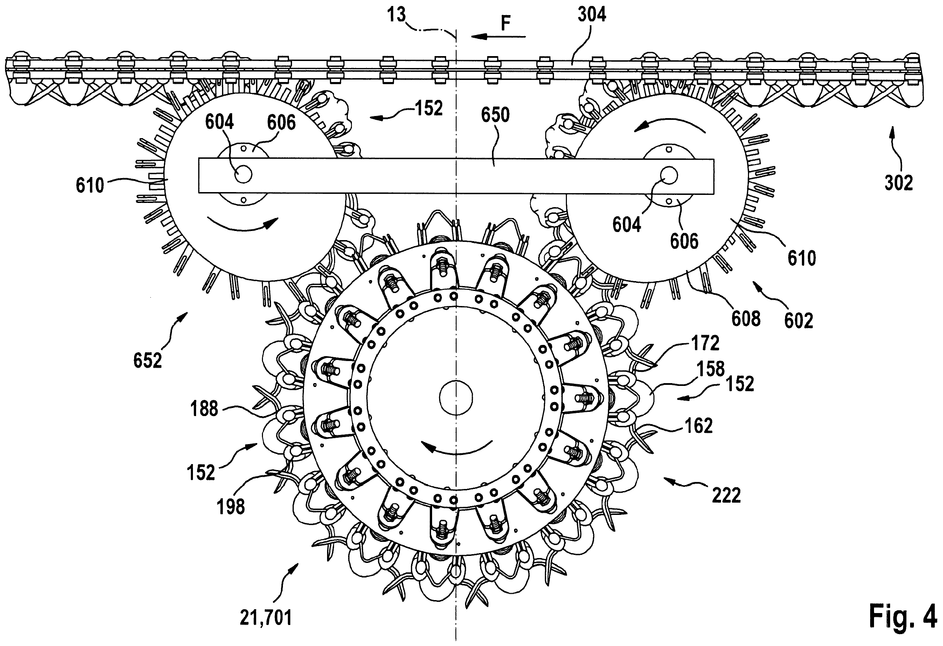

In der Draufsicht gemäß Fig. 4 dreht sich die Antriebswelle 604 gegen den Uhrzeigersinn, wobei die Trägereinrichtungen 402 entlang der Förderbahn 304 bzw. der Hauptförderlinie 20 in Förderrichtung F laufen. Wie in Fig. 5 dargestellt, passiert jede Trägereinrichtung 402 die erste Rotations-Übergabeeinrichtung 602, wobei die Geflügelkörper 152 an die Rotations-Übergabeeinrichtung 602 auf tangentialem Weg gelangen. Der Vorgang ist derart, dass der erste Greifarm 628 und der zweite Greifarm 636 einer an die Hauptförderlinie 20 heranbewegten Greifeinrichtung 618 auf dem tangentialen Weg durch eine Übergabezone laufen, wobei sie mit dem Geflügelkörper 152 der Trägereinrichtung 402, die auf die Greifeinrichtung 618 zuläuft, zusammenwirken.

Sobald der erste Schenkel 468 der betrachteten Trägereinrichtung 402 in die Übergabezone gelangt, wird mittels des Antriebs durch die Antriebswelle 604 der erste Greifarm 628 der Greifeinrichtung 618 in eine Eingriffsposition mit dem linken Geflügelbein 182 gedreht, und zwar an einer Stelle bzw. in einem Bereich unterhalb der vorspringenden Tragränder 472, 490. Das linke Geflügelbein 182 gelangt bei diesem Durchlauf zwischen die ersten und zweiten Greiffinger 630, 632 des ersten Greifarms 628.

Zweckmäßig wird eine nicht dargestellte Führungseinrichtung, z. B. eine Leitschiene oder -stange vorgesehen, die die Führung des linken Geflügelbeins 182 von der Trägereinrichtung 402 zu dem ersten Greifarm 628 unterstützt. Sobald sich das voreilende linke Geflügelbein 182 in der Halteöffnung 634 befindet, wird der Steuervorsprung 450 des Steuerelements 444 gehoben. Damit geht einher, dass das Vorspannelement der Vorspanneinrichtung 452 komprimiert wird, so dass der vorspringende Tragrand 490 von dem vorspringenden Tragrand 472 wegbewegt wird. Dadurch wird das linke Geflügelbein 182 klemmfrei losgelassen, die Halteverbindung an der Trägereinrichtung 402 also vollständig gelöst und auf die Greifeinrichtung 618 übertragen.

Wie in Fig. 5 dargestellt, besteht eine Ausführungsform darin, dass die Hauptfördereinrichtung 302 die Steuer-Führungseinrichtung 545 aufweist, die mit einer Nockenbahn ausgestattet ist. Die Nockenbahn weist ein Steuerglied, nämlich einen Schrägabschnitt 542 auf. Der Steuerkörper 450 läuft auf die Nockenbahn auf und wird mittels des Schrägabschnitts 542 gehoben.

Sobald der erste Träger-Schenkel 468 die genannte Übergabezone verlässt, hält der erste Greifarm 628 das linken Geflügelbein 182 und bewegt es von der Trägereinrichtung 402 weg in Richtung der Kloakenschneideeinrichtung 702. Dabei tritt der zweite Träger-Arm 512 der Trägereinrichtung 402 in die Übergangszone ein. Der mit dem Drehantrieb durch die Antriebsachse 604 weiterbewegte zweite Greifarm 636 greift an dem rechten Geflügelbein 192 an einer Stelle unterhalb der vorspringenden Tragränder 506, 524 an. Dabei läuft das rechte Geflügelbein 192 zwischen den ersten und zweiten Fingern 638, 640 in die Halteöffnung 642 ein. Eine nicht dargestellte Führungseinrichtung, z. B. eine Leitschiene oder -stange kann vorgesehen sein, die die Führung des rechten Geflügelbeins 192 von der Trägereinrichtung 402 zu dem zweiten Greifarm 636 unterstützt. Sobald sich das rechte Geflügelbein 192 in der Halteöffnung 642 befindet, wird der Steuerkörper 460 des zweiten Steuerelements 454 gehoben mit der Folge, dass das zweite Vorspannelement der zugehörigen Vorspanneinrichtung 462 komprimiert wird, so dass der vorspringende Tragrand 524 von dem vorspringenden Tragrand 506 mit dem Ergebnis wegbewegt wird, dass das rechte Geflügelbein 192 nicht mehr von der Trägereinrichtung 402, sondern von der Greifeinrichtung 618 gehalten wird.

Gemäß einer Ausführungsform gelangt der Steuervorsprung 460 in Kontakt mit der zweiten Steuer-Führungseinrichtung 545 der Hauptfördereinrichtung 303, d. h. mit dem Schrägabschnitt 546 einer zweiten Nockenbahn, der den Steuerkörper 460 hebt. Sobald das rechte Geflügelbein 192 die genannte Übergabezone verlässt, nimmt es der zweite Greifarm 636 von der Trägereinrichtung 402 zu der Kloakenschneideeinrichtung 702 mit. Dadurch ist die Übergabe des Geflügelkörpers 152 von der Trägereinrichtung 402 an die Greifeinrichtung 618 abgeschlossen. Die Steuerung ist allgemein derart eingerichtet, dass die Aufnahme 40.1 für das vorauslaufende Geflügelbein 182 nach Maßgabe des Abstandes der Aufnahmen 40.1, 40.2 zeitlich vor der Aufnahme 40.2 geöffnet wird.

Eine nachfolgende benachbarte Greifeinrichtung 618 tritt dann in die Übergabezone ein und nimmt gleichfalls einen Geflügelkörper 152 von der nachfolgenden Trägereinrichtung 402 auf. Die zuvor beschriebenen Schritte wiederholen sich mit neuem Zyklus.

Wie insbesondere aus Fig. 16 ersichtlich, wird jede Greifeinrichtung 618, die einen Geflügelkörper 152 trägt, auf radialem Weg nach außen von der Antriebswelle 604 distanziert. Dies geschieht, während der Kranz der Gleitspeichen 622 mit den Greifeinrichtungen 618 mittels der Antriebswelle 604 gedreht wird und die Greifeinrichtungen 618 entlang der Führungsbahn 614 zur angrenzenden Bearbeitungseinrichtung 21, 702 bewegt werden.

Mittels des Kranzes der Gleitspeichen 622, der Nockenplatte 608 mit der Führungsbahn 614 und den darin eingreifenden Gleitelementen 626 ist der Trennabstand der Greifeinrichtungen 618 in Abhängigkeit von der Drehposition und -bewegung der Rotations-Übergabeeinrichtung 602 steuerbar eingerichtet. Das heißt, dass sich der Abstand zwischen nebeneinander liegenden Greifeinrichtungen 618 auf dem Weg von der Trägereinrichtung 402 zu der Bearbeitungseinrichtung 21, 702 vergrößert. Dadurch wird jeweils der Abstand zwischen benachbarten aufeinanderfolgenden Greifeinrichtungen 618 und entsprechend der Abstand zwischen benachbarten aufeinanderfolgenden Geflügelkörpern 152 vergrößert. Es wird ein gewünschter größter Abstand zwischen den Geflügelkörpern 152 derart eingerichtet, dass dieser Übergabeabstand zu dem Übernahmeabstand der angrenzenden Bearbeitungseinrichtung 21, 702 passt. Der Übernahmeabstand richtet sich nach dem Abstand an der Bearbeitungseinrichtung 21, 702, der zum Bearbeiten des Geflügelkörpers 152 erforderlich ist. Praktisch lässt sich jeder beliebige Abstand einstellen. Insbesondere kann der Abstand 8, 10 oder 12 Zoll betragen.

Wie in Fig. 15 und 16 dargestellt, übergibt die erste Übergabeeinrichtung 602 den Geflügelkörper 152 von jeder Greifeinrichtung 618 an eine korrespondierende Bearbeitungs-Halteeinrichtung 822 auf der drehbaren Kloakenschneideeinrichtung 702. Die Kloakenschneideeinrichtung 702 weist eine Mehrzahl von Bearbeitungseinheiten, nämlich im Ausführungsbeispiel Schneideinrichtungen 720 auf, die jeweils ein Loch in die Kloake 156 des Geflügelkörpers 152 einbringen. Dieses Loch wird geschnitten, um den Geflügelkörper 152 in der nachfolgenden Bearbeitungseinrichtung 21, im Ausführungsbeispiel in einer Öffnungseinrichtung 224, zu bearbeiten.

Gemäß Ausführungsbeispiel ist die Kloakenschneideeinrichtung 702 mit einem Bearbeitungs-Haltemittel 820 ausgestattet. Dieses ist durch eine Reihe der Bearbeitungs-Halteeinrichtungen 822 gebildet und derart eingerichtet, dass der Geflügelkörper 152 unter bzw. vor einer zugeordneten Schneideinrichtung 720 positioniert wird, während sich die Kloakenschneideeinrichtung 702, die durch eine Art Karussell gebildet ist, um eine vertikale Karussellachse bzw. eine die Karussellanordnung drehende (nicht dargestellte) Antriebswelle dreht.

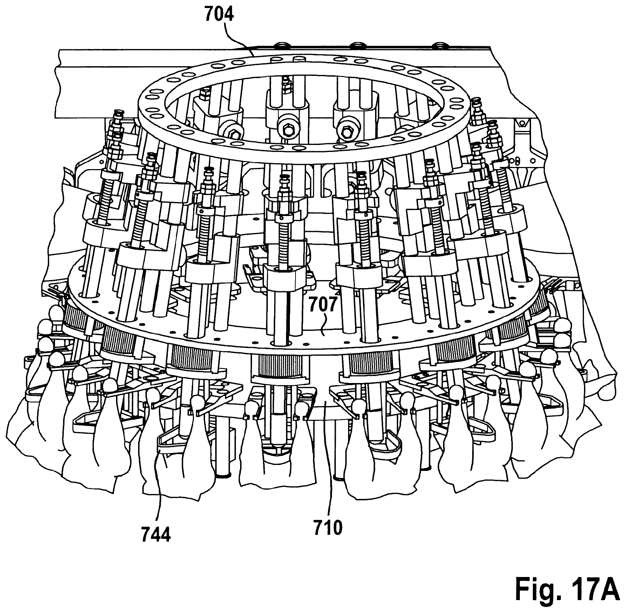

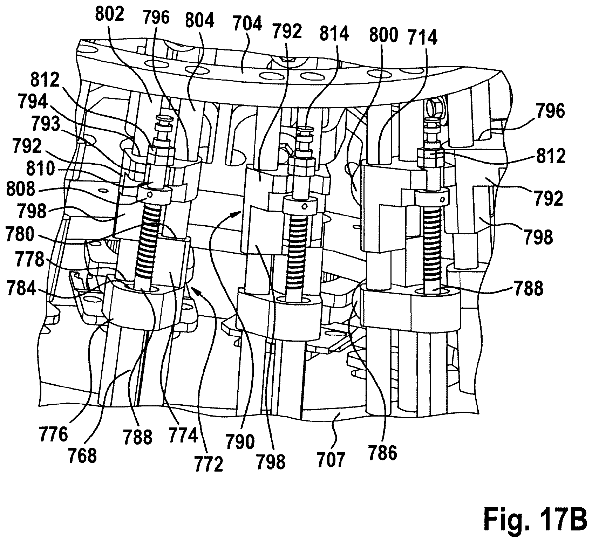

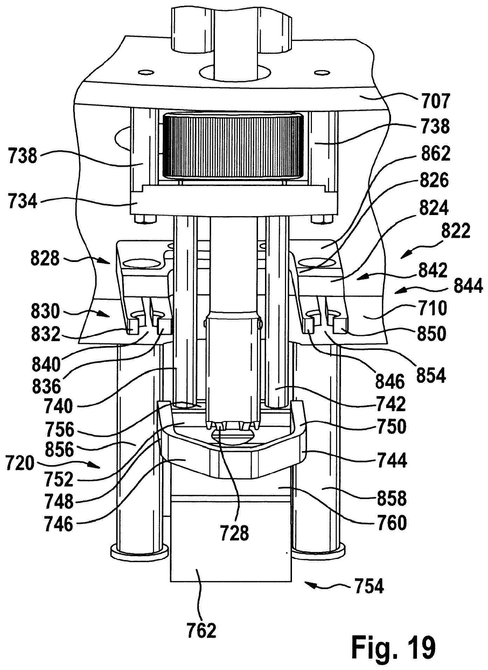

Wie insbesondere anhand der Fig. 17A und 18-26 dargestellt, weist die Bearbeitungs-Halteeinrichtung 822 eine Greifeinrichtung 824 auf, die relativ zu einer kreisförmigen Bodenplatte 710 in Vertikalrichtung bewegbar angeordnet ist. Wie insbesondere aus Fig. 19 ersichtlich, weist die Greifeinrichtung 824 einen im Wesentlichen U-förmigen Körper 826 mit einem ersten Ende 828 und einem zweiten Ende 842 auf. An dem ersten Ende ist ein erstes handartiges Greifelement 830 ausgebildet, das sich an dem Ende 828 erstreckt und erste und zweite Finger 832, 836 aufweist, die eine Greiföffnung 840 bilden. Das zweite Ende 842 ist mit einem zweiten handartigen Greifelement 844 ausgebildet, das sich an dem zweiten Ende erstreckt und nebeneinanderliegende erste und zweite Greiffinger 846, 850 aufweist, die eine Greiföffnung 854 ausbilden. Die Bodenplatte 710, ein unterer Ring 707 und der obere Ring 704 sind Bestandteile eines Drehgestells der Bearbeitungseinrichtung 21, 702.

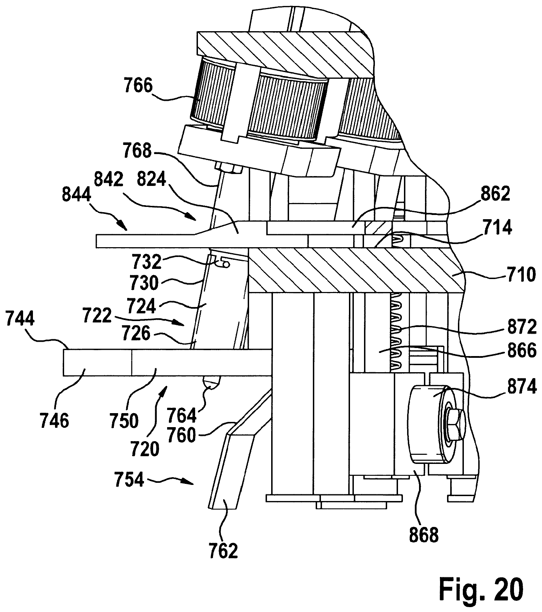

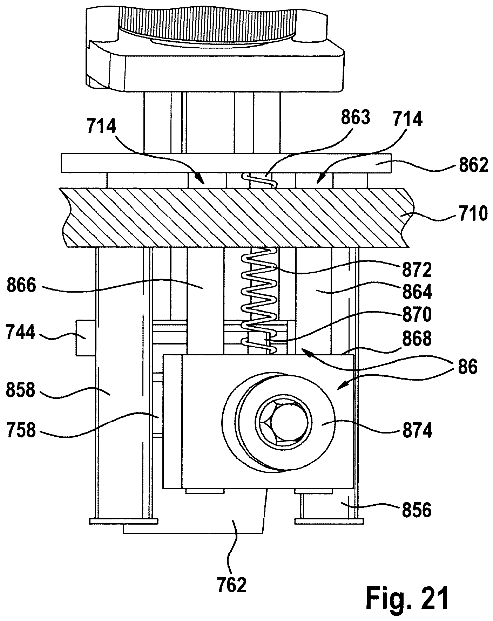

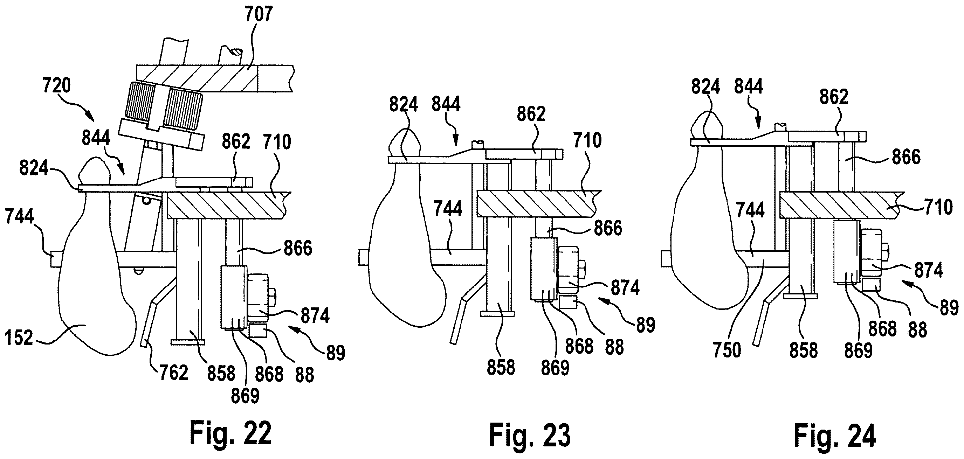

An dem U-Körper 826 sind zwei Säulen oder Stäbe 856, 858 angeordnet, die nach unten von dem U-Körper 826 abstehen und in der Bodenplatte 710 gleitend aufgenommen werden. Mittels dieser Gleitanordnung der Greifelemente 830, 844 werden diese in der Nähe des äußeren Randes der Bodenplatte 710 positioniert bzw. ausgerichtet. Wie insbesondere aus Fig. 20 und 21 ersichtlich, ist an der Rückseite des U-Körpers 826 eine Radhaltereinrichtung 862 angeordnet, die erste und zweite mit einer Vorspanneinrichtung 86 zusammenwirkende Stäbe 864, 866 lagert, die sich nebeneinander erstrecken, an dem U-Körper 826 fest sind und nach unten hervorstehen. Die Stäbe 864, 866 greifen durch eine Halteöffnung 714 unter die Bodenplatte 710. Die Stäbe 864, 866 nehmen ein Radgleitklotz 868 auf, wobei der Radgleitklotz 868 unter der Radhaltereinrichtung 862 positioniert ist. Ein Vorspannelement der Vorspanneinrichtung 86 zum Beispiel eine Feder 872, wird zwischen der Radhaltereinrichtung 862 und dem Radgleitklotz 868 mittels eines zentral angeordneten Haltestiftes 863 gehalten, der an der Radhaltereinrichtung 862 nach unten hervorsteht, und mittels eines zentral angeordneten Haltestiftes 870, der an dem Radgleitklotz 868 nach oben hervorsteht. Ein Rad 874 ist an der nach Innen gerichteten Seitenfläche des Radgleitklotzes 868 angebracht. Wie aus Fig. 22 bis 24 ersichtlich, wird das Rad 874 beim Eingriff in eine nur schematisch dargestellte Halteführungseinrichtung 88 mit Hubbewegung vertikal gehoben und gesenkt. Die Halteführungseinrichtung 88 weist z. B. eine Führungs- oder Nockenbahn insbesondere mit Rampen auf, auf der die Rolle oder das Rad 874 läuft. Die Vorspanneinrichtung 86 bildet in Verbindung mit einem vorgespannten Führungselement 869 eine selbsttätige Puffereinrichtung. Die Halteführungseinrichtung 88 bildet in Verbindung mit dem Führungselement 869 und der Puffereinrichtung eine Halte-Steuereinrichtung 89.

Wie insbesondere in Fig. 19 und 20 ersichtlich, wird die Schneideinrichtung 720 positioniert, um in den Geflügelkörper 152 durch die Kloake 156 unter einem Winkel einzutreten. Im Wesentlichen umfasst die Schneideinrichtung 720 einen Schneidkopf 722, der einen Schenkel-Haltering oder -Bügel 744 durchquert. Der Schenkel-Haltebügel 744 ist unterhalb eines Rahmenringes 707 mittels eines Halters 734 angeordnet. Der untere Rahmenring 707 bildet eine untere Stützeinrichtung für jede Schneideinrichtung 720, wobei jeder Schneidkopf 722 zwischen den Greifelementen 830, 844 der Greifeinrichtung 824 angeordnet ist. Der Halter 734 ist an einer nach außen vorspringenden Seite des Bodenrings 707 angeordnet bzw. damit verbunden und davon mit Distanzbuchsen 738 beabstandet. Der Schenkel-Haltebügel 744 ist unterhalb des Halters 734 gelagert und mit dem Halter 734 mit nebeneinander angeordneten ersten und zweiten Schenkelbügelstäben oder -säulen 740, 742 verbunden. Der Schenkel-Haltebügel 744 umfasst einen Rückensteg 752, der mit den Schenkelbügelstäben 740, 742 verbunden ist. Erste und zweite Seiten 748, 750 des Schenkel-Haltebügels 744 sind mit dem Steg 752 fest verbunden. Ein vorderer Stegabschnitt 746 verbindet die ersten und zweiten Seiten 748, 750. Eine Rückenplatte 754 zum Halten des Geflügelkörpers 152 erstreckt sich nach unten und nach außen von dem Schenkel-Haltebügel 744. Die Rückenplatte 754 weist einen oberen Abschnitt 756 auf, der mit der Oberseite des Rückenstegs 752 verbunden ist, und einen Rückenabschnitt 750, der sich von dem oberen Abschnitt 756 nach unten erstreckt. Ein vorderer Abschnitt 760 erstreckt sich unterhalb des Rückenstegs 752 nach unten und nach außen, und ein nach unten gerichteter Abschnitt 762 erstreckt sich unterhalb des Vorderabschnitts 760 nach unten und nach außen, um den oberen Teil des Rückenendes des Geflügelkörpers 152 unterhalb der Kloake 156 zu stützen. Die Rückenplatte 754 unterstützt die richtige Ausrichtung des Geflügelkörpers 152 zu der Schneideinrichtung 720. Der Schenkel-Haltebügel 744 hintergreift den Geflügelkörper 152 zwischen seinen Oberschenkeln.

Die Schneideinrichtung 720 umfasst einen Schneidkopf 722, der mit einer Antriebseinrichtung verbunden ist. Der Schneidkopf 722 weist einen tubusförmigen Körper 724 mit einer Mehrzahl von Zähnen 728 an einem ersten Ende 726 und mit einer L-förmigen Aussparung 732 an einem gegenüberliegenden zweiten Ende 730 auf. Der Schneidkopf 722 ist mit einer Welle 768 verbunden, die in einem extern angetriebenen Lager 766 aufgenommen wird. Das Lager 766 befindet sich zwischen dem unteren Rahmenring 707 und dem Halter 734 und hält die Welle 768. Das Lager 766 bildet einen Drehantrieb für die Welle 768. Ein Paar Indexstifte, die am unteren Ende der Welle 768 seitlich hervorstehen, werden in der L-förmigen Aussparung 732 aufgenommen, um den Schneidkopf 722 an der Welle 768 zu befestigen. Eine Düse 764, die unterhalb des ersten Endes 726 angeordnet ist, ist mit einem unteren Ende eines Rohres 788 verbunden, das sich durch den Schneidkopf 722 und die Welle 768 nach oben zu einem Anschlussteil 814 am oberen Ende des Rohres 788 erstreckt. Das Anschlussteil 814 ist mit einer Vakuumquelle zum Lokalisieren der Kloake 156 und einer Fluidquelle (nicht dargestellt) zum Zuführen von Fluid an die Düse 764 zum Reinigungs-Spülen des Schneidkopfes 722 verbunden.

Erste und zweite Gleitführungen 790, 772 werden gleitbewegbar auf nebeneinanderliegenden ersten und zweiten Trägern 802, 804 wie Säulen zum Tragen der Welle 768 und des Rohres 788 aufgenommen. Die ersten und zweiten Träger 802, 804 erstrecken sich zwischen einem oberen Rahmenring 704 und dem unteren Ring 707. Die Träger 802, 804 erstrecken sich nach oben und nach innen von dem unteren Rahmenring 707 zu dem oberen Rahmenring 704 mit einem Winkel, unter dem der Schneidkopf 722 in die Kloake 156 eindringen kann. Der oberen Rahmenring 704 und der untere Rahmenring 707 sind zum Drehen der Anordnung mit einer nicht dargestellten zentralen Welle verbunden. Allgemein bilden die Rahmen- oder Gestellringe 704, 707 mit den Trägern 802, 804 oder eine andere Tragkonstruktion eine Rahmen- oder Gestelleinrichtung, an der die Bearbeitungs-Halteeinrichtungen 822 sowie die Bearbeitungswerkzeuge, im Beispiel die Schneidköpfe 722 sowie die Düse 764, mittels zugeordneter Steuereinrichtung höhenverstellbar bzw. positionierbar angeordnet sind. Die Steuereinrichtung für die Bearbeitungs-Halteeinrichtungen 822 umfasst die beschriebenen Steuerteile, nämlich den gesteuerten Radhalter 862 mit den zugehörigen genannten Teilen. Die Steuereinrichtungen für die Bearbeitungswerkzeuge werden nachstehend näher beschrieben.

Die zweite Gleitführung 772 ist unterhalb der ersten Gleitführung 790 angeordnet und umfasst einen oberen Körper 774 und einen unteren Körper 776. Der untere Körper 776 weist ein erstes Durchgangsloch 778 mit einer Buchse auf, die gleitbewegbar auf dem ersten Träger 802 sitzt, sowie ein daneben liegendes zweites Durchgangsloch 780 mit einer Buchse, die gleitbewegbar auf dem zweiten Träger 804 sitzt. Der obere Körper 774 erstreckt sich von dem unteren Körper 776 nach oben um den zweiten Träger 804 und weist eine Buchse auf, die gleitbewegbar auf dem zweiten Träger 804 sitzt. Ein Teil des unteren Körpers 776 steht von den ersten und zweiten Trägern 802, 804 nach außen hervor und weist ein drittes Durchgangsloch 784 auf. Ein Lager innerhalb des dritten Loches 784 ist in einer Linie mit dem darunter angeordneten Lager 766 ausgerichtet, um einen Abschnitt des Rohres 788 aufzunehmen. Die Welle 768 erstreckt sich von dem Lager 766 nach oben mit einem oberen Ende der Welle 768, die dort in das Lager innerhalb des dritten Durchgangsloches 784 eingreift. Ein Rad 786 ist drehbar an einer nach Innen weisenden Seite der zweiten Gleitführung 772 angeordnet. Das Rad 786 greift in eine nicht dargestellte Steuer- oder Nockenfläche ein, die den Schneidkopf 722 nach unten bzw. oben bewegt.

Die erste Gleitführung 790 ist oberhalb der zweiten Gleitführung 772 angeordnet und umfasst einen oberen Körper 792 und einen unteren Körper 798. Der obere Körper 792 bildet ein erstes Durchgangsloch 794 mit einer Buchse, die gleitbewegbar auf dem zweiten Träger 804 sitzt. Der untere Körper 798 erstreckt sich von dem oberen Körper 792 nach unten um den ersten Träger 802 und weist eine Buchse auf, die gleitbewegbar auf dem ersten Träger 802 sitzt. Ein Teil des oberen Körpers 792 ragt von den ersten und zweiten Trägern 802, 804 nach außen hervor und bildet eine nach außen offene Halterung 793. Ein Adapterstück 810, das an einem Führungskörper 808 montiert ist, fasst in die Halterung 793 ein. Der Führungskörper 808 erstreckt sich nach oben in die Halterung 793 und bildet einen Durchgang, der gemeinsam mit dem Lager in dem dritten Durchgangsloch 784 ausgerichtet ist. Eine Kontermutter 812 hält die Anordnung zusammen. Das obere Ende des Rohres 788 erstreckt sich nach oben in den Führungskörper 808, und ein Anschlussteil 814 ragt nach oben von der Kontermutter 812 hervor, um eine Fluidverbindung zwischen dem oberen Ende des Rohres 788 und der Fluidquelle herzustellen. Ein Rad 800, das mit der nach innen weisenden Seite der ersten Gleitführung 790 drehbar verbunden ist, befindet sich im Eingriff mit einer nicht dargestellten Steuerführung, z. B. einer Rampe oder einer Nockenfläche, die die Düse 764 nach unten bzw. oben und gegebenenfalls den Schneidkopf 722 nach oben und nach unten bewegt.

In Draufsicht gemäß Fig. 4 und 15 dreht sich die Rotations-Übergabeeinrichtung 602 links herum und die Kloakenschneideeinrichtung 702 rechts herum. Während sich jede Greifeinrichtung 618, die einen Geflügelkörper 152 trägt, zu einer korrespondierenden Halteeinrichtung 822 hin bewegt, durchquert der erste Haltearm 628 der Greifeinrichtung 618 eine Übergabezone und das linke Geflügelbein 182 wird an das erste Greifelement 830 der Halteeinrichtung 822 übergeben wird. Der zweite Greifarm 636 der Greifeinrichtung 618 durchquert die Übergabezone, wobei das rechte Geflügelbein 192 an das zweite Greifelement 844 der Halteeinrichtung übergeben wird. Die Übergabezone ist allgemein eine Überlappungszone mit tangentialem Weg. Das heißt allgemein, dass sich an den abgebenden Förderweg der Rotations-Übergabeeinrichtung 602 gleichsinnig und stetig (ohne Wegeknick) der übernehmende, durch die Bearbeitungseinrichtung 21 gebildete Förderweg anschließt. In diesem Fall weist die stetige Übergabe-Wegstrecke einen Wendepunkt zwischen dem links drehenden Weg und dem rechts drehenden Weg auf. Dies wird nachstehend näher beschrieben.

Beim Eintritt des ersten Greifarms 628 in die Übergabezone greift das erste Greifelement 830 an dem linken Geflügelbein 182 an einer Stelle unter dem ersten Greifarm 628 an, wobei das linke Geflügelbein 182 zwischen den ersten und zweiten Greiffingern 832, 836 einläuft, so dass es von der Greiföffnung 634 an die Halteöffnung 840 übergeben wird. Eine nicht dargestellte Führungseinrichtung, z. B. eine Leitschiene oder -stange kann vorgesehen werden, um die Führung des linken Geflügelbeins 182 von dem ersten Greifarm 628 an das erste Greifelement 830 zu unterstützen. Wenn das linke Geflügelbein 182 die Übergabezone verlässt, wird es mittels des ersten Greifelements 830 von der ersten Rotations-Übergabeeinrichtung 602 wegbewegt. Während sich die Kloakenschneideeinrichtung 702 und die erste Rotations-Übergabeeinrichtung 602 weiterdrehen, tritt der zweite Greifarm 636 in die Übergabezone ein und das zweite Greifelement 844 gelangt in Eingriff mit dem rechten Geflügelbein 192 an einer Stelle unterhalb des zweiten Greifarms 636, wobei das rechte Geflügelbein 192 zwischen den ersten und zweiten Greiffingern 846, 850 einläuft, so dass das rechte Geflügelbein 192 von der Greiföffnung 642 an die Halteöffnung 854 übergeben wird. Zweckmäßig kann eine nicht dargestellte Führungseinrichtung, z. B. eine Gleitschiene oder -stange vorgesehen werden, die die Führung des rechten Geflügelbeins 192 von dem zweiten Greifarm 636 zu dem zweiten Greifelement 844 unterstützt. Wenn das rechte Geflügelbein 192 die Übergabezone verlässt, ist die Übergabe des Geflügelkörpers 152 von der ersten Rotations-Übergabeeinrichtung 602 an die Kloakenschneideeinrichtung 702 abgeschlossen. Eine benachbarte nachfolgende Halteeinrichtung 822 tritt in die Übergabezone ein, um den nächsten Geflügelkörper 152 von der nächsten Greifeinrichtung 618 zu erhalten, und der beschriebene Zyklus wiederholt sich.

Wenn sich der Geflügelkörper 152 von der ersten Rotations-Übergabeeinrichtung 602 wegdreht, positioniert die Bearbeitungs-Halteeinrichtung 822 den Geflügelkörper 152 in Bezug auf den Schenkel-Haltebügel 744. Körperliche Merkmale der jeweils bearbeiteten Geflügelkörper 152 können variieren. Zum Beispiel können die Geflügelbeine 182, 192 des Geflügelkörpers 152 einer verarbeiteten Charge eine andere Länge zwischen ihren Hüften 184, 194 und ihren Läufen bzw. Fußgelenken 188, 198 aufweisen als ein anderer Geflügelkörper 152 der Charge. Mit dem übereinstimmenden Positionieren jedes einzelnen Geflügelkörpers 152 in Bezug auf den Schenkel-Haltbügel 744 erreicht man, dass die Schneideeinrichtung 720 die Kloake 156 an der richtigen Stelle des Geflügelkörpers 152 aufweitet und auf die richtige Tiefe schneidet.

Beim Drehen jeder Bearbeitungs-Halteeinrichtung 822 zusammen mit der Kloakenschneideeinrichtung 702 wird der Geflügelkörper 152 jeweils nach oben gegen den Schenkel-Haltebügel 744 vorgespannt. Dies erfolgt dadurch, dass sich die Halteeinrichtung 822 (Fig. 22 bis 24) nach oben bewegt, wenn das Rad 874 der Halte-Steuereinrichtung 89 auf einen Schrägabschnitt der Halteführungseinrichtung 88 aufläuft. Sobald der Radgleitklotz oder -körper 868 entlang der Stäbe oder Säulen 864, 866 nach oben bewegt wird, wird die Feder 872 nach oben gegen den Radhalter 862 vorgespannt. Infolge der Aufwärtsbewegung des Radhalters 822 bewegen sich die ersten und zweiten Stäbe 856, 858 relativ zu der Bodenplatte 710 nach oben, so dass sich auch die Greifelemente 824 nach oben bewegen. Beim Anheben des Geflügelkörpers 152 mittels des Greifelements 824 kommen die Innenseiten der linken und rechten Geflügelbeine 182, 192 in Kontakt mit dem Schenkel-Haltebügel 744, der ein Beispiel für ein Positionierelement ist, so dass die Geflügelbeine182, 192 weiter auseinander gespreizt werden. Bei Geflügelkörpern 152 mit relativ langen Geflügelbeinen 182, 192 sind die Fußgelenke 188, 198 mittels der Halteeinrichtung 822 mit größerem Abstand über dem Schenkel-Haltebügel 744 zu positionieren als bei Geflügelkörpern 152 mit kürzeren Geflügelbeinen. Ein Geflügelkörper 152 mit kurzen Geflügelbeinen 182, 192 trifft früher auf den Schenkel-Haltebügel 744 als ein Geflügelkörper 152 mit langen Geflügelbeinen 182, 192. Infolgedessen wird dadurch die Aufwärtsbewegung des Geflügelkörpers 152 gestoppt und die Aufwärtsbewegung des Radgleitklotzes 868 nach oben fortgesetzt, wobei der Radgleitklotz 868 entlang der ersten und zweiten Stäbe 864, 866 gleitet und die Feder 872 zwischen dem Radgleitklotz 868 und der darüber liegenden Radhaltereinrichtung 862 komprimiert wird. Man erkennt, dass dadurch die gegen Spannung der Feder 872 arbeitende Puffer-/Vorspanneinrichtung 86 gebildet ist.

In Fig. 22 - 23 ist die Situation für einen Geflügelkörper 152 dargestellt, der eine maximale Beinlänge aufweist und damit in der Einrichtung gerade noch bearbeitet werden kann. Der Geflügelkörper 152 gelangt in einer Entnahmeposition gemäß Fig. 22 in die Halteinrichtung 822 bzw. in die Greifelemente 824. Über ein flüchtige Position gemäß Fig. 23 wird der Geflügelkörper 152 in die Bearbeitungsposition gemäß Fig. 24 gehoben. Dabei verhält sich die Feder 872, die in Fig. 22 - 24 nicht dargestellt ist, wie ein steifes Element. Jeder Geflügelkörper 152, der kleiner als der in Fig. 22 - 24 dargestellte Geflügelkörper ist, wird mittels der Vorspanneinrichtung 86 positioniert, wenn nämlich der Schenkel-Bügel 744 an der Kloake zu liegen kommt, während die Halteeinrichtung 822 beim Anheben des vorgespannten Führungselements 869 mittels der dann komprimierten Feder 872 gehoben wird. Dadurch ist zwischen dem Positionierelement und den Greifelementen 824 bzw. der Bearbeitungs-Halteeinrichtung 822 ein Einspannraum mit einem variablen Einspannabstand ausgebildet.

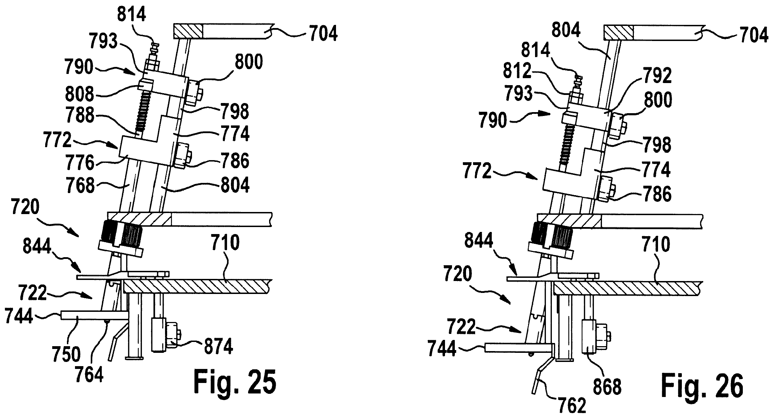

Sobald sich der Geflügelkörper 152 in der richtigen Position für die Schneideeinrichtung 720 zum Aufweiten der Kloake 156 befindet, wird die erste Gleitführung 790 nach unten bewegt, und auch die zweite Geleitführung 722 wird nach unten bewegt, so dass der Schneidkopf 722 beim Drehen in die Kloake 156 hineinbewegt wird (Fig. 25 bis 26). Zum Lokalisieren der Kloake 156 wird die Düse 764 mit Vakuum beaufschlagt, und über das Anschlussmittel 814 wird Fluid in das Rohr 788 eingeleitet und dann von der Düse 764 verteilt, um den Schneidkopf 722 zu spülen und Reste wegzuwaschen, die beim Schneiden entstehen. Sobald sich der Schneidkopf 722 bis zur erforderlichen Tiefe in den Hohlraum des Geflügelkörpers 152 hineinbewegt hat, ist der Vorgang des Öffnens der Kloake 156 abgeschlossen. Während sich der Geflügelkörper 152 zu der zweiten Rotations-Übergabeeinrichtung 652 hinbewegt, bewegt sich der Radgleitklotz 868 nach unten, wobei der Geflügelkörper 152 abgesenkt wird, und die erste Gleitführung 790 bewegt sich nach oben, wobei der Schneidkopf 722 und die Düse 764 nach oben und von dem Geflügelkörper 152 weg bewegt werden.

Wie insbesondere in Draufsicht aus Fig. 3 und 4 ersichtlich, dreht sich die zweite Rotations-Übergabeeinrichtung 652 links herum gegen den Uhrzeigersinn. Die zweite Rotations-Übergabeeinrichtung 652 weist gleiche Merkmale wie die erste Rotations-Übergabeeinrichtung 602 auf, so das gleiche oder übereinstimmende Merkmale mit entsprechend gleichen Bezugszeichen versehen werden.

Während jede Halteeinrichtung 822 der Kloakenschneideeinrichtung 702, die einen Geflügelkörper 152 trägt, zu einer Greifeinrichtung 618 hin gedreht wird, läuft das erste Greifelement 830 durch eine Übergabezone, wobei das linke Geflügelbein 182 an den ersten Haltearm 628 übergeben wird, und das zweite Halteelement 844 läuft durch die Übergabezone, wenn das rechte Geflügelbein 192 an den zweiten Haltearm 636 übergeben wird. Sobald das erste Halteelement 830 in die Übergabezone eintritt, gelangt der erste Haltearm 628 an einer Stelle unterhalb des ersten Greifelements 830 in Eingriff mit dem linken Geflügelbein 182, wobei das linke Geflügelbein 182 zwischen den ersten und zweiten Fingern 630, 632 einläuft, so dass das linke Geflügelbein 182 von der Greif-/Halteöffnung 840 an die Greif-/Halteöffnung 634 übergeben wird. Eine nicht dargestellte Führungseinrichtung, z. B. eine Führungsschiene oder eine Stange kann das Führen des linken Geflügelbeins 182 von dem ersten Greifelement 830 zu dem ersten Haltearm 628 unterstützen. Sobald das linke Geflügelbein 182 die Übergabezone verlässt, wird es mit dem ersten Haltearm 628 von der Kloakenschneideeinrichtung 702 entfernt. Während sich die Kloakenschneideeinrichtung 702 und die zweite Rotations-Übergabeeinrichtung 652 weiterdrehen, tritt der zweite Haltearm 636 in die Übergabezone ein und das rechte Geflügelbein 192 gelangt an einer Stelle unterhalb des zweiten Greifelements 844 in Eingriff mit dem zweiten Haltearm 636, wobei das rechte Geflügelbein 192 zwischen den ersten und zweiten Haltefingern 638, 640 einläuft, so dass das rechte Geflügelbein 192 von der Halteöffnung 854 an die Halteöffnung 642 übergeben wird. Eine nicht dargestellte Führungseinrichtung wie eine Leitschiene oder eine Führungsstange kann das Führen des rechten Geflügelbeins 192 von dem Greifelement 844 zu dem zweiten Haltearm 636 unterstützen. Sobald das rechte Geflügelbein 192 die Übergabezone verlässt, ist die Übergabe des Geflügelkörpers 152 von der Kloakenschneideeinrichtung 702 an die zweite Rotations-Übergabeeinrichtung 652 abgeschlossen. Eine benachbarte nachfolgende Greifeinrichtung 668 dringt in die Übergabezone ein, um den Geflügelkörper 152 von der nachfolgenden Halteeinrichtung 822 aufzunehmen. Die Abfolge der vorstehend beschriebenen Schritte findet erneut statt. Die Übergabezone zwischen der Bearbeitungseinrichtung 21, 702 und der zweiten Rotations-Übergabeeinrichtung 652 bildet auch hier, wie beschrieben, eine Überlappungszone mit tangentialem Weg und einem Wendepunkt.

Die zweite Rotations-Übergabeeinrichtung 652 ist, wie bereits erwähnt, so wie die erste Rotations-Übergabeeinrichtung 602 ausgebildet, wobei sie bezüglich einer gedachten vertikalen Mittenebene 13 spiegelbildlich angeordnet bzw. ausgerichtet ist, wie dies aus Fig. 4 hervorgeht. Mittels des Kranzes der Gleitspeichen 622, der Nockenplatte 608 mit der Führungsbahn 614 und den darin eingreifenden Gleitelementen 624 ist der Trennabstand der Greifeinrichtungen 618 in Abhängigkeit von der Drehposition und - bewegung der Rotations-Übergabeeinrichtung 652 steuerbar eingerichtet. Das heißt, dass sich der Abstand zwischen nebeneinanderliegenden Greifeinrichtungen 618 auf dem Weg von der Kloakenschneideeinrichtung 702 weg und zur Hauptfördereinrichtung 302 hin verkleinert. Für den Übergabeweg zwischen der Bearbeitungseinrichtung 21, 702 und der Hauptfördereinrichtung 302 wird der Abschnitt der Führungsbahn 614 vorgesehen, der die Greifeinrichtungen 618 radial zur Antriebswelle 604 hin bewegt. Durch die Verringerung des Abstandes zwischen den nebeneinanderliegenden Greifeinrichtungen 618 verringert sich der Abstand zwischen benachbarten aufeinanderfolgenden Geflügelkörpern 152, so dass der Trennabstand zwischen den Geflügelkörpern 152 wieder auf jenen Trennabstand zurückgesetzt wird, der zur Übergabe der Geflügelkörper 152 zurück an die Trägereinrichtung 402 der Hauptfördereinrichtung 302 erforderlich ist.

Jede Trägereinrichtung 402 passiert die zweite Rotations-Übergabeeinrichtung 652, die unmittelbar an und neben der Hauptförderanlage 302 angeordnet ist, wobei die Geflügelkörper 152 an die Trägereinrichtungen 402 auf tangentialem Weg gelangen. Der Vorgang ist derart, dass der erste Träger-Schenkel 468 und der erste Träger-Arm 478 sowie der zweite Träger-Schenkel 502 und der zweite Träger-Arm 512 durch eine Übergabezone laufen und in den von der Greifeinrichtung 618 der zweiten Rotations-Übergabeeinrichtung 652 gehaltenen Geflügelkörper 152 eingreifen. Man erkennt, dass die Trägereinrichtungen 402 entlang der Hauptfördereinrichtung 302 bzw. der Hauptförderlinie 20 den Laufweg von der Stelle an fortgesetzt haben, an der sie die Geflügelkörper 152 an die erste Rotations-Übergabeeinrichtung 602 übergeben haben. Sobald der erste Träger-Schenkel 468 des ersten Trägers 41 in die Übergabezone eindringt, wird das erste Betätigungselement 444 angehoben, so dass das erste Vorspannelement der Vorpsanneinrichtung 452 komprimiert wird und der vorspringende Tragrand 490 von dem vorspringenden Tragrand 472 wegbewegt wird. In einer Ausführungsform greift der Steuerkörper 450 des Steuerelements 44 in einen Schrägabschnitt der Nocken-/Führungsbahn der Steuereinrichtung 540 ein, so dass der Steuerkörper 450 angehoben wird. Der nicht dargestellte Schrägabschnitt entspricht dem Schrägabschnitt 542. Sobald der erste Tragarm 628 in die Übergabezone eintritt, befindet er sich in höherer Position als der vorspringende Tragrand 472, und das linke Geflügelbein 182 befindet sich neben der Tragausnehmung 474. Während sich die Trägereinrichtung 402 und die Greifeinrichtung 618 weiterbewegen, trifft der Steuerkörper 450 auf einen nicht dargestellten abfallenden Abschnitt oder einen Endabschnitt der ersten Nocken- oder Führungsbahn der Steuereinrichtung 540, so dass das erste Vorspannelement entspannt wird mit der Folge, dass der erste Träger-Arm 478 in eine in Bezug auf den ersten Träger-Schenkel 468 geschlossene Position bewegt und der vorspringende Tragrand 490 zu dem vorspringenden Tragrand 472 hin bewegt wird. Sobald der erste Träger-Arm 628 die Übergabezone verlässt, wechselt die Halteverbindung des linken Geflügelbeins 182 von der Greifereinrichtung 618 zu der durch den ersten Träger-Schenkel 468 und den ersten Träger-Arm 478 gebildeten Gliedmaße-Aufnahme 40.1. Zweckmäßig wird eine Führungseinrichtung angeordnet, zum Beispiel eine Gleitschiene oder eine Führungsstange, die das Führen des linken Geflügelbeins 182 von dem ersten Haltearm 628 zu der Trägereinrichtung 402 unterstützt.

Beim Weiterbewegen der Trägereinrichtung 402 und der Greifeinrichtung 618 verlässt das linke Geflügelbein 182 die Übergabezone und der zweite Greifarm 636 tritt in die Übergabezone ein. Sobald der zweite Träger-Arm 512 des zweiten Trägers 42 in die Übergabezone eintritt, wird das zweite Steuerelement 454 gehoben. Infolgedessen wird das zweite Vorspannelement der zweiten Vorspanneinrichtung 462 komprimiert, so dass der vorspringende Tragrand 524 von dem vorspringenden Tragrand 506 wegbewegt und eine klemmfreie Position zur Übergabe eingerichtet wird. Gemäß einer Ausführungsform gelangt der Steuervorsprung oder -körper 460 in Eingriff mit der zweiten Führungs- oder Nockenbahn der Steuereinrichtung 545 mit einem nicht dargestellten schrägen Abschnitt, auf den der Steuerkörper 460 aufläuft und gehoben wird. Dieser Schrägabschnitt entspricht dem Schrägabschnitt 546. Sobald der zweite Haltearm 636 in die Übergabezone eintritt, tritt in der Folge der zweite Träger-Schenkel 502 in die Übergabezone ein, wobei der vorspringende Tragrand 506 tiefer zu liegen kommt als der zweite Haltearm 636, und das rechte Geflügelbein 192 kommt neben der Halteausnehmung 508 zu liegen. Während sich die Trägereinrichtung 402 und die Greifeinrichtung 618 weiterbewegen, läuft der Steuerkörper 460 auf einen nicht dargestellten Schrägabschnitt oder einen Endabschnitt der zweiten Nocken- oder Führungsbahn der Steuereinrichtung 545 auf, wodurch das zweite Vorspannelement entspannt wird, so dass der zweite Träger-Arm 512 in eine in Bezug auf den zweiten Träger-Schenkel 502 geschlossene Position und der vorspringende Tragrand 524 zu dem vorspringenden Tragrand 506 hin bewegt wird. Sobald der zweite Greifarm 636 die Übergabezone verlässt, geht die Halteverbindung für das rechte Geflügelbein 192 von dem zweiten Greifarm 636 an den zweiten Träger-Schenkel 502 und den zweiten Träger-Arm 512 über, die die zweite Träger-Aufnahme 40.2 ausbilden. Zweckmäßig wird eine Führungseinrichtung vorgesehen, zum Beispiel eine Gleitschiene oder eine Führungsstange, um das rechte Geflügelbein 192 von dem zweiten Greifarm 636 zu der Trägereinrichtung 402 zu führen. Anschließend tritt eine benachbarte nachfolgende Trägereinrichtung 402 in die Übergabezone ein um den Geflügelkörper 152 von der nächsten Greifeinrichtung 618 aufzunehmen. Die vorstehend beschriebenen Schritte der Übergabe wiederholen sich.

Im Ausführungsbeispiel ist die beschriebene Überlappungsübergabe eingerichtet, wobei die Greifarme 628, 636 mit den Tragelementen 475, 525 überlappen. Der tangentiale Übergabeweg kann auch so eingerichtet werden, dass die Greifeinrichtungen 618 in der Übergabezone ohne Überlappung neben den Träger-Aufnahmen 40.1 und 40.2 laufen und mit den genannten optionalen Führungseinrichtungen oder entsprechenden Führungsmitteln ein seitlicher Führungsversatz der Geflügelkörper 152 eingerichtet wird. Diese Option ist für jede Übergabezone zwischen den Trägereinrichtungen 402, den Rotations-Übergabeeinrichtungen 602, 652 und den Bearbeitungseinrichtungen 21 vorgesehen.

Zweckmäßig wird hinter (stromabwärts) einer Übergabestation 60 dieser zugeordnet ein Wiegemittel angeordnet. Im Ausführungsbeispiel der Fig. 2 ist ein Wiegemittel 91 der Bearbeitungsgruppe I, ein Wiegemittel 92 der Bearbeitungsgruppe II und ein Wiegemittel 93 hinter der Reinigungseinrichtung 234 in der Hauptförderlinie 20 der Hauptfördereinrichtung 302 angeordnet. Zudem sind, wie aus Fig. 2 ersichtlich, am Anfang sowie am Ende der Bearbeitungsvorrichtung 210 jeweils ein Wiegemittel 90 bzw. 94 in der Hauptförderlinie 20 angeordnet. Statt des Wiegemittels 94 oder zusätzlich kann, wie ebenfalls aus Fig. 2 ersichtlich, eine Wiegemittel 95 vorgesehen sein, das in Verbindung mit einer Übergabestation 66, die ein Paar von Rotations-Übergabeeinrichtungen 602, 652 aufweist, ausgebildet ist, wobei eine Bearbeitungseinrichtung 21 durch eine Wiegeeinrichtung 236 gebildet ist. Allgemein kann die erfindungsgemäße Einrichtung der Übergabestation 60 an der Hauptförderlinie 20 mit jeder Bearbeitungseinrichtung 21 vorgesehen werden, die die Geflügelkörper 152 mit einem eigenen Bearbeitungs-Haltemittel hält, das auf einem Umlaufweg angeordnet und bewegbar ist, wobei es zur Entnahme, zum Halten während der Bearbeitung sowie zum Abgeben der Geflügelkörper 152 eingerichtet ist, und zwar vorzugsweise in der Höhenposition steuerbar. Statt der dargestellten Karussell-Bearbeitungseinrichtungen 21, die einen um eine Achse drehbaren Rahmen-/Gestellkörper aufweisen, kommen statt derartiger Kreismaschinen auch Oval- oder allgemein Rundmaschinen mit entsprechend eingerichtetem Umlauf-Haltemittel in Betracht. Eine Bearbeitungseinrichtung kann zum Beispiel auch eine Einrichtung zum Zerlegen sein, die zum Beispiel Flügel von dem Geflügelkörper abtrennt.

Das Wiegen des Geflügelkörpers 152 vor und nach der Be-/Verarbeitung, d. h. stromabwärts einer Bearbeitungseinrichtung oder Gruppe von Bearbeitungseinrichtungen liefert Information über den zu einem Geflügelkörper 152 erzielten Ertrag. Insbesondere können abnorme oder unerwartete Abweichungen oder Schwankungen im Gewicht eines Geflügelkörpers 152, das vor und nach der Bearbeitung ermittelt wird, Rückschlüsse auf Funktion und mechanischen Betrieb der Bearbeitungseinrichtung oder einer Gruppe von Bearbeitungseinrichtungen geben. Insbesondere können Betriebsprobleme ermittelt werden, die den Ertrag beeinträchtigen. Gewichtsabweichungen oder -schwankungen geben allgemein Aufschluss über das Gewicht des Geflügelkörpers 152, das man mit der Bearbeitung erreicht bzw. das dadurch verloren geht. Die von Wiegeeinrichtungen 902, 236 ermittelten Gewichtsdaten lassen sich dem jeweiligen Geflügelkörper 152 zuordnen. Vorteilhaft wird das ermittelte Gewicht einem RFID-Element zugeordnet, das an der zugehörigen Trägereinrichtung 402, 532 angeordnet wird. Zweckmäßig werden die zu jedem Geflügelkörper 152 gewonnenen Gewichtsdaten in einer an sich üblichen Datenverarbeitungseinrichtung, die mit Prozessor- und Speichermitteln ausgestattet ist, elektronisch gespeichert. Gewichts- und/oder Verarbeitungsdaten für jeden Geflügelkörper 152 können verwendet werden, um in einem Gesamtprozess Chargen oder Orte zu bestimmen, denen das gewonnene, insbesondere zum Vertrieb bestimmte Produkt zugeordnet wird. Bestimmte abgetrennte Teile des Geflügelkörpers können individuell zugeordnet und konfektioniert werden.

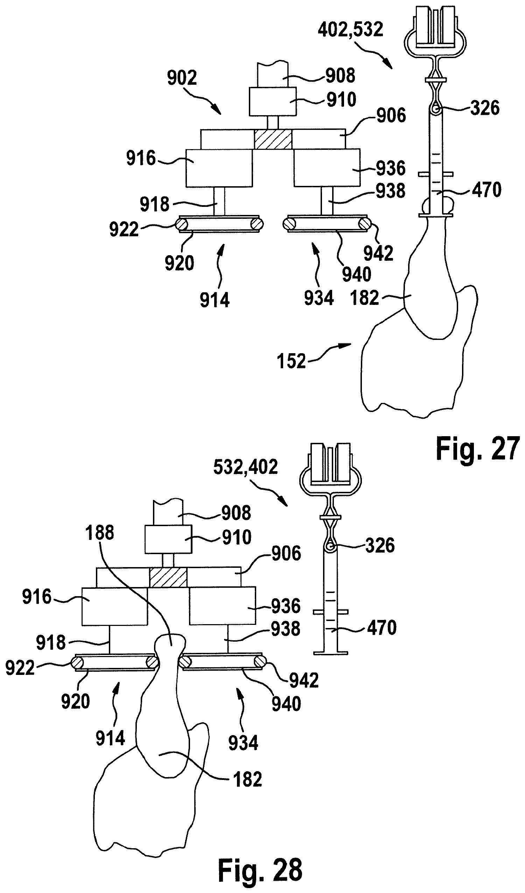

Während der Förderung der Trägereinrichtungen 402, 532 entlang der Hauptfördereinrichtung 302 werden die Geflügelkörper 152 von den Trägereinrichtungen 402, 532 zum Wiegen jeweils an die Wiegeeinrichtungen 902 übergeben. Solche Wiegeeinrichtungen sind in den Fig. 27 bis 34 dargestellt. Gemäß einer Gestaltung wird die Wiegeeinrichtung 902 neben der Hauptfördereinrichtung 302 angeordnet. Eine andere Ausführung, wie in Fig. 2 dargestellt, besteht darin, dass die Wiegeeinrichtung 902 in der Hauptförderlinie 20 der Hauptfördereinrichtung 302 angeordnet wird. Anhand der Fig. 27 bis 34 wird eine Wiegeeinrichtung 902 beschrieben, die neben der Hauptfördereinrichtung 302 dargestellt ist.

Erste und zweite Transporteinrichtungen 914, 934 werden von einem Rahmen 906 gehalten, der an einer Kraftmesseinrichtung 910, zum Beispiel an einem Kraftsensor in Form einer Lastmessdose aufgehängt bzw. unter dieser mit ihr in Verbindung angeordnet ist. Die Kraftmesseinrichtung 910 wird ihrerseits mittels eines Trag- oder Stützelements 908 gehalten.

Die erste Transporteinrichtung 914 umfasst einen ersten umlaufenden Strang 922, z. B. einen Riemen, der zwischen einer ersten Antriebs- oder Umlenkeinrichtung oder -scheibe 920 und einer zweiten Antriebs- oder Umlenkeinrichtung oder-scheibe 926 angeordnet ist. In der Anordnung durchläuft der Strang 922 eine in der Anordnung innen liegende Innenstrecke 921 und eine gegenüberliegende, in der Anordnung außen liegende Außenstrecke 923. Die Antriebseinrichtung 920 ist über eine Antriebswelle 918 mit einem Antrieb 916, zum Beispiel einem Servomotor, verbunden. Der Antrieb ist an dem Rahmen oder Gestell 906 angeordnet. Auch die Antriebseinrichtung 926 ist über eine Antriebswelle 924 mit dem Gestell oder Rahmen 906 verbunden. Es kann ausreichen, dass nur eine der Wellen aktiv angetrieben wird.

Die zweite Transporteinrichtung 943 weist einen zweiten umlaufenden Strang 942, z. B. einen Riemen auf, der sich zwischen einer ersten Antriebs- oder Umlenkeinrichtung oder -scheibe 940 und einer zweiten Antriebs- oder Umlenkeinrichtung oder -scheibe 946 erstreckt, wobei der Strang 942 eine in der Anordnung innere Strecke 941 sowie einen gegenüberliegende äußere Strecke 943 durchläuft. Die Antriebseinrichtung 940 ist über eine Antriebswelle 938 mit einem Antrieb 936, zum Beispiel einem Servomotor verbunden. Der Antrieb 936 ist an dem Gestell oder Rahmen 906 angeordnet. Der Antrieb 946 ist über eine Antriebswelle 944 mit dem Gestellt oder Rahmen 906 verbunden. Es kann ausreichen, dass nur eine der Wellen aktiv angetrieben wird.

Die Innenstrecken 921, 941 der Stränge 922, 942 sind jeweils parallel beabstandet, wobei die Anordnung derart ist, dass zwischen den längs der Innenstrecken 921, 942 laufenden Strängen 922, 942 ein Zwischenraum gebildet ist, der einen Abschnitt der Geflügelbeine 182, 192 zwischen den Läufen bzw. Fußgelenken 188, 198 und den Knien 186, 196 aufnimmt. In einer Ausführungsform, wie insbesondere in Fig. 27 und 28 dargestellt, halten die Stränge 922, 942 die Geflügelbeine 182, 192 an den genannten Abschnitten von unten.

Die Anordnung und Einrichtung ist derart, dass eine Trägereinrichtung 402, 532, die mit einem Geflügelkörper 152 beschickt ist, zu der Wiegeeinrichtung 902 weiterläuft und dort so angeordnet und bewegt wird, dass die Geflügelbeine 182, 192 in einer Linie mit den Zwischenräumen zwischen den Strängen 922, 942 ausgerichtet werden. Während die Hauptfördereinrichtung 302 die Trägereinrichtung 402, 532 weiterbewegt, tritt das linke Geflügelbein 182 in eine Eintrittsübergabezone ein. Dort wechselt die Halteverbindung des linken Geflügelbeins 182 mit der Trägereinrichtung 402, 532 zu der Halteverbindung mit der Wiegeeinrichtung 902.

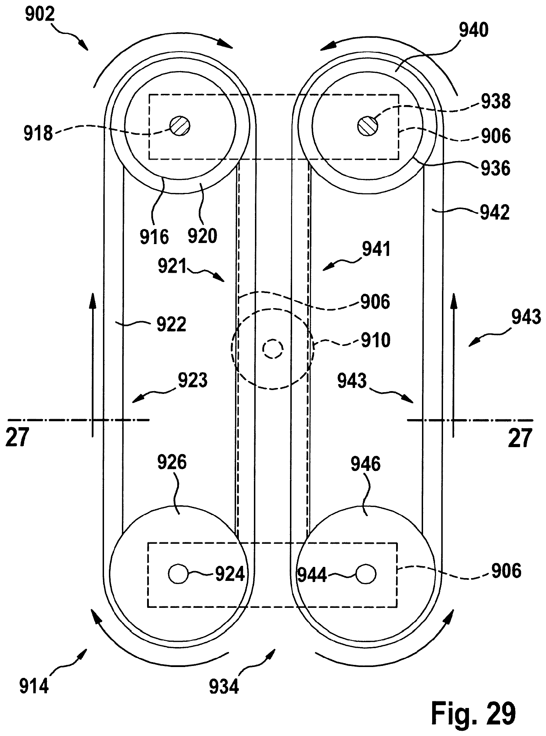

Wie aus Fig. 29 ersichtlich, ist die Anordnung derart, dass sich eine Scheibe der Antriebseinrichtung 926 rechtsherum im Uhrzeigersinn dreht, so dass sich auch der erste Strang 922 rechtsherum dreht, während sich eine Scheibe der Antriebseinrichtung 946 und damit auch der zweite Strang 942 linksherum gegen den Uhrzeigersinn drehen. Man erkennt, dass eine Fördereinrichtung zum Fördern der Geflügelbeine 182, 192 parallel bzw. in Richtung der Förderstrecke bzw. Hauptförderlinie 20 der Trägereinrichtung 402, 532 ausgebildet ist. Beim Vorwärtsbewegen der Trägereinrichtung 402, 532 greifen die Stränge 922, 942 an dem linken Geflügelbein 182 an einer Stelle unterhalb der vorspringenden Tragränder 472, 490 ein. Sobald sich das linke Geflügelbein 182 zwischen den Strängen 922, 942 befindet, wird der Steuerkörper oder -vorsprung 450 des ersten Steuerelements 444 gehoben, mit der Folge, dass der erste Träger-Arm 478 von dem ersten Träger-Schenkel 468 zum Herstellen einer klemmfreien Aufnahme wegbewegt wird, so dass das Halten des linken Geflügelbeins 182 von der Trägereinrichtung 402, 532 auf die Wiegeeinrichtung 902 übergeht. Wie schon zuvor beschrieben, besteht eine Ausführungsform darin, dass das erste Steuerelement 444 auf einen Schrägabschnitt z. B. der ersten Nocken-/Führungsbahn der Steuereinrichtung 540 aufläuft, so dass das Steuerelement 444 gehoben wird. Die Antriebe 916, 936 sind derart eingerichtet, dass sie das linke Geflügelbein182 mit der gleichen Geschwindigkeit vorwärts bewegen, mit der sich das rechte Geflügelbein 192 zu der Wiegeeinrichtung 902 hin bewegt. Wenn das rechte Geflügelbein 192 in die Eintrittsübergabezone eintritt, gelangen die Stränge 922, 942 an einer Stelle unterhalb der vorspringenden Tragränder 506, 524 in Eingriff mit dem rechten Geflügelbein 192. Sobald sich das rechte Geflügelbein 192 in dem Zwischenraum zwischen den Strängen 922, 942 befindet, wird der Steuerkörper oder -vorsprung 460 des zweiten Steuerelements 454 z. B. mittels eines Schrägabschnitts der Steuereinrichtung 545 gehoben mit der Folge, dass der zweite Träger-Arm 512 von dem zweiten Träger-Schenkel 502 wegbewegt wird. Infolgedessen geht das Halten des rechten Geflügelbeins 192 von der Trägereinrichtung 402, 532 auf die Wiegeeinrichtung 902 über.

Man erkennt, dass das Gewicht des Geflügelkörpers 152 mittels des Kraftmesseinrichtung 910 gemessen wird, wenn der Geflügelkörper 152 nur noch in der Wiegeeinrichtung 902 gehalten wird, die Halteverbindung des Geflügelkörpers 152 mit der Trägereinrichtung 402, 532 also entfallen ist. Die Kraftmesseinrichtung 910 ermittelt das Gewicht des Geflügelkörpers 152, indem das Gewicht der Wiegeeinrichtung 902 von dem gemessenen Gesamtgewicht abgezogen wird. Insbesondere wird jeweils das Gewicht der Stränge 922, 942, der Elemente der Antriebe 920, 940, 926, 946, der Antriebswellen 918, 924, 938, 944, von Motoren 916, 936 der Antriebe 920, 940, des Gestells oder Rahmens 906 und auch das Gewicht der Kräfte abgezogen, die aus der Bewegung der Geflügelkörper 152 durch die Wiegeeinrichtung 902 resultieren. Die Kraftmesseinrichtung zieht also das Leergewicht der die genannten Teile umfassenden mechanischen Einrichtung und ggf. eine dynamische Gewichtskomponente ab, um das tatsächliche Gewicht des Geflügelkörpers 152 zu ermitteln, während dieser durch die Wiegeeinrichtung 902 läuft. Wesentlich ist, dass sich der Geflügelkörper 152 während des Wiegens fortbewegt und sich die zugehörige Trägereinrichtung 402, 532 außer Eingriff mit dem Geflügelkörper 152 befindet. Dabei läuft die Trägereinrichtung 402, 532 neben dem Geflügelkörper 152 in der Hauptfördereinrichtung 302 mit.

Die Einrichtung und Anordnung ist derart, dass im Anschluss an die Gewichtsermittlung des Geflügelkörpers 152 die Geflügelbeine 182, 192 mittels der Stränge 922, 942 zu einer Austrittsübergabezone weiterbewegt werden. Während sich der Geflügelkörper 152 weiterbewegt, wird eine leere Trägereinrichtung 402, 532 zu der Wiegeeinrichtung 902 hin bewegt. Die Anordnung ist derart, dass die Geflügelschenkel 182, 192 in einer Linie, also entsprechend der Hauptförderlinie 20 mit den ersten und zweiten Träger-Schenkeln 468, 502 der Trägereinrichtung 532 ausgerichtet werden. Sobald das linke Geflügelbein 182 die Übergabezone verlässt, geht das Halten des linken Geflügelbeins 182 von der Wiegeeinrichtung 902 auf die Trägereinrichtung 402, 532 über. Die vorspringenden Tragränder 470, 490 gelangen an einer Stelle oberhalb der Stränge 922, 942 in Eingriff mit dem linken Geflügelbein 182.

Sobald sich das linke Geflügelbein 182 zwischen den vorspringenden Tragrändern 472, 490 befindet, wird der Steuerkörper oder -vorsprung 450 des ersten Steuerelements 444 abgesenkt mit der Folge, dass der erste Träger-Arm 478 zu dem ersten Träger-Schenkel 468 hin bewegt wird. Infolgedessen geht das Halten des linken Geflügelbeins 182 von der Wiegeeinrichtung 902 auf die Trägereinrichtung 402, 532 über. Wie zuvor beschrieben, besteht eine Ausführungsform darin, dass eine Steuereinrichtung eine erste Führungsbahn mit einem Schrägabschnitt aufweist, auf den das erste Steuerelement 444 zum Absenken aufläuft. Sobald das rechte Geflügelbein 192 in die Austrittsübergabezone eintritt, greifen die vorspringenden Tragränder 506, 524 an einer Stelle oberhalb der Stränge 922, 942 in das rechte Geflügelbein 192 ein. Sobald sich dann das rechte Geflügelbein192 zwischen den vorspringenden Tragrändern 506, 524 befindet, wird der Steuerkörper oder -vorsprung 460 des zweiten Steuerelements 454 abgesenkt, so dass sich der zweite Träger-Arm 512 zu dem zweiten Träger-Schenkel 502 hin bewegt mit der Folge, dass das Halten des rechten Geflügelbeins 192 von der Wiegeeinrichtung 902 auf die Trägereinrichtung 402, 532 übergeht.

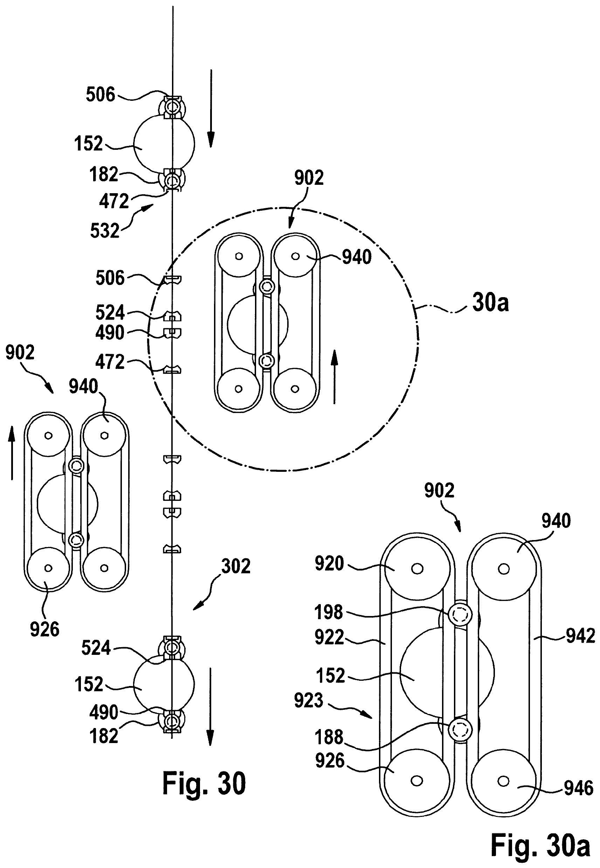

Fig. 30 bis 34 zeigen ein Ausführungsbeispiel einer Hauptfördereinrichtung 302 mit zwei Wiegeeinrichtungen 902, die einander gegenüberliegend an der Hauptförderlinie 20 angeordnet sind. Man erreicht damit, dass zwei Geflügelkörper 152 entlang des gleichen Bereichs der Hauptfördereinrichtung 302 gehoben werden, wobei eine Berührung zwischen Geflügelkörpern 152, die dicht aufeinander folgen, beim Wiegen durch die genannte Einrichtung ausgeschlossen wird. Sobald eine Trägereinrichtung 402, 532, die mit einem Geflügelkörper 152 beschickt ist, zu einer Wiegeeinrichtung 902 gelangt, finden die zuvor beschriebenen Schritte erneut statt.

## Patentansprüche

1. Trägereinrichtung (402) zum hängenden lateralen Transport eines Geflügelkörpers (152), insbesondere eingerichtet zum Bilden einer Hauptfördereinrichtung (302) einer Bearbeitungsvorrichtung (210) mit einer Mehrzahl der Trägereinrichtungen (402), umfassend
einen oberen Abschnitt (404) mit einem Anschlussteil (409) zum Verbinden mit einem Förderstrang (305) einer Fördereinrichtung (302) sowie einen unteren Abschnitt (412) mit einer Greifeinrichtung, die ein Paar (401) von Trägern (41, 42) mit Gliedmaße-Aufnahmen (40.1, 40.2) zum Aufhängen des Geflügelkörpers (152) an paarigen Gliedmaßen (11, 12) aufweist, wobei
die Trägereinrichtung (402) eine einen Bestandteil der Trägereinrichtung (402) bildende Träger-Steuereinrichtung (410) mit wenigstens einem Steuerelement (444, 454) aufweist, wobei
jeder der beiden Träger (41, 42) mit einer steuerbaren Halteeinrichtung (403; 405) eingerichtet ist, die über das wenigstens eine Steuerelement (444, 454) mit der Träger-Steuereinrichtung (410) verbunden ist und die wenigstens ein mittels eines genannten Steuerelements (444, 454) steuerbares Halteteil (480, 514) als Bestandteil der Gliedmaße-Aufnahme (40.1, 40.2) aufweist, wobei
die Gliedmaße-Aufnahme (40.1, 40.2) in einer Öffnungsposition des steuerbaren Halteteils (480, 514) zum klemmfreien Einsetzen und Entnehmen der Gliedmaße (11, 12) offen und nur in einer Schließposition des Halteteils (480, 514) in Kontakt mit den Gliedmaßen (11 bzw. 12) setzbar ist, und wobei
zwischen einander zugewandten Tragrändern (472, 490; 506, 524) der Gliedmaße-Aufnahmen (40.1, 40.2) ein an den beiden Längsseiten der Trägereinrichtung (402) jeweils offener Durchgang ausgebildet ist, wobei
der Durchgang wenigstens im Zustand der geöffneten Gliedmaße-Aufnahme (40.1, 40.2) eingerichtet ist, und wobei
jeder der beiden Träger (41, 42) ein Paar von Träger-Schenkelteilen (470, 480 bzw. 504, 514) aufweist, wobei
freie Schenkelenden der Träger-Schenkelteile (470, 480; 504, 514) das einzige Mittel zum Bilden der Gliedmaße-Aufnahme (40.1, 40.2) zum hängenden Halten der linken bzw. rechten Gliedmaßen (11, 12) sind und wobei
jeweils wenigstens ein das genannte steuerbare Halteteil bildendes Träger-Schenkelteil (480; 514) des Schenkelteile-Paars mittels des wenigstens einen Steuerelements (444; 454) aus einer die zugehörige Gliedmaße-Aufnahme (40.1, 40.2) in geschlossenem Zustand haltenden Schließposition durch Verstellbewegung in eine von dem anderen Träger-Schenkelteil (470; 504) distanzierte, die Gliedmaße-Aufnahme (40.1, 40.2) öffnende Öffnungsposition bewegbar und durch gesteuertes Beseitigen des Versatzes wieder in die Schließposition setzbar ist, und wobei
in der Trägereinrichtung (402) innenliegende Träger-Schenkelteile (480, 514) der beiden Schenkelteil-Paare zum Öffnen und Schließen der Gliedmaße-Aufnahmen (40.1, 40.2) gesteuert bewegbar sind, während die beiden anderen äußeren Schenkelteile (470, 504) der beiden Schenkelteile-Paare an der Trägereinrichtung (402) fest angeordnet sind.

2. Trägereinrichtung nach Anspruch 1, **dadurch gekennzeichnet, dass** die Träger-Steuereinrichtung (410) derart eingerichtet ist, dass genannte steuerbare Halteteile (480, 514) über eine aufgesteuerte Öffnungsposition hinaus zum weiteren Öffnen der Gliedmaße-Aufnahme (40.1, 40.2) frei bewegbar sind.

3. Trägereinrichtung nach Anspruch 1 oder 2, **dadurch gekennzeichnet, dass** die Träger-Steuereinrichtung (410) zugehörig zu einem genannten Steuerelement (444, 454) eine Rückstellkraft erzeugende Vorspanneinrichtung umfasst, die an der Trägereinrichtung (402) gelagert ist, und dass das Steuerelement (444; 454) zum Steuerversatz, unter der Rückstellkraft entlang einer Bahn bewegbar, an der Vorspanneinrichtung gelagert ist.

4. Trägereinrichtung nach einem der Ansprüche 1 bis 3, **dadurch gekenn** z**eichnet**, dass die Träger-Steuereinrichtung (410) derart eingerichtet ist, dass die bewegbaren Schenkelenden in der Schließposition mit festem maximalem Abstand jeweils zu dem im Paar gegenüberliegenden Träger-Schenkelteil (470, 504) frei von Klemm- und Rückstellkraft gehalten sind.

5. Trägereinrichtung nach einem der Ansprüche 1 bis 4, **dadurch gekennzeichnet, dass** die bewegbaren Schenkelteile (480, 514) jeweils um eine Schwenkachse (440, 441) zum Bewegen zwischen Schließposition und Öffnungsposition schwenkbar gelagert sind.

6. Trägereinrichtung nach Anspruch 5, **dadurch gekennzeichnet, dass** das Steuerelement (444; 454) durch ein Stabteil (446; 456), das an einer Rückstellkraft erzeugenden Vorspanneinrichtung gelagert ist, und einen dazu quergerichteten Steuerkörper (450, 451; 460, 461) gebildet ist, wobei im Schließzustand der Gliedmaße-Aufnahme (40.1, 40.2) der von Rückstellkraft der Vorspanneinrichtung entlastete Stabteil (446; 456) an dem schwenkbewegbaren Schenkelteil (480; 514) zum Sperren des Schwenkens angreift und wobei im Öffnungszustand der Gliedmaße-Aufnahme (40.1, 40.2) der Steuerkörper (450; 451; 460, 461) im unter der Rückstellkraft belastbaren Zustand an dem schwenkbewegbaren Schenkelteil (480; 514) zum Aufschwenken derselben um die zugehörige Schwenkachse (440; 441)angreift.

7. Trägereinrichtung nach einem der Ansprüche 1 bis 6, **dadurch gekennzeichnet, dass** die Gliedmaße-Aufnahme (40.1, 40.2) der Halteeinrichtung (403, 405) wenigstens ein Tragelement (473, 475; 507, 525) aufweist, und dass an wenigstens einem freien Schenkelende der Schenkelteile (470, 480; 504, 514) das genannte Tragelement ausgebildet ist.

8. Trägereinrichtung nach Anspruch 7, **dadurch gekennzeichnet, dass** genannte Tragelemente (473, 475; 507, 525) an beiden freien Schenkelenden des Schenkelteile-Paares ausgebildet sind, wobei die Tragelemente einander zugewandte Tragränder (472, 490; 506, 524) aufweisen und wobei an wenigstens einem genannten Tragrand (472, 490; 506, 524) eine Randausnehmung (474, 492; 526, 508) ausgebildet ist, die eine Halteeinfassung bildet.

9. Trägereinrichtung nach Anspruch 8, **dadurch gekennzeichnet, dass** die einander zugewandten Tragränder (472, 490; 506, 524) mit Vorsprüngen (566, 568; 588, 590) und korrespondierenden Ausnehmungen derart ausgebildet sind, dass im Zustand der geschlossenen Gliedmaße-Aufnahme (40.1, 40.2) eine allseitig geschlossene Halteeinfassung ausgebildet ist.

10. Trägereinrichtung nach einem der Ansprüche 1 bis 9, **dadurch gekennzeichnet, dass** die Träger-Steuereinrichtung (410) zum unabhängigen, voneinander getrennten Steuern der beiden steuerbaren Halteeinrichtungen (403; 405) eingerichtet ist, wobei sich jede Halteeinrichtung (403; 405) mit einem eigenen zugeordneten genannten Steuerelement (444, 454) in Steuerverbindung befindet.

11. Trägereinrichtung nach Anspruch 10, **dadurch gekennzeichnet, dass** die beiden Steuerelemente (444, 454) jeweils einen an der Trägereinrichtung (402) hervorstehenden Steuervorsprung (450, 460) mit einer Anordnung derart aufweisen, dass die Steuervorsprünge (450, 460) unabhängig voneinander jeweils zum Eingriff in ein individuelles Steuerglied (542, 546) wenigstens einer Steuer-Führungseinrichtung (540, 545) eingerichtet sind.

12. Trägereinrichtung nach Anspruch 11, **dadurch gekennzeichnet, dass** die beiden Steuervorsprünge (450, 460) an einander gegenüberliegenden Längsseiten (416, 426) der Trägereinrichtung (402) an dieser hervorstehen.

13. Trägereinrichtung nach einem der Ansprüche 1 bis 12, **dadurch gekennzeichnet, dass** die Trägereinrichtung (402) ein Trägergehäuse (415) mit wenigstens einem Hohlraum (434) umfasst, in dem die Träger-Steuereinrichtung (410) angeordnet ist.

14. Trägereinrichtung nach einem der Ansprüche 1 bis 13, **dadurch gekennzeichnet, dass** an dem Anschlussteil (409), das zum Verbinden mit einem Förderstrang (305) einer Fördereinrichtung (302) eingerichtet ist, ein Schwenklager zur Schwenkanlenkung um eine horizontale Schwenkachse ausgebildet ist, wobei die horizontale Schwenkachse derart gerichtet ist, dass die Trägereinrichtung (402) im hängenden Zustand zum lateralen Transport eines Geflügelkörpers (152) parallel zur geradlinigen Strecke des Förderstrangs (305) zu liegen kommt.

15. Vorrichtung (210) zum Bearbeiten von geschlachteten und gerupften Geflügelkörpern (152), umfassend
- eine Hauptfördereinrichtung (302) mit in Reihe entlang einer Hauptförderlinie (20) geförderten, jeweils zum lateralen Transport des Geflügelkörpers (152) eingerichteten Trägereinrichtungen (402) nach einem der Ansprüche 1 bis 14
- sowie eine Mehrzahl von Bearbeitungseinrichtungen (21),
- wobei die Bearbeitungseinrichtungen (21) zum von der Hauptfördereinrichtung (302) getrennten Bearbeitungs-Transport der Geflügelkörper (152) jeweils mit einem auf einem Umlaufweg bewegbaren Bearbeitungs-Haltemittel (820) ausgebildet sind,
- wenigstens zwei entlang der Hauptförderlinie (20) in Reihe angeordnete Übergabestationen (60; 61 - 66), denen jeweils wenigstens eine Bearbeitungseinrichtung (21) zugeordnet ist, wobei jede Übergabestation (60; 61 - 66) durch ein Übergabepaar (601) gebildet ist, das zwei Rotations-Übergabeeinrichtungen (602, 652) aufweist, nämlich eine erste Rotations-Übergabeeinrichtung (602), die, jeweils auf tangentialem Weg, zur Entnahme der Geflügelkörper (152) aus den Trägereinrichtungen (402) der Hauptförderlinie (20) sowie zur Übergabe der entnommenen Geflügelkörper (152) an das Bearbeitungs-Haltemittel (820) einer zugeordneten genannten Bearbeitungseinrichtung (21) angeordnet und eingerichtet ist, sowie eine zweite Rotations-Übergabeeinrichtung (652), die, jeweils auf tangentialem Weg, zur Entnahme der bearbeiteten Geflügelkörper (152) von dem Bearbeitungs-Haltemittel (820) einer zugeordneten genannten Bearbeitungseinrichtung (21) sowie zur Übergabe an zum Aufhängen freie genannte Trägereinrichtungen (402) zum lateralen Weitertransport entlang der Hauptförderlinie (20) angeordnet und eingerichtet ist,
- wobei jeder der beiden Träger (41, 42) einer genannten Trägereinrichtung (402) mit einer Träger-Halteeinrichtung (403, 405) eingerichtet ist, die zum Aufhängen und zur Entnahme der linken und der rechten paarigen Gliedmaßen (11, 12) in einen Öffnungszustand, einen Schließzustand und, damit verbunden, in einen Haltezustand in Abhängigkeit von der Förderposition der Trägereinrichtung (402) entlang der Hauptförderlinie (20) steuerbar ist, und
- wobei jeder der beiden Träger (41, 42) jeder Trägereinrichtung (402) mit die paarigen Gliedmaßen (11, 12) hängend aufnehmenden Tragelementen (473, 475; 507, 525) eingerichtet ist, die an wenigstens einer gemeinsamen Längsseite der Trägereinrichtung (402), die den genannten Übergabestationen (60) zugeordnet ist, jeweils mit einem Durchgang ausgebildet sind, in dem die Gliedmaßen der Geflügelkörper (152) frei von Vertikalversatz zum Aufhängen und zur Entnahme hindernisfrei bewegbar sind.

16. Vorrichtung nach Anspruch 15, **dadurch gekennzeichnet, dass** entlang der Hauptförderlinie (20) wenigstens eine Wiegeeinrichtung (902) angeordnet ist, die durch ein parallel mit der Hauptförderlinie (20) ausgerichtetes und bewegbares Transport- und Wiegemittel (900; 902, 91-95, 914, 934) gebildet ist, das zum gleichzeitigen und gemeinsamen Transport, getrennt von der Trägereinrichtung (402) der Hauptfördereinrichtung (302), und Wiegen jeweils eines Geflügelkörpers (152) ausgebildet ist.

17. Vorrichtung nach Anspruch 15 oder 16, **dadurch gekennzeichnet , dass** wenigstens eine Station (64) der genannten Übergabestationen (60) an einer anderen Lauf- und Bearbeitungsseite der Hauptfördereinrichtung (302) als wenigstens eine weitere genannte Übergabestation (61 - 63, 65, 66) angeordnet ist.

18. Vorrichtung nach einem der Ansprüche 15 bis 17, **dadurch gekenn**z**eichnet**, dass die beiden Träger (41, 42) des Trägerpaares (401) der Trägereinrichtung (402) an wenigstens einer seitlichen Längsseite der Trägereinrichtung (402) derart offen ausgebildet sind, dass die Geflügelkörper (152) frei von Vertikalversatz einhängbar und entnehmbar sind.

19. Vorrichtung nach Anspruch 18, **dadurch gekennzeichnet, dass** die Trägereinrichtungen (402), jeweils frei von Drehung um eine der Hängerichtung des Geflügelkörpers (152) entsprechende Vertikalachse, an einem Förderstrang (305) aufgehängt sind, wobei die beiden Träger (41, 42) zum in Vertikalrichtung versatzfreien Aufhängen und zur in Vertikalrichtung versatzfreien Entnahme des Geflügelkörpers (152) an beiden seitlichen Längsseiten der Trägereinrichtung (402) offen ausgebildet sind.

20. Vorrichtung nach einem der Ansprüche 15 bis 19, **dadurch gekennzeichnet, dass** die Träger-Halteeinrichtungen (403, 405) der beiden Träger (41, 42) unabhängig und getrennt voneinander betätigbar und steuerbar sind.

21. Vorrichtung nach Anspruch 20, **dadurch gekennzeichnet, dass** die Hauptfördereinrichtung (302) wenigstens eine Steuer-Führungseinrichtung (540, 545) aufweist, die mit getrennten Steuergliedern (542, 546) ausgebildet ist, die zum Eingriff in Steuerelemente (444; 454) der beiden Träger-Halteeinrichtungen (403, 405) derart eingerichtet sind, dass diese orts- und zeitversetzt einerseits in die Öffnungszustände und andererseits in die Schließzustände steuerbar sind.

22. Vorrichtung nach einem der Ansprüche 15 bis 21, **dadurch gekennzeichnet, dass** jede Rotations-Übergabeeinrichtung (602, 652) zum paarweisen Greifen der paarigen Gliedmaßen (11, 12) der Geflügelkörper (152) sowie zum Übergabe-Transport der Geflügelkörper (152) Greifeinrichtungen aufweist, die in gleicher Höhe wie die Tragelemente (473, 475; 507, 525) der Träger (41, 42) der Trägereinrichtungen (402) derart eingerichtet sind, dass die Geflügelkörper (152) zum Aufhängen und zur Entnahme frei von Vertikalversatz bewegbar sind.

23. Vorrichtung nach einem der Ansprüche 15 bis 22, **dadurch gekennzeichnet, dass** die beiden Rotations-Übergabeeinrichtungen (602, 652) wenigstens einer Übergabestation (60) Greifeinrichtungen aufweisen, die jeweils in Reihe am Umfang der Rotations-Übergabeeinrichtung (602, 652) verteilt angeordnet und jeweils zum Greifen, zum Halten und zur Entnahme der paarigen Gliedmaßen (11, 12) der Geflügelkörper (152) ausgebildet sind, wobei der Trennabstand der Greifeinrichtungen in Abhängigkeit von der Drehposition und -bewegung der Rotations-Übergabeeinrichtung (602, 652) steuerbar eingerichtet ist, und zwar zwischen wenigstens einem kleinsten Abstand, der einem zugeordneten Trennabstand der Trägereinrichtungen (402) entlang der Hauptförderlinie (20) entspricht, und wenigstens einem größten Abstand, der einem zugeordneten Trennabstand von das Bearbeitungs-Haltemittel (820) bildenden Bearbeitungs-Halteeinrichtungen (822) entlang des Umlaufweges der zugeordneten Bearbeitungseinrichtung (21) entspricht.

24. Vorrichtung nach einem der Ansprüche 15 bis 23, **dadurchgekennzeichnet**, dass wenigstens eine der Bearbeitungseinrichtungen (21, 702) eine Steuereinrichtung aufweist, mit der das Bearbeitungs-Haltemittel (820) verbunden und in Abhängigkeit von seiner Wegposition entlang seines Umlaufweges in der Höhenposition steuerbar ist, wobei wenigstens drei Höhenpositionen eingerichtet sind, nämlich eine Anfangsposition, die der Übergabe der Geflügelkörper (152) von der ersten Rotations-Übergabeeinrichtung (602) zugeordnet ist, wenigstens eine Bearbeitungsposition während des Bearbeitens sowie eine Endposition, die der Entnahme der Geflügelkörper (152) von der Bearbeitungseinrichtung (21, 702) zugeordnet ist, wobei das Bearbeitungs-Haltemittel (820) durch eine Reihe von Bearbeitungs-Halteeinrichtungen (822) gebildet ist, die entlang des Umlaufweges angeordnet sind und jeweils mit einer Greifeinrichtung zum Übernehmen, festen Halten und Abgeben des Gliedmaße-Paares (11, 12) der Geflügelkörper (152) ausgebildet sind.

## Claims

1. Carrier device (402) for the suspended lateral transport of a poultry body (152), in particular configured to form a main conveyor device (302) of a processing system (210) having a plurality of carrier devices (402), comprising
an upper portion (404) with a connecting member (409) for connection with a conveyor line (305) of a conveyor device (302), and a lower portion (412) having a gripper device which has a pair (401) of carriers (41, 42) having limb receivers (40.1, 40.2) for suspension of the poultry body (152) from paired limbs (11, 12), wherein
the carrier device (402) has a carrier-control device (410) which forms part of the carrier device (402) and has at least one control element (444, 454), wherein
each of the two carriers (41, 42) is configured with a controllable holding device (403; 405) which is connected with the carrier-control device (410) *via* the at least one control element (444, 454) and which has at least one holding member (480, 514), as part of the limb receiver (40.1, 40.2), which is controllable by means of a mentioned control element (444, 454), wherein
the limb receiver (40.1, 40.2) is open in an open position of the controllable holding member (480, 514) for the clamping-free insertion and removal of the limbs (11, 12) and can be placed in contact with the limbs (11 and 12) only in a closed position of the holding member (480, 514), and wherein
between the mutually facing carrying edges (472, 490; 506, 524) of the limb receivers (40.1, 40.2), there is formed a passage which is open on the two longitudinal sides of the carrier device (402), wherein
the passage is provided at least in the state with the limb receiver (40.1, 40.2) open, and wherein
each of the two carriers (41, 42) has a pair of carrier-leg members (470, 480 and 504, 514), wherein
free leg ends of the carrier-leg members (470, 480; 504, 514) are the only means for forming the limb receiver (40.1, 40.2) for the suspended holding of the left or right limb (11, 12), and wherein
in each case at least one carrier-leg member (480; 514) of the pair of leg members forming said controllable holding member is movable by means of the at least one control element (444; 454) from a closed position, which holds the associated limb receiver (40.1, 40.2) in the closed state, by an adjusting movement into an open position which is distanced from the other carrier-leg member (470; 504) and opens the limb receiver (40.1, 40.2) and can be placed in the closed position again by controlled elimination of the offset, and wherein
in the carrier device (402) inner carrier-leg members (480, 514) of the two pairs of leg members are movable in a controlled manner for opening and closing the limb receivers (40.1, 40.2), while the two other, outer leg members (470, 504) of the two pairs of leg members are fixedly arranged on the carrier device (402).

2. Carrier device according to claim 1, **characterised in that** the carrier-control device (410) is so configured that said controllable holding members (480, 514) are freely movable beyond a controlled open position for further opening of the limb receiver (40.1, 40.2).

3. Carrier device according to claim 1 or 2, **characterised in that** the carrier-control device (410) has a biasing device, associated with a mentioned control element (444, 454), which produces a return force and is mounted on the carrier device (402), and **in that** the control element (444; 454) is mounted on the biasing device for controlled offset, movable under the return force along a track.

4. Carrier device according to any one of claims 1 to 3, **characterised in that** the carrier-control device (410) is so configured that the movable leg ends are held in the closed position, free from clamping and return force, with a fixed maximum distance from the opposite carrier-leg member (470, 504) in the pair.

5. Carrier device according to any one of claims 1 to 4, **characterised in that** the movable leg members (480, 514) are each pivotably mounted about a pivot axis (440, 441) for movement between the closed position and the open position.

6. Carrier device according to claim 5, **characterised in that** the control element (444; 454) is formed by a rod member (446; 456), which is mounted on a biasing device which produces a return force, and a control body (450, 451; 460, 461) oriented transversely thereto, wherein in the closed state of the limb receiver (40.1, 40.2), the rod member (446; 456) relieved of the return force of the biasing device engages the pivotable leg member (480; 514) to prevent pivoting, and wherein in the open state of the limb receiver (40.1, 40.2), the control body (450; 451; 460, 461) engages, in the state in which it can be loaded under the return force, on the pivotable leg member (480; 514) in order to swing it open about the associated pivot axis (440; 441).

7. Carrier device according to any one of claims 1 to 6, **characterised in that** the limb receiver (40.1, 40.2) of the holding device (403, 405) has at least one carrying element (473, 475; 507, 525), and **in that** said carrying element is formed on at least one free leg end of the leg members (470, 480; 504, 514).

8. Carrier device according to claim 7, **characterised in that** said carrier elements (473, 475; 507, 525) are formed at the two free leg ends of the pairs of leg members, wherein the carrying elements have mutually facing carrying edges (472, 490; 506, 524) and wherein there is formed on at least one mentioned carrying edge (472, 490; 506, 524) an edge recess (474, 492; 526, 508) which forms a holding enclosure.

9. Carrier device according to claim 8, **characterised in that** the mutually facing carrying edges (472, 490; 506, 524) are formed with projections (566, 568; 588, 590) and corresponding recesses in such a manner that, in the state with the limb receiver (40.1, 40.2) closed, a holding enclosure that is closed on all sides is formed.

10. Carrier device according to any one of claims 1 to 9, **characterised in that** the carrier-control device (410) is configured to control the two controllable holding devices (403; 405) independently and separately from one another, wherein each holding device (403; 405) is in control communication with its own associated mentioned control element (444, 454).

11. Carrier device according to claim 10, **characterised in that** the two control elements (444, 454) each have a control projection (450, 460) projecting from the carrier device (402) with an arrangement such that the control projections (450, 460) are configured independently of one another for engagement in an individual control member (542, 546) of at least one control-guide device (540, 545).

12. Carrier device according to claim 11, **characterised in that** the two control projections (450, 460) project from the carrier device (402) on mutually opposing longitudinal sides (416, 426) thereof.

13. Carrier device according to any one of claims 1 to 12, **characterised in that** the carrier device (402) comprises a carrier housing (415) having at least one cavity (434) in which the carrier-control device (410) is arranged.

14. Carrier device according to any one of claims 1 to 13, **characterised in that** there is formed on the connecting member (409), which is configured for connection with a conveyor line (305) of a conveyor device (302), a pivot bearing for pivotal articulation about a horizontal pivot axis, wherein the horizontal pivot axis is so oriented that the carrier device (402) in the suspended state for the lateral transport of a poultry body (152) comes to lie parallel to the straight-line section of the conveyor line (305).

15. Apparatus (210) for processing slaughtered and defeathered poultry bodies (152), comprising
- a main conveyor device (302) having carrier devices (402) according to any one of claims 1 to 14 which are conveyed in succession along a main conveyor line (20) and are each configured for the lateral transport of the poultry body (152)
- and a plurality of processing devices (21),
- wherein for the processing-transport of the poultry bodies (152) separately from the main conveyor device (302), the processing devices (21) are each designed with a processing-holding means (820) which is movable on a circulating path,
- at least two transfer stations (60; 61-66) arranged in succession along the main conveyor line (20), each of which transfer stations (60; 61-66) has at least one associated processing device (21), wherein each transfer station (60; 61-66) is formed by a transfer pair (601) which has two rotary transfer devices (602, 652), namely a first rotary transfer device (602) which, in each case on a tangential path, is arranged and configured for removing the poultry bodies (152) from the carrier devices (402) of the main conveyor line (20) and for transferring the removed poultry bodies (152) to the processing-holding means (820) of an associated mentioned processing device (21), and a second rotary transfer device (652) which, in each case on a tangential path, is arranged and configured for removing the processed poultry bodies (152) from the processing-holding means (820) of an associated mentioned processing device (21) and for transferring them to said carrier devices (402), which are free for the suspension of poultry bodies (152), for lateral further transport along the main conveyor line (20),
- wherein each of the two carriers (41, 42) of a mentioned carrier device (402) is configured with a carrier-holding device (403, 405) which, for the suspension and removal of the left and right paired limbs (11, 12), can be controlled into an open state, a closed state and, associated therewith, into a holding state in dependence on the conveyor position of the carrier device (402) along the main conveyor line (20), and
- wherein each of the two carriers (41, 42) of each carrier device (402) is configured with carrier elements (473, 475; 507, 525) which receive the paired limbs (11, 12) in a suspended manner and which are formed on at least one common longitudinal side of the carrier device (402) which is associated with said transfer station (60), in each case with a passage in which the limbs of the poultry bodies (152) are movable without hindrance, free of vertical offset, for suspension and for removal.

16. Apparatus according to claim 15, **characterised in that** there is arranged along the main conveyor line (20) at least one weighing device (902) which is formed by a transport and weighing means (900; 902, 91-95, 914, 934) which is oriented and movable parallel to the main conveyor line (20) and which is designed for the simultaneous and joint transport, separate from the carrier device (402) of the main conveyor device (302), and weighing of in each case a poultry body (152).

17. Apparatus according to claim 15 or 16, **characterised in that** at least one station (64) of said transfer stations (60) is arranged on a different running and processing side of the main conveyor device (302) than at least one further mentioned transfer station (61-63, 65, 66).

18. Apparatus according to any one of claims 15 to 17, **characterised in that** the two carriers (41, 42) of the carrier pair (401) of the carrier device (402) are formed to be open on at least one lateral longitudinal side of the carrier device (402), such that the poultry bodies (152) can be suspended and removed free of vertical offset.

19. Apparatus according to claim 18, **characterised in that** the carrier devices (402) are suspended, in each case free of rotation about a vertical axis corresponding to the direction of suspension of the poultry body (152), on a conveyor line (305), wherein the two carriers (41, 42) are formed to be open on both lateral longitudinal sides of the carrier device (402) so that the poultry body (152) can be suspended without offset in the vertical direction and removed without offset in the vertical direction.

20. Apparatus according to any one of claims 15 to 19, **characterised in that** the carrier-holding devices (403, 405) of the two carriers (41, 45) can be operated and controlled independently of and separate from one another.

21. Apparatus according to claim 20, **characterised in that** the main conveyor device (302) has at least one control-guide device (540, 545) which is formed with separate control members (542, 546) which are configured, for engagement in control elements (444; 454) of the two carrier-holding devices (403, 405), in such a manner that they can be controlled into the open states and, on the other hand, into the closed states with an offset in terms of location and time.

22. Apparatus according to any one of claims 15 to 21, **characterised in that** each rotary transfer device (602, 652) has gripper devices (618) for gripping, in pairs, the paired limbs (11, 12) of the poultry bodies (152) and for the transfer-transport of the poultry bodies (152), which gripper devices (618) are configured to be on the same level as the carrier elements (473, 475; 507, 525) of the carriers (41, 42) of the carrier devices (402), so that the poultry bodies (152) are movable free of vertical displacement for suspension and for removal.

23. Apparatus according to any one of claims 15 to 22, **characterised in that** the two rotary transfer devices (602, 652) of at least one transfer station (6) have gripper devices (618) which are arranged distributed in a line on the periphery of the rotary transfer device (602, 652) and are designed for gripping, holding and removing the paired limbs (11, 12) of the poultry bodies (152), wherein the distance separating the gripper devices (618) is configured to be controllable in dependence on the rotary position and movement of the rotary transfer device (602, 652), namely between at least a smallest distance, which corresponds to an associated separating distance of the carrier devices (402) along the main conveyor line (20), and at least a greatest distance, which corresponds to an associated separating distance of the processing-holding devices (822) forming the processing-holding means (820) along the circulating path of the associated processing device (21).

24. Apparatus according to any one of claims 15 to 23, **characterised in that** at least one of the processing devices (21, 702) has a control device with which the processing-holding means (820) is connected and can be controlled in terms of its height position in dependence on its path position along its circular path, wherein at least three height positions are provided, namely a starting position, which is associated with the transfer of the poultry bodies (152) from the first rotary transfer device (602), at least one processing position during processing, and an end position which is associated with the removal of the poultry bodies (152) from the processing device (21, 702), wherein the processing-holding means (820) is formed by a row of processing-holding devices (822) which are arranged along the circular path and are each formed with a gripper device (824) for receiving, firmly holding and delivering the paired limbs (11, 12) of the poultry bodies (152).

## Revendications

1. Dispositif de support (402) destiné au transport latéral en suspension d'un corps de volaille (152), en particulier configuré pour former un dispositif de convoyage principal (302) d'un appareil de traitement (210) avec une pluralité de dispositifs de support (402), comprenant
une section supérieure (404) avec une partie de connexion (409) destinée à relier un dispositif de convoyage (302) d'une branche de convoyage (305), ainsi qu'une section inférieure (412) avec un dispositif de préhension qui présente une paire (401) de supports (41, 42) avec des réceptacles à membres (40.1, 40.2) destinés à suspendre le corps de volaille (152) par des membres sous forme de paire (11, 12), dans lequel
le dispositif de support (402) présente un dispositif de commande de support (410) formant partie intégrante du dispositif de support (402) avec au moins un élément de commande (444, 454), dans lequel
chacun des deux supports (41, 42) est configuré avec un dispositif de maintien commandable (403 ; 405) qui est relié au dispositif de commande de support (410) via ledit au moins un élément de commande (444, 454) et qui présente au moins une partie de maintien (480, 514), à titre de partie intégrante du réceptacle à membre (40.1, 40.2), commandable au moyen d'un desdits éléments de commande (444, 454), dans lequel
le réceptacle à membre (40.1, 40.2) est ouvert dans une position d'ouverture de la partie de maintien commandable (480, 514) pour mettre en place et prélever le membre (11, 12) sans serrage, et peut être placé en contact avec les membres (11 ou 12) uniquement dans une position de fermeture de la partie de maintien (480, 514), et dans lequel,
un passage au niveau des deux côtés longitudinaux du dispositif de support (402), ouvert dans chaque cas, est conçu entre des bords de support (472, 490 ; 506, 524), tournés les uns vers les autres, des réceptacles à membres (40.1, 40.2), dans lequel
le passage est configuré au moins dans l'état du réceptacle à membre (40.1, 40.2) ouvert, et dans lequel
chacun des deux supports (41, 42) présente une paire de parties de support à cuisses (470, 480 ou 504, 514), dans lequel
des extrémités libres à cuisses des parties de support à cuisses (470, 480 ; 504, 514) sont le seul moyen de former le réceptacle à membre (40.1, 40.2) pour maintenir en suspension les membres de gauche ou de droite (11, 12) et dans lequel,
dans chaque cas, au moins une partie de support à cuisses (480; 514), formant ladite partie de maintien commandable, de la paire de parties à cuisses peut être déplacée au moyen dudit au moins un élément de commande (444 ; 454) depuis une position de fermeture maintenant le réceptacle à membre associé (40.1, 40.2) dans un état fermé, via un déplacement d'ajustage, jusque dans une position d'ouverture ouvrant le réceptacle à membre (40.1, 40.2), à distance de l'autre partie de support à cuisses (470 ; 504), et placée à nouveau dans la position de fermeture en éliminant le décalage de manière commandable, et dans lequel
des parties de support à cuisses (480, 514), se trouvant à l'intérieur dans le dispositif de support (402), des deux paires de parties à cuisses peuvent être déplacées de manière commandable pour ouvrir et fermer les réceptacles à membres (40.1, 40.2) tandis que les deux autres parties à cuisses (470, 504) extérieures des deux paires de parties à cuisses sont agencées de manière fixe au niveau du dispositif de support (402).

2. Dispositif de support selon la revendication 1, **caractérisé en ce que** le dispositif de commande de support (410) est configuré de telle façon que lesdites parties de maintien commandables (480, 514) peuvent être déplacées librement au-delà d'une position d'ouverture commandée pour continuer à ouvrir le réceptacle à membre (40.1, 40.2).

3. Dispositif de support selon la revendication 1 ou 2, **caractérisé en ce que** le dispositif de commande de support (410) associé à un desdits éléments de commande (444, 454) comprend un dispositif de précontrainte générant une force de rappel, qui est monté au niveau du dispositif de support (402), et **en ce que** l'élément de commande (444 ; 454) destiné au décalage de commande est monté sur le dispositif de précontrainte de manière déplaçable le long d'une voie sous la force de rappel.

4. Dispositif de support selon l'une quelconque des revendications 1 à 3, **caractérisé en ce que** le dispositif de commande de support (410) est configuré de telle façon que les extrémités à cuisses déplaçables sont maintenues dans la position de fermeture, sans force de serrage et de rappel, avec une distance maximum fixe par rapport à chaque partie de support à cuisses (470, 504) opposée dans la paire.

5. Dispositif de support selon l'une quelconque des revendications 1 à 4, **caractérisé en ce que** les parties à cuisses déplaçables (480, 514) sont montées respectivement de manière pivotante autour d'un axe de pivotement (440, 441) pour se déplacer entre la position de fermeture et la position d'ouverture.

6. Dispositif de support selon la revendication 5, **caractérisé en ce que** l'élément de commande (444; 454) est formé d'une partie de tige (446 ; 456) qui est montée au niveau d'un dispositif de précontrainte générant une force de rappel, et d'un corps de commande (450, 451 ; 460, 461) orienté transversalement par rapport à celle-ci, dans lequel, dans l'état de fermeture du réceptacle à membre (40.1, 40.2), la partie de tige (446 ; 456) déchargée de la force de rappel du dispositif de précontrainte vient en contact avec la partie à cuisses déplaçable par pivotement (480 ; 514) pour bloquer le pivotement, et dans lequel, dans l'état d'ouverture du réceptacle à membre (40.1, 40.2), le corps de commande (450 ; 451 ; 460, 461), dans l'état de sollicitation sous la force de rappel, vient en contact avec la partie à cuisses déplaçable par pivotement (480 ; 514) pour faire pivoter celle-ci vers le haut autour de l'axe de pivotement associé (440; 441).

7. Dispositif de support selon l'une quelconque des revendications 1 à 6, **caractérisé en ce que** le réceptacle à membre (40.1, 40.2) du dispositif de maintien (403, 405) présente au moins un élément de support (473, 475 ; 507, 525), et **en ce que** ledit élément de support est conçu au niveau d'au moins une extrémité à cuisses libre des parties à cuisses (470, 480 ; 504, 514).

8. Dispositif de support selon la revendication 7, **caractérisé en ce que** lesdits éléments de support (473, 475 ; 507, 525) sont conçus au niveau des deux extrémités à cuisses libres de la paire de parties à cuisses, dans lequel les éléments de support présentent des bords de support (472, 490 ; 506, 524) tournés les uns vers les autres, et dans lequel est conçu, au niveau d'au moins un desdits bords de support (472, 490 ; 506, 524), un évidement de bord (474, 492 ; 526, 508) qui forme un encadrement de maintien.

9. Dispositif de support selon la revendication 8, **caractérisé en ce que** les bords de support (472, 490 ; 506, 524) tournés les uns vers les autres sont conçus avec des projections (566, 568 ; 588, 590) et des évidements correspondants, de telle façon que, dans l'état du réceptacle à membre (40.1, 40.2) fermé, un encadrement de maintien fermé de tous les côtés est conçu.

10. Dispositif de support selon l'une quelconque des revendications 1 à 9, **caractérisé en ce que** le dispositif de commande de support (410) est configuré pour commander les deux dispositifs de maintien commandables (403; 405) de manière séparée et indépendante l'un de l'autre, dans lequel chaque dispositif de maintien (403 ; 405) se trouve en liaison de commande avec l'un desdits éléments de commande propre associé (444, 454).

11. Dispositif de support selon la revendication 10, **caractérisé en ce que** les deux éléments de commande (444, 454) présentent chacun une projection de commande (450, 460) en saillie au niveau du dispositif de support (402) avec un agencement de telle façon que les projections de commande (450, 460) sont configurées indépendamment les unes des autres pour s'engager dans chaque cas dans un organe de commande individuel (542, 546) d'au moins un dispositif de guidage de commande (540, 545).

12. Dispositif de support selon la revendication 11, **caractérisé en ce que** les deux projections de commande (450, 460) au niveau de côtés longitudinaux (416, 426) mutuellement opposés du dispositif de support (402) font saillie au niveau de celui-ci.

13. Dispositif de support selon l'une quelconque des revendications 1 à 12, **caractérisé en ce que** le dispositif de support (402) comprend un boîtier de support (415) avec au moins une cavité (434) dans laquelle le dispositif de commande de support (410) est agencé.

14. Dispositif de support selon l'une quelconque des revendications 1 à 13, **caractérisé en ce que**, au niveau de la pièce de connexion (409) qui est configurée pour relier un dispositif de convoyage (302) d'une branche de convoyage (305), un palier de pivotement est conçu pour s'articuler par pivotement autour d'un axe de pivotement horizontal, dans lequel l'axe de pivotement horizontal est dirigé de telle sorte que le dispositif de support (402), dans l'état en suspension, destiné au transport latéral d'un corps de volaille (152), vient se placer parallèlement au parcours rectiligne de la branche de convoyage (305).

15. Appareil (210) destiné au traitement de corps de volaille (152) abattus et plumés, comprenant
- un dispositif de convoyage principal (302) avec des dispositifs de support (402), convoyés en rangée le long d'une ligne de convoyage principale (20), configurés chacun pour le transport latéral du corps de volaille (152), selon l'une quelconque des revendications 1 à 14,
- ainsi qu'une pluralité de dispositifs de traitement (21),
- dans lequel les dispositifs de traitement (21) sont conçus pour le transport de traitement du corps de volaille (152), séparé du dispositif de convoyage principal (302), chacun avec un moyen de maintien de traitement (820) déplaçable sur un trajet circulaire,
- au moins deux stations de transfert (60 ; 61 - 66) agencées en rangée le long de la ligne de convoyage principale (20), auxquelles au moins un dispositif de traitement (21) est respectivement associé, dans lequel chaque station de transfert (60 ; 61 - 66) est formée d'une paire de transfert (601) qui présente deux dispositifs de transfert en rotation (602, 652), notamment un premier dispositif de transfert en rotation (602) qui, dans chaque cas sur un trajet tangentiel, est agencé et configuré pour prélever les corps de volaille (152) des dispositifs de support (402) de la ligne de convoyage principale (20) ainsi que pour transférer les corps de volaille prélevés (152) au moyen de maintien de traitement (820) d'un desdits dispositifs de traitement associé (21), ainsi qu'un second dispositif de transfert en rotation (652) qui, dans chaque cas sur un trajet tangentiel, est agencé et configuré pour prélever les corps de volaille traités (152) du moyen de maintien de traitement (820) d'un desdits dispositifs de traitement associé (21) ainsi que pour les transférer auxdits dispositifs de support (402) libre destinés à la suspension pour poursuivre le transport latéral le long de la ligne de convoyage principale (20),
- dans lequel chacun des deux supports (41, 42) d'un desdits dispositifs de support (402) est configuré avec un dispositif de maintien de support (403, 405) qui est commandable pour suspendre et pour prélever les membres sous forme de paire de gauche et de droite (11, 12) dans un état d'ouverture, un état de fermeture et, ainsi reliés, dans un état de maintien en fonction de la position de convoyage du dispositif de support (402) le long de la ligne de convoyage principale (20), et
- dans lequel chacun des deux supports (41, 42) de chaque dispositif de support (402) est configuré avec des éléments de support (473, 475 ; 507, 525) recevant en suspension les membres sous forme de paire (11, 12), qui sont conçus au niveau d'au moins un côté longitudinal commun du dispositif de support (402) qui est associé auxdites stations de transfert (60), dans chaque cas avec un passage dans lequel les membres des corps de volaille (152) peuvent être déplacés sans obstacle pour être suspendus et prélevés sans décalage vertical.

16. Appareil selon la revendication 15, **caractérisé en ce que**, le long de la ligne de convoyage principale (20), au moins un dispositif de pesage (902) est agencé qui est formé d'un moyen de transport et de pesage (900 ; 902, 91-95, 914, 934) orienté et déplaçable parallèlement à la ligne de convoyage principale (20), qui est conçu pour le transport simultané et conjoint, séparément du dispositif de support (402) du dispositif de convoyage principal (302), et le pesage dans chaque cas d'un corps de volaille (152).

17. Appareil selon la revendication 15 ou 16, **caractérisé en ce qu'**au moins une station (64) desdites stations de transfert (60) est agencée au niveau d'un autre côté de circulation et de traitement du dispositif de convoyage principal (302) à titre d'au moins une autre desdites stations de transfert (61 - 63, 65, 66).

18. Appareil selon l'une quelconque des revendications 15 à 17, **caractérisé en ce que** les deux supports (41, 42) de la paire de supports (401) du dispositif de support (402) sont configurés ouverts au niveau d'au moins un côté longitudinal latéral du dispositif de support (402), de telle façon que les corps de volaille (152) peuvent être suspendus et prélevés sans décalage vertical.

19. Appareil selon la revendication 18, **caractérisé en ce que** les dispositifs de support (402), dans chaque cas sans rotation autour d'un axe vertical correspondant au dispositif de suspension du corps de volaille (152), sont suspendus au niveau d'une branche de convoyage (305), dans lequel les deux supports (41, 42) sont conçus ouverts au niveau des deux côtés longitudinaux latéraux du dispositif de support (402) pour suspendre dans la direction verticale sans décalage et pour prélever dans la direction verticale sans décalage le corps de volaille (152).

20. Appareil selon l'une quelconque des revendications 15 à 19, **caractérisé en ce que** les dispositifs de maintien de support (403, 405) des deux supports (41, 42) sont commandables et actionnables indépendamment et séparément les uns des autres.

21. Dispositif selon la revendication 20, **caractérisé en ce que** le dispositif de convoyage principal (302) présente au moins un dispositif de guidage de commande (540, 545) qui est conçu avec des organes de commande séparés (542, 546) qui sont configurés pour s'engager dans des éléments de commande (444 ; 454) des deux dispositifs de maintien de support (403, 405), de telle façon que ceux-ci sont commandables, avec décalage spatial et temporel, d'une part dans les états d'ouverture et d'autre part dans les états de fermeture.

22. Appareil selon l'une quelconque des revendications 15 à 21, **caractérisé en ce que** chaque dispositif de transfert en rotation (602, 652) présente des dispositifs de préhension destinés à la préhension par paire des membres sous forme de paire (11, 12) des corps de volaille (152) ainsi qu'au transport de transfert des corps de volaille (152), qui sont configurés à une même hauteur que les éléments de support (473, 475 ; 507, 525) des supports (41, 42) des dispositifs de support (402), de telle façon que les corps de volaille (152) peuvent être déplacés pour être suspendus et prélevés sans décalage vertical.

23. Appareil selon l'une quelconque des revendications 15 à 22, **caractérisé en ce que** les deux dispositifs de transfert en rotation (602, 652) d'au moins une station de transfert (60) présentent des dispositifs de préhension qui, dans chaque cas, sont agencés répartis en rangée sur la périphérie du dispositif de transfert en rotation (602, 652) et, dans chaque cas, sont conçus pour saisir, pour maintenir et pour prélever les membres sous forme de paire (11, 12) des corps de volaille (152), dans lequel la distance de séparation des dispositifs de préhension est configurée de manière commandable en fonction de la position en rotation et du déplacement en rotation du dispositif de transfert en rotation (602, 652), et ce, entre au moins une distance la plus petite, qui correspond à une distance de séparation associée des dispositifs de transport (402) le long de la ligne de convoyage principale (20), et au moins une distance la plus grande, qui correspond à une distance de séparation associée des dispositifs de maintien de traitement (822) formant le moyen de maintien de traitement (820) le long du trajet circulaire du dispositif de traitement associé (21).

24. Appareil selon l'une quelconque des revendications 15 à 23, **caractérisé en ce qu'**au moins un des dispositifs de traitement (21, 702) présente un dispositif de commande avec lequel le moyen de maintien de traitement (820) est relié et est commandable dans la position en hauteur en fonction de sa position de trajet le long de son trajet circulaire, dans lequel au moins trois positions en hauteur sont configurées, notamment une position initiale qui est associée au transfert des corps de volaille (152) depuis le premier dispositif de transfert en rotation (602), au moins une position de traitement pendant le traitement ainsi qu'une position finale qui est associée au prélèvement des corps de volaille (152) du dispositif de traitement (21, 702), dans lequel le moyen de maintien de traitement (820) est formé d'une rangée de dispositifs de maintien de traitement (822) qui sont agencés le long du trajet circulaire et sont conçus dans chaque cas pour reprendre, maintenir fermement et évacuer la paire de membres (11, 12) des corps de volaille (152).
